# EUROPÄISCHE PATENTSCHRIFT

(11) **EP 3 725 753 B1**
(45) Veröffentlichungstag und Bekanntmachung des Hinweises auf die Patenterteilung: **29.09.2021**
(21) Anmeldenummer: 19169214.4
(22) Anmeldetag: 15.04.2019
(51) Int. Cl.: C04B 28/02, C04B 28/10, C04B 28/14, C04B 40/00

(54) **HYDROPHOBIERUNGSMITTEL FÜR MINERALISCHE MATERIALIEN**
WATER REPELLENT AGENT FOR MINERAL MATERIALS
AGENT HYDROPHOBE POUR MATÉRIAUX MINÉRAUX

(43) Veröffentlichungstag der Anmeldung: 21.10.2020
(73) Patentinhaber: PAGEL Spezial-Beton GmbH & Co. KG, 45355 Essen (DE)
(72) Erfinder: Ballschuh, Detlef, 12524 Berlin (DE); Seibt, Horst, 13089 Berlin (DE); Gerdes, Andreas, 76189 Karlsruhe (DE); Süßmuth, Julia, 76275 Ettlingen (DE); Schäffel, Patrick, 40699 Erkrath (DE)
(74) Vertreter: Altmann Stößel Dick Patentanwälte PartG mbB

(56) Entgegenhaltungen:
- KR-A- 20130 119 586

## Beschreibung

Die Erfindung betrifft ein Hydrophobierungsmittel für mineralische Materialien, umfassend: einen Polyionen-Komplex (i) umfassend mindestens ein Polykation (i.1) und mindestens ein Polyanion (i.2), wobei das molare Verhältnis von Polykation : Polyanion im Polyionen-Komplex ≥ 1 ist; eine Siliconverbindungszusammensetzung (ii), und eine Trägermittelzusammensetzung (iii), welche mindestens ein Trägermittel umfasst.

Weiterhin betrifft die Erfindung ein Verfahren zur Herstellung eines Hydrophobierungsmittels, umfassend einen Polyionen-Komplex (i) umfassend mindestens ein Polykation (i.1) und mindestens ein Polyanion (i.2), wobei das molare Verhältnis von Polykation : Polyanion im Polyionen-Komplex ≥ 1 ist; eine Siliconverbindungszusammensetzung (ii); und eine Trägermittelzusammensetzung (iii). Die Erfindung betrifft des Weiteren die Verwendung des Hydrophobierungsmittels zur Hydrophobierung mineralischer Bindemittel und/oder von Zusammensetzungen, welche mineralische Bindemittel enthalten und/oder von Materialien, welche mineralische Bindemittel umfassen, sowie eine Bindemittelzusammensetzung, umfassend ein oder mehrere mineralische(s) Bindemittel und ein entsprechendes Hydrophobierungsmittel. Weiterhin betrifft die Erfindung ein Verfahren zur Hydrophobierung von Materialien, welche mineralische Bindemittel umfassen.

Materialien, welche mineralische Bindemittel umfassen, wie beispielsweise Betone, nehmen bei Wasserkontakt abhängig von ihrer Porosität mehr oder weniger viel Wasser auf. Stoffe, die mit dem Wasser in den Beton eindringen können, sind eine der Hauptursachen für Bauwerksschäden wie Risse, Frostschäden, Salzausblühungen, Chlorid induzierte Bewehrungskorrossion oder Betonkorrosion im Allgemeinen. Bei der sogenannten Alkali-Kieselsäure-Reaktion (AKR) reagieren alkaliempfindliche SiO₂-Bestandteile der Gesteinskörnung mit den Alkali- und Hydroxid-Ionen (K⁺, Na⁺ und OH⁻) der Porenlösung im Beton zu einem Alkali-Kieselgel, das bestrebt ist, Wasser aufzunehmen. Unter ungünstigen Umständen, beispielsweise. ständigem oder wechselndem Wasserkontakt, vergrößert sich dabei das Volumen des Alkali-Kieselgels mit der Zeit so stark, dass lokal Quelldrücke auftreten, die das Betongefüge schädigen und äußerlich zu Netzrissbildung und Abplatzungen führen können. Um derartige Schäden zumindest zu reduzieren, sind diverse Produkte auf Basis von Silanen/Siloxanen bekannt, welche durch eine hydrophobierende Imprägnierung wirken (ACI Materials Journal, 115, 5, 685-694 (2018)). Dabei werden mineralische Untergründe, welche Poren bzw. Kapillaren aufweisen, so verändert, dass ein kapillares Einsaugen von Wasser unterbunden bzw. zumindest reduziert wird, um so einen Schutz gegen Feuchtigkeit zu bieten (Porengrößenbereich zwischen 0.1 µm und 1 mm Durchmesser). Die Wirksamkeit der bisher bekannten Silan-basierten Systeme ist allerdings verbesserungswürdig, dementsprechend besteht weiterhin ein Bedarf nach weiteren Hydrophobierungsmitteln.

Die Bildung von Polyionen-Komplexen als flockenartige sowie wasserunlösliche Gebilde ist seit langem bekannt. So scheidet sich aus wässriger Lösung das Polyammoniumsalz der Polyacrylsäure durch Vereinigung äquivalenter Mengen von polyacrylsaurem Natrium und einer hochmolekularen Polybase, ein Polyammoniumbromid aus Dimethylamino-trimethylen-bromid, als flockige Fällung aus. Das entstandene Salz ist aber weder in verdünnter Salzsäure oder noch in Natronlauge löslich (Ber. dtsch. chem. Ges. 70, 887 (1937)).

Solche Komplexe sind auch zugänglich, wenn man im Verlaufe einer Flockungsreaktion die wässrigen Lösungen von Polyanionen, wie Polygalakturonsäure (Pektin) und Polykationen, wie Polyethylenimin, jeweils mit einer linearen Molekularstruktur, miteinander zur Umsetzung bringt (Helv. Chim. Acta 36, 1671 - 1680 (1953)).

Aus der "Encyclopedia of Polymer Science and Technology", Band 10, S. 765 - 780, (1969) - Verlag John Wiley & Sons Inc. ist darüber hinaus bekannt, dass bei der Vereinigung wässriger Lösungen von hochmolekularen Elektrolyten mit entgegengesetzten Ladungsträgern, beispielsweise Polyvinyltrimethylbenzylammoniumchlorid und Polystyrolsulfonat Natrium, in schneller Umsetzung Polyionen-Komplexe gebildet werden. Die unter solchen Reaktionsbedingungen entstehenden Verbindungen sind wasserunlösliche Gele, die im wässrigen Medium eine gewisse Plastizität zeigen. Im trockenen Zustand sind sie jedoch spröde und brüchig.

Faserartige, wasserunlösliche Polyionen-Komplexe werden nach DE 23 33 207 C3 (1972) durch < 10 %iger wässriger Lösung eines Polykations, z. B. Poly-N,N,N',N'-tetramethyl-ethylen-p-xylylen-diammoniumdichlorid, mit einer Polycarbonsäure, z. B. Polymethacrylsäure, gebildet. Nach zweitägigem Stehen der Polyionenkomplexlösung bildet sich zunächst ein pulveriger Niederschlag, der nach weiteren drei Tagen koaguliert und ein wasserunlösliches, faserartiges Netzwerk ausbildet.

Die DE 699 20 391 T2 (2006) offenbart die Synthese eines Ionenkomplexes, der als biomedizinisches Beschichtungsmaterial Verwendung findet. Durch radikalische Copolymerisation der Monomeren Diacetonacrylamid, Polyethylenglykolmono-methacrylat, 3-Trimethylammoniopropylacrylamidchlorid und Heparinnatrium ist der Ionenkomplex in wässrigethanolischer Lösung gelöst zugänglich. Der Ionenkomplex war jedoch in Wasser und Ethanol unlöslich.

Zur Massenhydrophobierung mineralischer Rohstoffe für die Baustoffindustrie werden allgemein am häufigsten siliciumorganische Verbindungen eingesetzt. Daneben werden weiterhin Fettsäuren bzw. deren Metallsalze, sowie epoxidhaltige, aber auch polyurethanhaltige Polymere oder deren oligomere Verbindungen eingesetzt.

Das große Gebiet der siliciumorganischen Verbindungen als Hydrophobierungsmittel für mineralische Zumischungen in der Bauindustrie benutzt zur Herstellung solcher Derivate die Gruppe der Alkylsilane und der Dialkylsilane, der modifizierter Alkylsilane, die hauptsächlich amino- oder carbonsäuregruppenhaltige Alkylsilane enthalten, der kondensierten Alkylsilane, der oligomerisierten Silane, den sog. Siloxanen, aber auch Siliconverbindungen. Der Fokus liegt allerdings bei den Alkyl- bzw. modifizierten Alkylsilanen und bei deren Gemischen.

Das Hauptproblem dieser Verbindungen und Gemische liegt in der Zugabe dieser in die unterschiedlichen mineralischen Mischungen, die anorganische Bindemittel enthalten. Die Bindemittel besitzen hydrophile Affinitäten und die Hydrophobierungsmittel haben die gegenteilige Wirkung (hydrophobe Eigenschaften). Massenhydrophobierende pulverförmige Additive müssen entweder den mineralischen Baustoffmischungen im trockenen Zustand zugemischt werden; der Mischungsaufwand erfordert energetische Zusatzleistung, da die Mischleistung durch die unterschiedlichen Partikelgrößen und Partikelverhältnisse in den mineralischen Baustoffmischungen erhöht werden muss; in wässrige Systeme können sie nicht eingearbeitet werden, da sie nicht gleichmäßig verteilt werden. Dies gilt auch für die Herstellung von Mörtel und Beton. Beim Anmischen mit Wasser liegen Mörtel und Beton zunächst als wasserhaltige Suspension vor, in der eine gleichmäßige Verteilung der Hydrophobierungsmittel aufgrund der vorgenannten Eigenschaften nicht sichergestellt werden kann.

Will man diese pulverförmigen Additive in wässrige Bindemittelmischungen einarbeiten, so kann man die hydrophobierten Pulverpartikel mit einen wasserlöslichen Polymer verkapseln, so dass diese in wässrige Systeme einarbeitbar sind.

In der Regel werden vermehrt Emulsionen oder flüssige Mischungen als Massenhydrophobierungsmittel den wässrigen mineralischen Baustoffmischungen zugegeben, deren Eigenschaftsbild sich bei Zugabe stark verändert, da sie in diesem wässrigen System verdünnt werden und meist durch die Verdünnungen in den Mischungen instabil werden, so dass es oft zu keiner guten homogenen Verteilung in der Endmischung kommt; die "Homogenisierung" des Massenhydrophobierungsmittels ist bei allen bekannt gewordenen Patenten die Schwachstelle.

Unter diesen Hauptgesichtspunkten sind die Massenhydrophobierungsmittel in den wichtigsten Patenschriften, die mehr oder weniger versucht haben, die oben dargelegten Probleme erfolgreich zu lösen, aber damit keine nachhaltige Wirkung erreicht haben, aufgeführt.

Die DOW Corning Ltd. beschreibt in der EP 0796 826 A1 (1996) ein Massenhydrophobierungsmittel, das vorrangig zur Hydrophobierung von Gips eingesetzt wird, und sich aus Alkylsilanen der allgemeinen Formel (RO)₃Si R; (RO)₂ Si RR' oder aminofunktionalisierten Silanen der allgemeinen Formel (RO)₃Si R'; (RO)₂ Si RR' zusammensetzen mit deren Kondensaten oder Oligomerisaten gemischt werden. Diese Gemische werden wasserlöslich gemacht und können den mineralischen Baustoffmischungen zugegeben werden. Über das Verhalten dieser Massenhydrophobierungsmittel in den mineralischen Baustoffmischungen wird nichts berichtet.

Die DEGUSSA-Hüls AG berichtet in der DE 197 47 794 A1 (1997) über ein Massenhydrophobierungsmittel, das zur Herstellung eines homogenen hydrophobierten Betons, benutzt wird. Hierzu verwendet man eine hydrolysierbare Organosiliciumverbindung in einer Emulsion. Die Emulsion wird mit Hilfe eines anionischen oder nichtionischen Tensids hergestellt, welche ebenfalls siliciumorganische Verbindungen sind. Die Einsatzkonzentration der Emulsion beträgt 0,1 bis 10 Gewichts-% bezogen auf die Betonmischung.

Baeuml und Martinola stellen in ihrer Patentschrift EP 1 289 905 B1 (2001) einen zementgebundenen Werkstoff vor, der mit einem Massenhydrophobierungsmittel bestehend aus Stearaten, Silikonaten, Silanen bzw. Siloxanen ausgerüstet wurde. Das vorgestellte Massenhydrophobierungsmittel wurde in einer Konzentration von 0,5 bis 20 Gewichts-% bezogen auf das eingesetzte mineralische Bindemittel eingesetzt. Es wird betont, dass in die Mischung des zementgebundenen Werkstoffs zusätzlich noch ein "Hochleistungsverflüssiger" hinzugesetzt wird.

Die Wacker-Chemie GmbH berichtet in der DE 102 20 659 A1 (2002) über die Behandlung von Gips mit H-Siloxanen und Stärkeethern. Sie umfasst als Massenhydrophobierungsmittel Sigebundene Wasserstoffatome enthaltendes Organosiloxan (H-Siloxane) und Stärkeether. Der Stärkeether verstärkt die wasserabweisende Wirkung der H-Siloxane auf dem Gips.

Die Construction Research & Technology GmbH beschreibt in der DE 10 2006 046 368 A1 (2006) ein funktionalisiertes Polyurethanharz (fluormodifiziertes Polyurethan) zur Beschichtung von mineralischen und nichtmineralischen Oberflächen (nur in ganz speziellen Anwendung szwecken).

Die Dow Corning Corp. beschreibt in der WO 2007/009935 A2 - die Massenhydrophobierung von Füllstoffen für die Bauindustrie, wie Gips, Mineralien, Silicagel, etc. mit hydrolysierten Polysiloxanen aus hydrolysierbaren Silanen und Mischungen derselben in Gegenwart saurer Katalysatoren. Diese Hydrolysate können in entsprechende Emulsionen überführt werden, um damit hydrophobe Ausrüstungen zu erzeugen.

Die Evonik Degussa GmbH stellt in der DE 10 2008 041 920 A1 neue Katalysatoren für die Vernetzung von funktionellen Silanen oder funktionellen Siloxanen vor. Als Katalysatoren werden organische Säuren mit 4 bis 46 C-Atome: Carbonsäuren, Carboxysilane, Ester und Anhydride; die vernetzten funktionellen Silane und Siloxane werden zur Tiefenimprägnierung von Beton, für poröse Baumaterialien eingesetzt. Ein besonderer Fall sind die organofunktionellen Tricarboxysilane, hergestellt aus einem Mol Silan und 3 Molen organischer Carbonsäuren, bevorzugt sind Aminocarboxysilane.

Die Evonik Goldschmidt GmbH beschreibt in der DE 10 2009 022 628 A1 hydroxygruppenhaltige Silylpolyether als Massenhydrophobierungsmittel zur Modifizierung von Partikeloberflächen. Hergestellt werden diese einmal durch Alkoxylierung von Siliconpolyethercopolymeren bzw. Polysiloxanen mit epoxyfunktionellen Alkoxysilanen an Doppelmetallcyanid-Katalysatoren. Zum anderen werden diese durch hydrosilylierende Verknüpfung von ungesättigten Alkoxysilylgruppen tragenden Polyethern, die zuvor durch eine Alkoxylierung der entsprechenden ungesättigten Startverbindungen mit epoxyfunktionellen Alkoxysilanen an DMC-Katalysatoren gewonnen wurden, hergestellt.

In der DE 10 2009 028 640 A1 wird von der Evonik Goldschmidt GmbH über eine härtbare Masse berichtet, die Urethangruppen enthaltende silylierte Polymere darstellen und zur hydrophoben Ausrüstung für Dichtungs- und Klebstoffe eingesetzt werden. Sie werden auch zur hydrophoben Modifizierung von Bindemitteln und zur hydrophoben Ausrüstung von Füllstoffpartikeln verwendet. Diese eingesetzten silylierten Polymere enthalten mehrere Isocyanatgruppen neben Alkoxysilylgruppen.

Die Evonik Degussa GmbH berichtet in der DE 10 2010 003 868 A1 über ein Massenhydrophobierungsmittel vorwiegend für mineralische Baustoffe, im Wesentlichen nichtsilikatische Baustoffe, wie Kreide, Kalkstein, Marmor, Dolomit, Magnesit u.ä. Hier werden in der Regel poröse Materialien hydrophob ausgerüstet. Das Massenhydrophobierungsmittel, das hier eingesetzt wird, besteht aus unterschiedlichen Alkylsilanen, Estersilanen und Alkanolaminen bzw. Diaminen unterschiedlicher Struktur, die so behandelt werden, dass deren Hydrolyse- und Kondensationsprodukte in Mischung entstehen. Diese Gemische sind in wässrigen Systemen emulgierbar. Dafür werden Alkylsilane (Alkyltrimethoxy- und Alkyltriethoxysilane) benutzt.

In der DE 10 2010 003 870 A1 wird von der Evonik Degussa GmbH ein Massenhydrophobierungsmittel für im Wesentlichen nichtsilicatische Baustoffe, z.B. Gips, beschrieben. Für die Massenhydrophobierung werden wässrige Alkyl- und Amino - modifizierte Silicium enthaltende Co-Kondensate eingesetzt. Co-Kondensate werden beispielsweise aus iso-Butyltrimethoxysilan und Aminopropyltrialkoxysilan hergestellt.

Die Evonik Goldschmidt GmbH beschreibt in der DE 10 2010 038 768 A1 modifizierte Alkoxylierungsprodukte mit mindestens einer nichtterminalen Alkoxysilylgruppe mit erhöhter Lagerstabilität und erhöhter Drehbarkeit der hergestellten Polymere. Es handelt sich hierbei um epoxyfunktionelle Alkoxysilane bzw. glycidylfunktionelle Alkoxysilane. Diese Verbindungen werden als Massenhydrophobierungsmittel in Form von wässrigen Emulsionen und Dispersionen für mineralische Baustoffe eingesetzt.

Ebenfalls von der Evonik Goldschmidt GmbH werden in der DE 10 2010 038 774 A1 bzw. der EP 2415 797 A1 (2011) modifizierte Alkoxylierungsprodukte, die zumindest eine nichtterminale Alkoxysilylgruppe aufweisen, mit erhöhter Lagerstabilität und erhöhter Drehbarkeit der für die Verwendung hergestellten Polymere vorgestellt. Die dazu verwendeten Alkoxysilanverbindungen sind beispielsweise 3-Glycidyl-propyl-trimethoxy- bzw. triethoxysilane, aus denen dann in einem modifizierten Sol-Gel-Verfahren Nanocomposite hergestellt und in Verbundwerkstoffen als Massenhydrophobierungsmittel eingesetzt werden. Die Alkoxylierungsprodukte weisen Trialkylsilyl-Endblöcke, einen Urethan-Endblock oder ein Esterendblock auf.

In der WO 2011/121 027 A1 berichten die Evonik Degussa GmbH und die Akzo Nobel Chemicals International B.V. über ein Massenhydrophobierungsmittel für mineralische Bindemittel. Fluororganylsubstituierte Si-Verbindungen werden auf mineralische Pulveroberflächen aufgebracht. Dieses ausgerüstete Pulver wird mittels eines wasserlöslichen Polymers gekapselt, wobei die aufgebrachte Menge der Si-Verbindungen auf dem Pulver 0,001 bis 8 Gewichts-% beträgt. Die fluororganylsubstituierten Si-Verbindungen können als fluororganylsubstituierte Silane, Siloxan bzw. Silicone beschrieben werden. Diese Si-Verbindungen werden allein oder als Gemische eingesetzt. Zur Kapselung werden Biopolymere eingesetzt, wie Proteine, Polysaccharide, Dextrine, Gelatine oder Soja-Proteine u.ä.

Von der Akzo Nobel Chemical International B.V. werden in der WO 2013/ 044980 A1 fluoroalkylsubstituierte Silane bzw. Siliconverbindungen zur hydrophoben Ausrüstung von mineralischen Pulvern benutzt, die dann zur Massenhydrophobierung von mineralischen Baustoffgemischen eingesetzt werden. Die substituierten Silane enthalten monofluorierte-, oligofluorierte oder -perfluorierte Gruppen.

Die KR 10-2013-0119586 A beschreibt eine kosmetische Zusammensetzung umfassend einen polyionischen Komplex, in dem ein anionisches hydrophiles Polymermaterial und ein hydrophobes kationisches Monomer ionisch gebunden sind; eine darin enthaltene fettlösliche Substanz; ein Kreuzpolymer auf Silikonbasis; Silikonöl; und kugelförmige Mikrokügelchen. Polyionen-Komplexe sind im Rahmen dieser Offenbarung nicht möglich.

Zusammenfassend kann festgestellt werden, dass die nach dem Stand der Technik bekannten Polyionen-Komplexe wegen ihrer Unlöslichkeit in Wasser oder organischen Lösungsmitteln als hydrophobierende Beschichtungshilfsmittel ungeeignet sind. Selbst wenn wässrig-organische Lösungsmittelsysteme die Auflösung solcher Komplexe bewirken sollten, erkauft man sich diese Problemlösung mit der anschließenden und notwendigen Beseitigung des organischen Lösungsmittelanteils. Unter technischen Bedingungen eine kostenintensive Maßnahme, die außerdem auch noch ein arbeiten unter Explosionsschutzbedingungen erforderlich macht - ein weiterer Kostenfaktor.

Die der vorliegenden Erfindung zugrunde liegende Aufgabe bestand daher darin, weitere Hydrophobierungsmittel bereitzustellen, welche effektiv und kostengünstig sind und die oben genannten Nachteile nicht aufweisen.

Die Aufgabe wurde gelöst mit einem Hydrophobierungsmittel für mineralische Materialien, umfassend:
i) einen Polyionen-Komplex umfassend mindestens ein Polykation (i.1) und mindestens ein Polyanion (i.2), wobei das molare Verhältnis von Polykation : Polyanion im Polyionen-Komplex ≥ 1 ist;
ii) eine Siliconverbindungszusammensetzung;
iii) eine Trägermittelzusammensetzung, welche mindestens ein Trägermittel umfasst, welches ausgewählt ist aus der Gruppe bestehend aus amorphem Siliciumdioxid, amorphem agglomeriertem Siliciumdioxid, Quarzmehl, Kalksteinmehl, Aluminiumoxid, Illit, Eisenoxid und Mischungen von zwei oder mehr dieser Trägermittel.

Die Güte einer Hydrophobierung mineralischer Materialien kann unter anderem anhand der kapillaren Wasseraufnahme gemessen werden. Mineralische Materialien weisen Kapillaren auf, welche wie ein Schwamm wirkt und die Feuchtigkeit transportieren. Die kapillare Wasseraufnahme bzw. die kapillare Saugfähigkeit ist der Haupttransportmechanismus von Feuchtigkeit. Hydrophobierungsmittel sollen mineralische Untergründe so verändern, dass ein kapillares Einsaugen von Wasser unterbunden bzw. zumindest reduziert wird, um so einen Schutz gegen Feuchtigkeit zu bieten. Bei Anwendung der erfindungsgemäßen Hydrophobierungsmittel konnte überraschend gezeigt werden, dass die kapillare Wasseraufnahme im Vergleich zu einer entsprechenden Referenz, für welche kein Hydrophobierungsmittel angewandt wurde, deutlich geringer war.

Ein weiterer Indikator für Hydrophobierung ist der sogenannte Kontaktwinkel. Als Kontaktwinkel (synonym Rand- oder Benetzungswinkel) wird der Winkel bezeichnet, den ein Flüssigkeitstropfen, beispielsweise ein Wassertropfen, auf der Oberfläche eines Feststoffs zu dieser Oberfläche bildet. Damit von einer hydrophoben bzw. hydrophobierten Oberfläche bzw. einer hydrophobierenden Wirkung eines Mittels gesprochen werden kann, musste der Kontaktwinkel bzw. der entsprechende Mittelwert mindestens 90° betragen. Bei Untersuchung erfindungsgemäß hydrophobiertem Proben konnte überraschend gezeigt werden, dass alle Proben an der Oberfläche einen Kontaktwinkel(-Mittelwert) deutlich über 90°, bevorzugt ≥ 95°, weiter bevorzugt ≥ 100°, zeigten und somit als hydrophob bzw. hydrophobiert bezeichnet werden konnten.

Gemäß einer Ausführungsform des Hydrophobierungsmittels umfasst der Polyionen-Komplex (i) 1 bis 4 Mole Polykationen (i.1) pro 1 Mol Polyanionen (i.2).

### Polykationen (i.1)

Bevorzugt sind die Polykationen (i.1) des Polyionen-Komplexes (i) kationische Polymere oder Copolymere, bevorzugt kationische Polymere oder Copolymere, welche mindestens ein quaternäres Ammoniumkation aufweisen und welche weiter bevorzugt ausgewählt sind aus der Gruppe bestehend aus
a) Poly-N,N,N-tri-C₁-C₅-alkylammonioalkylacrylat, wobei das Poly-N,N,N-tri-C₁-C₅-alkylammonioalkylacrylat bevorzugt ausgewählt ist aus der Gruppe bestehend aus Poly-N,N,N-[3-(trimethylammonio)ethyl]acrylat, Poly-N,N,N-[3-(trimethylammonio)-propyl]acrylat, Poly-N,N,N-[3-(trimethylammonio)butyl]acrylat, Poly-N,N,N-[3-(methyldiethylammonio)propyl]acrylat und Mischungen von zwei oder mehr dieser Poly-N,N,N-tri-C₁-C₅-alkylammonioalkylacrylate;
b) Poly-N,N,N-tri-C₁-C₅-alkylammonioalkylmethacrylat, wobei das Poly-N,N,N-tri-C₁-C₅-alkylammonioalkylmethacrylat bevorzugt ausgewählt ist aus der Gruppe bestehend aus Poly-N,N,N-[3-(trimethylammonio)ethyl]methacrylat, Poly-N,N,N-[3-(trimethylammonio)propyl]methacrylat, Poly-N,N,N-[3-(trimethylammonio)butyl]methacrylat, Poly-N,N,N-[3-(methyldiethylammonio)propyl]methacrylat und Mischungen von zwei oder mehr dieser Poly-N,N,N-tri-C₁-C₅-alkylammonioalkylmethacrylate;
c) Poly-N,N,N-tri-C₁-C₅-alkylammonioalkylacrylamid, wobei das Poly-N,N,N-tri-C₁-C₅-alkylammonioalkylacrylamid bevorzugt ausgewählt ist aus der Gruppe bestehend aus Poly-N,N,N-[3-(trimethylammonio)ethyl]acrylamid, Poly-N,N,N-[3-(trimethylammonio)propyl]acrylamid, Poly-N,N,N-[3-(trimethylammonio)butyl]acrylamid, Poly-N,N,N-[3-(methyldiethylammonio)propyl]acrylamid und Mischungen von zwei oder mehr dieser Poly-N,N,N-tri-C₁-C₅-alkylammonioalkylacrylamide;
d) Poly-N,N,N-tri-C₁-C₅-alkylammonioalkylmethacrylamid, wobei das Poly-N,N,N-tri-C₁-C₅-alkylammonioalkylmethacrylamid bevorzugt ausgewählt ist aus der Gruppe bestehend aus Poly-N,N,N-[3-(trimethylammonio)ethyl]methacrylamid, Poly-N,N,N-[3-(trimethylammonio)propyl]methacrylamid, Poly-N,N,N-[3-(trimethylammonio)butyl]methacrylamid, Poly-N,N,N-[3-(methyldiethylammonio)propyl]methacrylamid und Mischungen von zwei oder mehr dieser Poly-N,N,N-tri-C₁-C₅-alkylammonioalkylmethacrylamide;
e) Poly-N-3-methyl-1-vinylimidazolium;
f) quaternisierter Poly-[bis-(2-chlorethyl)-ether-*alt*-1,3-bis-(3-dimethylamino-propyl)-harnstoff];
g) Poly-(dimethylamin-co-epichlorhydrin-co-ethylendiamin);
h) Poly-dimethyldiallylammonium;
i) Poly-(dimethyldiallylammonium-co-methyldiallylaminhydrochlorid); und
j) Poly-N,N-R₁,R₂-disubstituiertes-3,4-dimethylen-pyrrolidinium, wobei R₁ und R₂ unabhängig voneinander ausgewählt sind aus der Gruppe bestehend aus Wasserstoffatom, C₁ bis C₁₈-Alkylrest und Benzylrest;
wobei die positive Ladung des Stickstoffatoms des quaternären Ammoniumkations durch ein einfach geladenes Anion, bevorzugt ein Anion ausgewählt aus der Gruppe von Halogenidanion, insbesondere Chloridanion, Methosulfatanion, Ethosulfatanion und Mischungen von zwei oder mehr dieser Anionen, kompensiert ist.

Gemäß einer Ausführungsform des Hydrophobierungsmittels sind die Polykationen (i.1) des Polyionen-Komplexes (i) kationische Polymere oder Copolymere sind, welche mindestens ein quaternäres Ammoniumkation aufweisen und welche ausgewählt sind aus der Gruppe bestehend aus
a.1) Poly-N,N,N-tri-C₁-C₅-alkylammonioalkylacrylatchlorid bzw. -methosulfat, bevorzugt ausgewählt aus der Gruppe bestehend aus Poly-N,N,N-[3-(trimethylammonio)ethyl]acrylatchlorid, Poly-N,N,N-[3-(trimethylammonio)propyl]acrylatchlorid, Poly-N,N,N-[3-(trimethylammonio)butyl]acrylatchlorid, Poly-N,N,N-[3-(methyldiethylammonio)propyl]acrylatmethosulfat, und Mischungen von zwei oder mehr dieser Poly-N,N,N-tri-C₁-C₅-alkylammonioalkylacrylatchloride bzw. ― methosulfate;
b.1) Poly-N,N,N-tri-C₁-C₅-alkylammonioalkylmethacrylatchlorid bzw. -methosulfat, bevorzugt ausgewählt aus der Gruppe bestehend aus Poly-N,N,N-[3-(trimethylammonio)ethyl]methacrylatchlorid, Poly-N,N,N-[3-(trimethylammonio)propyl]methacrylatchlorid, Poly-N,N,N-[3-(trimethylammonio)butyl]methacrylatchlorid, Poly-N,N,N-[3-(methyldiethylammonio)propyl]methacrylatmethosulfat, und Mischungen von zwei oder mehr dieser Poly-N,N,N-tri-C₁-C₅-alkylammonioalkylmethacrylatchloride bzw. -methosulfate;
c.1) Poly-N,N,N-tri-C₁-C₅-alkylammonioalkylacrylamidchlorid bzw. -methosulfat, bevorzugt ausgewählt aus der Gruppe bestehend aus Poly-N,N,N-[3-(trimethylammonio)ethyl]acrylamidchlorid, Poly-N,N,N-[3-(trimethylammonio)propyl]acrylamidchlorid, Poly-N,N,N-[3-(trimethylammonio)butyl]acrylamidchlorid, Poly-N,N,N-[3-(methyldiethylammonio)propyl]acrylamidchlorid, und Mischungen von zwei oder mehr dieser Poly-N,N,N-tri-C₁-C₅-alkylammonioalkylacrylamidchloride bzw. -methosulfate;
d.1) Poly-N,N,N-tri-C₁-C₅-alkylammonioalkylmethacrylamidchlorid bzw. -methosulfat, bevorzugt ausgewählt aus der Gruppe bestehend aus Poly-N,N,N-[3-(trimethylammonio)ethyl]methacrylamidchlorid, Poly-N,N,N-[3-(trimethylammonio)propyl]methacrylamidchlorid, Poly-N,N,N-[3-(trimethylammonio)butyl]methacrylamidchlorid, Poly-N,N,N-[3-(methyldiethylammonio)propyl]methacrylamidchlorid, und Mischungen von zwei oder mehr dieser Poly-N,N,N-tri-C₁-C₅-alkylammonioalkylmethacrylamidchloride bzw. -methosulfate;
e.1) Poly-N-3-methyl-1-vinylimidazoliumchlorid;
f.1) Poly-[bis-(2-chlorethyl)-ether-*alt*-1,3-bis-(3-dimethylamino-propyl)-harnstoff], quaternisiert;
g.1) Poly-(dimethylamin-co-epichlorhydrin-co-ethylendiamin);
h.1) Poly-dimethyldiallylammoniumchlorid;
i.1) Poly-(dimethyldiallylammoniumchlorid-co-methyldiallylaminhydrochlorid); und
j.1) Poly-N,N-R₁,R₂-disubstituiertes-3,4-dimethylen-pyrrolidiniumchlorid, wobei R₁ und R₂ unabhängig voneinander ausgewählt sind aus der Gruppe bestehend aus Wasserstoffatom, C₁ bis C₁₈-Alkylrest und Benzylrest.

Gemäß einer Ausführungsform des Hydrophobierungsmittels sind die Polykationen (i.1) des Polyionen-Komplexes (i) Poly-N,N-disubstituierte-3,4-dimethylen-pyrrolidiniumsalze, bevorzugt Chloridsalze, der allgemeinen Formel (I): 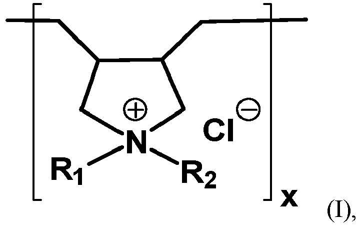 wobei
- R₁ und R₂: unabhängig voneinander ausgewählt sind aus der Gruppe bestehend aus Wasserstoffatom, C₁ bis C₁₈-Alkylrest und Benzylrest;
- x: eine ganze Zahl darstellt (Polymerisationsgrad).

### Polyanionen (i.2)

Gemäß einer Ausführungsform des Hydrophobierungsmittels sind die Polyanionen (i.2) des Polyionen-Komplexes (i) copolymere ein- bis mehrbasische Polyanionenester (Polycarboxylatether, PCE) auf der Basis von einfach ungesättigten C₃ bis C₁₀-Mono-, Di- und Tricarbonsäuren, bevorzugt ausgewählt aus der Gruppe bestehend aus Methacrylsäure, Maleinsäure, Methylenbernsteinsäure, Aconitsäure und Mischungen von zwei oder mehr dieser Säuren, die in Form ihrer Alkalisalze oder Ammoniumsalze, bevorzugt als Lithium-, Natrium-, Kalium- oder Ammoniumsalze, weiter bevorzugt als Natriumsalze vorliegen.

Bevorzugt sind die Polyanionen (i.2) des Polyionen-Komplexes (i) ausgewählt aus der Gruppe der Polycarboxylatether (PCE), bevorzugt ausgewählt aus der Gruppe bestehend aus Poly-(methacrylsäure-co-methacrylsäure-polyethylenglykol-monomethylether-ester), Poly-(acrylsäure-co-methacrylsäure-polyethylenglykol-monomethylether-ester), Poly-(methacrylsäure-co-acrylsäure-polyethylenglykol-monomethylether-ester), Poly-(maleinsäure-co-methacrylsäure-polyethylenglykol-monomethylether-ester), Poly-(methacrylsäure-co-methacrylsäure-polyethylenglykol-monomethylether-amid), Poly-(maleinsäure-co-methacrylsäure-polyethylenglykol-monomethylether-ester), Poly-(itaconsäure-co-methacrylsäure-polyethylenglykol-monomethylether-ester), Poly-(aconitsäure-co-methacrylsäure-polyethylenglykol-monomethylether-ester), Poly-(maleinsäure-co-methacrylsäure-polyethylenglykol-monomethylether-amid), Poly-(maleinsäure-co-methacrylsäure-polyethylenglykol-methylamid), Poly-(methacrylsäure-co-maleinsäure-polyethylenglykol-monomethylether-halbester), Poly-(acrylsäure-co-maleinsäure-polyethylenglykol-monomethylether-halbester), Poly-(methacrylsäure-co-itaconsäure-polyethylenglykol-monomethylether-halbester), Poly-(acrylsäure-co-itaconsäure-polyethylenglykol-monomethylether-halbester), Poly-(methacrylsäure-co-aconitsäure-polyethylenglykol-monomethylether-monoester), Poly-(acrylsäure-co-aconitsäure-polyethylenglykol-monomethylether-monoester), sowie Mischungen von zwei oder mehr dieser PCEs, wobei der Polyethylenglykol-(oder - methylether)-Rest, in den vorstehend aufgeführten anionischen Polymeren für ―[CH₂-CH₂-O]ₐ-H oder ―[CH₂-CH₂-O]ₐ-CH₃ steht, wobei a den Ethoxylierungsgrad bedeutet (Anzahl der monomeren Ethylenoxid-Wiederholungseinheiten) und a eine ganze Zahl im Bereich von 1 bis 100 darstellt; wobei die negative Ladung jeweils durch ein oder mehr einfach geladene(s) Kation(en), bevorzugt ein Kation ausgewählt aus der Gruppe der Alkalikationen oder Ammoniumkation und Mischungen von zwei oder mehr dieser Kationen, bevorzugt durch Natriumkation(en) kompensiert ist.

### molares Verhältnis Polykationen (i.1) : Polyanionen (i.2) von > 1

Gemäß einer Ausführungsform des Hydrophobierungsmittels weist der Polyionen-Komplex (i) ein molares Verhältnis Polykationen (i.1) : Polyanionen (i.2) von > 1, bevorzugt im Bereich von 2:1 bis 4:1 aufweist.

In einer bevorzugten Ausführungsform des Hydrophobierungsmittels weist der Polyionen-Komplex (i) ein molares Verhältnis Polykationen (i.1) : Polyanionen (i.2) im Bereich von 2:1 bis 4:1 auf; wobei bevorzugt die Polykationen (i.1) Poly-N,N-disubstituierte-3,4-dimethylen-pyrrolidiniumsalze und die Polyanionen (i.2) Polyanionenester auf der Basis von einfach ungesättigten C₃ bis C₁₀-Mono-, Di- und Tricarbonsäuren der allgemeinen Formel (Ia) sind, 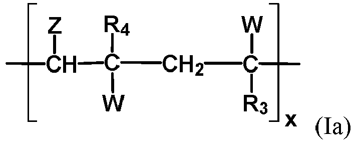 wobei
R₃ ein Wasserstoffatom oder ein C₁ bis C₄-Alkylrest ist, bevorzugt eine Methylgruppe,
R₄ ausgewählt ist aus der Gruppe bestehend aus Wasserstoffatom, C₁ bis C₄-Alkylrest, bevorzugt Methyl, und ―CH₂―Z-Gruppe, wobei
   Z jeweils ein Wasserstoffatom oder ein N,N-disubstituierter-3,4-dimethylen-pyrrolidinium-Rest sein kann, in dem die positive Ladung des Stickstoffatoms des quaternären Pyrrolidiniumkations durch ein Carboxylatanion-Rest kompensiert ist, wobei der Pyrrolidiniumsalz-Rest die allgemeine Formel (Ia.1) aufweist, 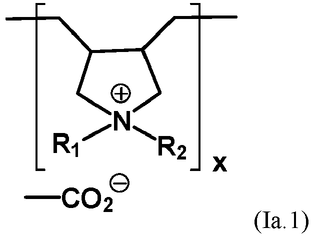 worin
   R₁ und R₂ unabhängig voneinander ausgewählt sind aus der Gruppe bestehend aus Wasserstoffatom, C₁ bis C₁₈-Alkylrest und Benzylrest;
   x den Polymerisationsgrad (Anzahl monomerer Wiederholungseinheiten im Polymer) bedeuten;
W gleich Z oder ein verdoppelter N,N-disubstituierter-3,4-dimethylen-pyrrolidinium-Rest ist, in dem die positiven Ladungen der Stickstoffatome der quaternären Pyrrolidiniumkationen durch ein Chloridanion und einen Carboxylatanion-Rest kompensiert sind, wobei der Bis-N,N-disubstituierte-3,4-dimethylen-pyrrolidiniumsalz-Rest die allgemeine Formel (Ia.2) aufweist, 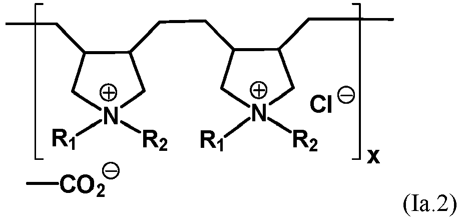 mit den für R₁, R₂ und x oben zur allgemeinen Formel (Ia.1) genannten Bedeutungen, oder ein Polyethylenglykol-monomethylether-ester-Rest der allgemeinen Formel (Ia.3) ist, 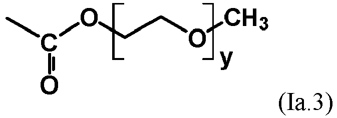 worin
   y ganze Zahlen von 1 bis 100 bedeutet (Ethoxylierungsgrad, Anzahl der monomeren Ethylenoxid-Wiederholungseinheiten).

Bei Z bzw. W ist die jeweils in den Formeln (Ia.1) bzw. (Ia.2) gezeigte ―CO₂⁻ -Gruppe an das Kohlenstoffatom der -CH-Gruppe in der allgemeinen Formel (Ia) bzw. an das Kohlenstoffatom der -CR₃-Gruppe in der allgemeinen Formel (Ia) kovalent gebunden.

In einer weiteren bevorzugten Ausführungsform des Hydrophobierungsmittels weist der Polyionen-Komplex (i) die allgemeine Formel (Ib) auf, 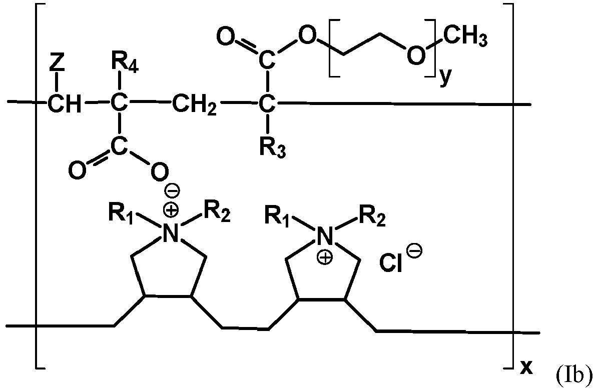 mit den für R₁, R₂, R₃, R₄, Z, x und y oben zu den allgemeinen Formeln (Ia), (Ia.1) und (Ia.3) genannten Bedeutungen.

### molares Verhältnis Polykationen (i.1) : Polyanionen (i.2) von 1

In einer Ausführungsform des Hydrophobierungsmittels weist der Polyionen-Komplex (i) ein molares Verhältnis Polykationen (i.1) : Polyanionen (i.2) von 1 auf.

Hierbei weist der Polyionen-Komplex (i) bevorzugt eine copolymere Verbindung aus, bevorzugt alternierend angeordneten, molaren Mengen Polykationen, bevorzugt Poly-N,N-disubstituierte-3,4-dimethylen-pyrrolidiniumsalze, und molaren Mengen Monocarbonsäureestern bezogen auf die monomeren Wiederholungseinheiten auf.

Gemäß einer bevorzugten Ausführungsform des Hydrophobierungsmittels weist der Polyionen-Komplex (i) eine copolymere Verbindung aus alternierend angeordneten molaren Mengen Poly-N,N-disubstituierte-3,4-dimethylen-pyrrolidiniumsalze und molaren Mengen Monocarbonsäureestern der allgemeinen Formel (II) auf, 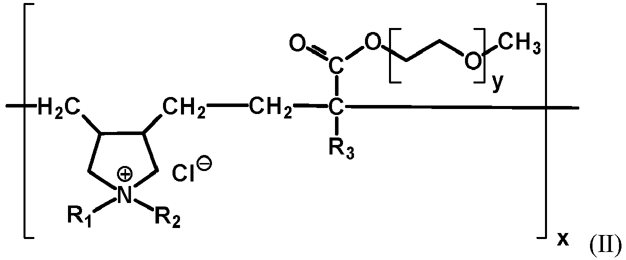 wobei
- R₁, R₂: unabhängig voneinander ausgewählt sind aus der Gruppe bestehend aus Wasserstoffatom, C₁ bis C₁₈-Alkylrest und Benzylrest;
- R₃: ein Wasserstoffatom oder ein C₁ bis C₄-Alkylrest ist, bevorzugt eine Methylgruppe;
- y: ganze Zahlen von 1 bis 100 bedeutet (Ethoxylierungsgrad, Anzahl der monomeren Ethylenoxid-Wiederholungseinheiten);
- x: den Polymerisationsgrad (Anzahl monomerer Wiederholungseinheiten im Polymer) bedeutet.

### Siliconverbindungszusammensetzung (ii)

Das Hydrophobierungsmittel umfasst eine Siliconverbindungszusammensetzung (ii), welche bevorzugt mindestens eine Siliconverbindung (ii.1) umfasst, die ausgewählt ist aus der Gruppe bestehend aus Monoorgano-C₁-C₂₀-trialkoxysilan, Diorgano-C₁-C₂₀-dialkoxysilan, Poly-(organo-C₁-C₂₀-alkoxysiloxan) und Mischungen von zwei oder mehr dieser Siliconverbindungen.

Der Ausdruck "organo" bedeutet eine verzweigte oder unverzweigte oder cyclische C₁ bis C₂₀-Alkyl-Gruppe oder eine C₅ bis C₁₀-Aryl-Gruppe.

Bevorzugt ist das Monoorgano-C₁-C₂₀-trialkoxysilan ausgewählt aus der Gruppe bestehend aus Methyltrimethoxysilan, Methyltriethoxysilan, Ethyltrimethoxysilan, Ethyltriethoxysilan, Propyltrimethoxysilan, Propyltriethoxysilan, Butyltrimethoxysilan, Butyltriethoxysilan, iso-Butyltrimethoxysilan, iso-Butyltriethoxysilan, Pentyltriethoxysilan, Cyclopentyltrimethoxysilan, Octyltriethoxysilan, iso-Octyltriethoxysilan, n-Decyltriethoxysilan, Dodecyltriethoxysilan, Hexadecyltriethoxysilan, Octadecyltrimethoxysilan, Octadeyltriethoxysilan, Phenyltriethoxysilan, und Mischungen von zwei oder mehr dieser Monoorgano-C₁-C₂₀-trialkoxysilane. In einer bevorzugten Ausführungsform des Hydrophobierungsmittels ist das Diorgano-C₁-C₂₀-dialkoxysilan ausgewählt aus der Gruppe bestehend aus Dimethyldiethoxysilan, Diethyldiethoxysilan, Diisopropyldimethoxysilan, Diisobutyldimethoxysilan, Di-n-butyldimethoxysilan, Dicyclopentyldimethoxysilan, Di-n-octyldiethoxysilan, Dodecylmethyldiethoxysilan, n-Octadecylmethyldiethoxysilan, Phenylmethyldiethoxysilan, Diphenyldiethoxysilan, und Mischungen von zwei oder mehr dieser Diorgano-C₁-C₂₀-dialkoxysilane. Das oben erwähnte Poly-(organo-C₁-C₂₀-alkoxysiloxan) ist bevorzugt ein Oligo-(organo-C₁-C₂₀-0,6-1,4-alkoxysiloxan) ("Oligo" meint eine Struktur mit 3 bis 10 Wiederholungseinheiten) und ist bevorzugt erhalten oder erhältlich aus einem oder mehreren der voranstehend genannten Monoorgano-C₁-C₂₀-trialkoxysilan(e), weiter bevorzugt durch Erwärmen des/der Monoorgano-C₁-C₂₀-trialkoxysilans/e auf Temperaturen im Bereich von 50 ° bis 130 °C in Gegenwart von 0,8 bis 1,2 Mol Wasser pro Mol Monoorgano-C₁-C₂₀-trialkoxysilan/e.

In einer Ausführungsform des Hydrophobierungsmittels liegt das Gewichtsverhältnis Polyionen-Komplex (i) zu Siliconverbindungszusammensetzung (ii) im Bereich von 1 zu 7 bis 1 zu 17.

### Trägermittelzusammensetzung (iii)

Gemäß einer bevorzugten Ausführungsform umfasst das Hydrophobierungsmittel für mineralische Materialen weiterhin eine Trägermittelzusammensetzung (iii), wobei die Trägermittelzusammensetzung wie eingangs beschrieben mindestens ein Trägermittel umfasst, welches ausgewählt ist aus der Gruppe bestehend aus amorphem Siliciumdioxid, amorphem agglomeriertem Siliciumdioxid, Quarzmehl, Kalksteinmehl, Aluminiumoxid, Illit, Eisenoxid und Mischungen von zwei oder mehr dieser Trägermittel, bevorzugt mindestens amorphes agglomeriertes Siliciumdioxid umfasst. Gemäß einer bevorzugten Ausführungsform umfasst das Hydrophobierungsmittel für mineralische Materialien daher:
i) einen Polyionen-Komplex umfassend mindestens ein Polykation (i.1) und mindestens ein Polyanion (i.2), wobei das molare Verhältnis von Polykation : Polyanion im Polyionen-Komplex ≥ 1 ist;
ii) eine Siliconverbindungszusammensetzung;
iii) eine Trägermittelzusammensetzung.

In einer Ausführungsform des Hydrophobierungsmittels besteht dieses zu mindestens 90 Gewichts-% aus Polyionen-Komplex (i), Siliconverbindungszusammensetzung (ii), Trägermittelzusammensetzung (iii) und höchstens 10 Gewichts-% aus Wasser bezogen auf das Gesamtgewicht des Hydrophobierungsmittels.

In einer Ausführungsform des Hydrophobierungsmittels liegt das Gewichtsverhältnis Polyionen-Komplex (i) zu Siliconverbindungszusammensetzung (ii) im Bereich von 2 : 22 bis 6 : 34.

In einer Ausführungsform des Hydrophobierungsmittels umfasst das Hydrophobierungsmittel weiterhin:
(iv) optional eine Tensidzusammensetzung umfassend ein oder mehrere Tenside, wobei das/die Tensid(e) ausgewählt ist/sind aus der Gruppe bestehend aus Capronsäure-(polyethylenglykol)-ester, Caprylsäure-(polyethylenglykol)-ester, Caprinsäure-(polyethylenglykol)-ester, Undecylensäure-(polyethylenglykol-monomethylether)-ester, Undecylensäure-(polyethylenglykol)-ester, Laurinsäure-(polyethylenglykol)-ester, Myristinsäure-(polyethylenglykol)-ester, Palmitinsäure-(polyethylenglykol)-ester, Stearinsäure-(polyethylenglykol)-ester, Ölsäure-(polyethylenglykol-monomethylether)-ester, Ricinolsäure-(polyethylenglykol)-ester, Elaidinsäure-(polyethylenglykol)-ester, Linolsäure-(polyethylenglykol)-ester, Linolensäure-(polyethylenglykol)-ester, Erucasäure-(polyethylenglykol)-ester, Palmitin-/Stearinsäurediethanol-*block-*(polypropylenglykol)-amid und Mischungen von zwei oder mehr dieser Tenside;
(v) optional eine UV-Farbstoffzusammensetzung, umfassend einen oder mehrere UV-Farbstoffe, wobei der/die UV-Farbstoff(e) ausgewählt ist/sind aus der Gruppe bestehend aus 2,2'-(2,5-thiophenediyl)-bis-(5-tert.-butyl-1,3-benzoxazol), (Dinatrium-4,4'-bis-(2-sulfostyryl)-biphenyl), Fluorescein, 2,7-Dichlorfluorescein, Rhodamin B und Mischungen von zwei oder mehr dieser Farbstoffe.

In einer Ausführungsform des Hydrophobierungsmittels besteht dieses zu mindestens 90 Gewichts-% aus Polyionen-Komplex (i), Siliconverbindungszusammensetzung (ii), Trägermittelzusammensetzung (iii) und höchstens 10 Gewichts-% aus Wasser sowie (iv) optional Tensidzusammensetzung und (v) optional UV-Farbstoffzusammensetzung bezogen auf das Gesamtgewicht des Hydrophobierungsmittels.

### Verfahren zur Herstellung eines Hydrophobierungsmittels

Die Erfindung betrifft weiterhin ein Verfahren zur Herstellung eines Hydrophobierungsmittels, umfassend
i) einen Polyionen-Komplex umfassend mindestens ein Polykation (i.1) und mindestens ein Polyanion (i.2), wobei das molare Verhältnis von
   Polykation : Polyanion im Polyionen-Komplex ≥ 1 ist;
ii) eine Siliconverbindungszusammensetzung;
iii) eine Trägermittelzusammensetzung;
wobei das Verfahren die Schritte umfasst:
a) Bereitstellen eines Polyionen-Komplexes (i) in wässriger Lösung;
b) Bereitstellen einer Trägermittelzusammensetzung (iii);
c) Vermischen von wässriger Lösung des Polyionen-Komplexes (i) gemäß (a) mit Trägermittelzusammensetzung (iii) gemäß (b), bevorzugt unter mechanischer Vermischung (bevorzugt Rühren/Kneten), unter Erhalt einer ersten Mischung;
d) Zugabe einer Siliconverbindungszusammensetzung (ii), die optional eine Tensidzusammensetzung und/oder eine UV-Farbstoffzusammensetzung enthält, zur gemäß (c) erhaltenen ersten Mischung, bevorzugt unter mechanischer Vermischung (bevorzugt Rühren/Kneten), unter Erhalt einer beschichteten pulverförmigen Trägermittelzusammensetzung des Hydrophobierungsmittels.

Die beschichtete pulverförmige Trägermittelzusammensetzung des Hydrophobierungsmittels weist bevorzugt einen Wassergehalt von 4 bis 8 Gewichts-% auf.

Beschrieben, aber nicht vom Gegenstand der Ansprüche umfasst, ist weiterhin ein Hydrophobierungsmittel, erhalten oder erhältlich nach dem voranstehend beschriebenen Verfahren.

Ebenso betrifft die Erfindung die Verwendung eines Hydrophobierungsmittels gemäß einer der voranstehend beschriebenen Ausführungsformen oder eines Hydrophobierungsmittels erhalten oder erhältlich nach dem voranstehend beschriebenen Verfahren zur Hydrophobierung mineralischer Bindemittel und/oder von Zusammensetzungen, welche mineralische Bindemittel enthalten (Bindemittelzusammensetzung) und/oder von Materialien, welche mineralische Bindemittel umfassen.

"Mineralisches Bindemittel" meint insbesondere anorganische mineralische Bindemittel und umfasst Zement, gelöschten Kalk (Ca(OH)₂), Lehm, Gips und Mischungen von zwei oder mehr dieser mineralischen Bindemittel, bevorzugt mineralische Bindemittel ausgewählt aus der Gruppe bestehend aus Zement, gelöschtem Kalk, Gips und Mischungen von zwei oder mehr dieser mineralischen Bindemittel. In einer bevorzugten Ausführungsform umfasst das mineralische Bindemittel mindestens Zement; in einer anderen bevorzugten Ausführungsform umfasst das mineralische Bindemittel mindestens Gips. "Bindemittelzusammensetzung" meint eine Zusammensetzung, welche ein oder mehrere mineralische(s) Bindemittel umfasst. "Material(ien), welche(s) mineralische Bindemittel umfassen/umfasst", umfasst alle Materialien, welche ausgehend von einer Bindemittelzusammensetzung zumindest unter Zugabe von Wasser erhalten sind.

Die Erfindung betrifft weiterhin eine Bindemittelzusammensetzung, umfassend ein oder mehrere mineralische(s) Bindemittel, bevorzugt ausgewählt aus der Gruppe bestehend aus Zement, gelöschtem Kalk (Ca(OH)₂) und Gips, und ein Hydrophobierungsmittel gemäß einer der voranstehend beschriebenen Ausführungsformen.

### Verfahren zur Hydrophobierung von Materialien

Die Erfindung betrifft ebenfalls ein Verfahren zur Hydrophobierung von Materialien, welche mineralische Bindemittel umfassen, umfassend die Schritte
A) Bereitstellen einer Bindemittelzusammensetzung, umfassend ein oder mehrere mineralische(s) Bindemittel, bevorzugt ausgewählt aus der Gruppe bestehend aus Zement, gelöschtem Kalk und Gips;
B) Bereitstellen eines Hydrophobierungsmittels umfassend einen Polyionen-Komplex (i) umfassend mindestens ein Polykation (i.1) und mindestens ein Polyanion (i.2), wobei das molare Verhältnis von Polykation : Polyanion im Polyionen-Komplex ≥ 1 ist; eine Siliconverbindungszusammensetzung (ii); eine Trägermittelzusammensetzung (iii);
C) Vermischen der Bindemittelzusammensetzung gemäß (A) und des Hydrophobierungsmittels gemäß (B); unter Erhalt einer Mischung aus Bindemittelzusammensetzung und Hydrophobierungsmittel;
D) Zugabe von Wasser (w) zur gemäß (C) erhaltenen Mischung aus Bindemittelzusammensetzung (b) und Hydrophobierungsmittel, bevorzugt in einem w/b-Verhältnis im Bereich von 0,1 bis 1,0, weiter bevorzugt in einem w/b-Verhältnis im Bereich von 0,2 bis 0,6, weiter bevorzugt in einem w/b-Verhältnis im Bereich von 0,3 bis 0,5; und Vermischen der Komponenten; unter Erhalt eines hydrophobierten Materials, welche(s) mineralische Bindemittel umfasst.

"Hydrophobiertes Material, welche(s) mineralische Bindemittel umfasst" meint das Reaktionsprodukt aus der Umsetzung von Bindemittel bzw. Bindemittelzusammensetzung, Wasser und Hydrophobierungsmittel. Wie voranstehend bereits erläutert meint "Material(ein), welche(s) mineralische Bindemittel umfassen/umfasst", Materialien, welche ausgehend von einer Bindemittelzusammensetzung zumindest unter Zugabe von Wasser erhalten sind, beispielsweise Materialien wie Beton oder Mörtel. Umfasst ist dabei ebenfalls der Zusatz (organischer) Zusatzmittel und/oder Zusatzstoffe und/oder Gesteinskörnung.

(Beton-)Zusatzmittel sind, bevorzugt in Wasser, gelöste oder aufgeschlämmte Mittel, die dem Material, beispielsweise dem Beton, beigemischt werden, um durch physikalische und/oder chemische Wirkungen die Eigenschaften des Materials, beispielsweise des Frisch- oder Festbetons, wie Verarbeitbarkeit, Abbindeverhalten, Erhärten oder Dauerhaftigkeit, zu verändern. Zusatzstoffe_{'} beispielsweise Betonzusatzstoffe, sind pulverförmige oder flüssige Zusätze, die bestimmte Eigenschaften des Materials, beispielsweise des Betons, beeinflussen. Sie dürfen dem Material / Beton nur zugegeben werden, wenn sie das Erhärten des Zements, die Festigkeit und die Beständigkeit des Materials/Betons sowie den Korrosionsschutz der Bewehrung nicht beeinträchtigen. Im Gegensatz zu (Beton-)Zusatzmitteln sind sie bei der Erstellung der Rezeptur des Betons als Volumenbestandteile zu berücksichtigen. (Beton-) zusatzstoffe sind bevorzugt ausgewählt aus der Gruppe bestehend aus mineralischem Feinstoff, organischer Stoff (beispielsweise Kunstharz), Farbpigment, Faser und Mischungen von zwei oder mehr dieser Zusatzstoffe. Mineralische Feinstoffe sind bevorzugt Gesteinsmehl, puzzolanische Stoffe (bevorzugt ausgewählt aus der Gruppe bestehend aus Flugasche, Tuff, Trass, Silicastaub und Mischungen von zwei oder mehr dieser puzzolanischen Stoffe), oder Mischungen von Gesteinsmehl und puzzolanischer Stoff. Fasern sind bevorzugt Stahl-, Glas- oder Kunststofffasern für Faserbeton. Als Gesteinskörnung werden natürliche und künstliche Gesteinskörner bezeichnet. Sie stammen entweder aus natürlichen Lagerstätten oder fallen bei der Wiederverwertung von Baustoffen oder als industrielles Nebenerzeugnis an. Die Gesteine liegen entweder als Rundkorn oder in gebrochener Form vor.

Die Erfindung betrifft weiterhin ein Verfahren zur Hydrophobierung von Materialien, welche mineralische Bindemittel umfassen, wobei Bindemittelzusammensetzung und Hydrophobierungsmittel derart vermischt werden, dass das erhaltene hydrophobierte Material 0,1 bis 10 Gewichts-%, bevorzugt 0,3 bis 5 Gewichts-%, weiter bevorzugt 0,5 bis 2,0 Gewichts-% an Hydrophobierungsmittel enthält, bezogen auf das Gesamtgewicht des hydrophobierten Materials, welche(s) mineralische Bindemittel umfasst.

Beschrieben, aber nicht vom Gegenstand der Ansprüche umfasst, ist ebenso ein hydrophobiertes Material umfassend mineralische Bindemittel, erhalten oder erhältlich nach dem voranstehend beschriebenen Verfahren.

Beschrieben, aber nicht vom Gegenstand der Ansprüche umfasst, ist weiterhin ein hydrophobiertes Material, welche(s) mineralische Bindemittel umfasst, umfassend das Reaktionsprodukt von einem oder mehreren mineralische(n) Bindemittel(n), bevorzugt ausgewählt aus der Gruppe bestehend aus Zement, gelöschtem Kalk und Gips, einem Hydrophobierungsmittel gemäß einer der voranstehend beschriebenen Ausführungsformen und Wasser.

Das hydrophobierte Material enthält bevorzugt 0,1 bis 10 Gewichts-%, weiter bevorzugt 0,3 bis 5 Gewichts-%, weiter bevorzugt 0,5 bis 2,0 Gewichts-% an Hydrophobierungsmittel, bezogen auf das Gesamtgewicht des hydrophobierten Materials.

Die vorliegende Erfindung wird weiter illustriert durch die folgenden Ausführungsformen und Kombinationen von Ausführungsformen wie angezeigt durch die entsprechenden Bezüge und Rückbezüge. Insbesondere ist zu betonen, dass jede Instanz, wo ein Bereich von Ausführungsformen angegeben ist, beispielsweise im Kontext eines Ausdrucks wie "Ausführungsform (5), welche eine der Ausführungsformen (1) bis (4) konkretisiert", jede Ausführungsform im Bereich als explizit für den Fachmann offenbart gemeint ist, d.h. die Bedeutung dieses Ausdrucks ist vom Fachmann als synonym zu "Ausführungsform (5) konkretisierend eine der Ausführungsformen (1), (2), (3) und (4)" zu verstehen.

Gemäß einer Ausführungsform (1) betrifft die Erfindung ein Hydrophobierungsmittel für mineralische Materialen, umfassend:
i) einen Polyionen-Komplex umfassend mindestens ein Polykation (i.1) und mindestens ein Polyanion (i.2), wobei das molare Verhältnis von Polykation :
   Polyanion im Polyionen-Komplex ≥ 1 ist;
ii) eine Siliconverbindungszusammensetzung.

Gemäß einer Ausführungsform (2), welche Ausführungsform (1) konkretisiert, betrifft die Erfindung ein Hydrophobierungsmittel, wobei der Polyionen-Komplex (i) 1 bis 4 Mole Polykationen (i.1) pro 1 Mol Polyanionen (i.2) umfasst.

Gemäß einer Ausführungsform (3), welche Ausführungsform (1) oder (2) konkretisiert, betrifft die Erfindung ein Hydrophobierungsmittel, wobei die Polykationen (i.1) des Polyionen-Komplexes (i) kationische Polymere oder Copolymere sind, bevorzugt kationische Polymere oder Copolymere, welche mindestens ein quaternäres Ammoniumkation aufweisen und welche weiter bevorzugt ausgewählt sind aus der Gruppe bestehend aus
a) Poly-N,N,N-tri-C₁-C₅-alkylammonioalkylacrylat, wobei das Poly-N,N,N-tri-C₁-C₅-alkylammonioalkylacrylat bevorzugt ausgewählt ist aus der Gruppe bestehend aus Poly-N,N,N-[3-(trimethylammonio)ethyl]acrylat, Poly-N,N,N-[3-(trimethylammonio)-propyl]acrylat, Poly-N,N,N-[3-(trimethylammonio)butyl]acrylat, Poly-N,N,N-[3-(methyldiethylammonio)propyl]acrylat und Mischungen von zwei oder mehr dieser Poly-N,N,N-tri-C₁-C₅-alkylammonioalkylacrylate;
b) Poly-N,N,N-tri-C₁-C₅-alkylammonioalkylmethacrylat, wobei das Poly-N,N,N-tri-C₁-C₅-alkylammonioalkylmethacrylat bevorzugt ausgewählt ist aus der Gruppe bestehend aus Poly-N,N,N-[3-(trimethylammonio)ethyl]methacrylat, Poly-N,N,N-[3-(trimethylammonio)propyl]methacrylat, Poly-N,N,N-[3-(trimethylammonio)butyl]methacrylat, Poly-N,N,N-[3-(methyldiethylammonio)propyl]methacrylat und Mischungen von zwei oder mehr dieser Poly-N,N,N-tri-C₁-C₅-alkylammonioalkylmethacrylate;
c) Poly-N,N,N-tri-C₁-C₅-alkylammonioalkylacrylamid, wobei das Poly-N,N,N-tri-C₁-C₅-alkylammonioalkylacrylamid bevorzugt ausgewählt ist aus der Gruppe bestehend aus Poly-N,N,N-[3-(trimethylammonio)ethyl]acrylamid, Poly-N,N,N-[3-(trimethylammonio)propyl]acrylamid, Poly-N,N,N-[3-(trimethylammonio)butyl]acrylamid, Poly-N,N,N-[3-(methyldiethylammonio)propyl]acrylamid und Mischungen von zwei oder mehr dieser Poly-N,N,N-tri-C₁-C₅-alkylammonioalkylacrylamide;
d) Poly-N,N,N-tri-C₁-C₅-alkylammonioalkylmethacrylamid, wobei das Poly-N,N,N-tri-C₁-C₅-alkylammonioalkylmethacrylamid bevorzugt ausgewählt ist aus der Gruppe bestehend aus Poly-N,N,N-[3-(trimethylammonio)ethyl]methacrylamid, Poly-N,N,N-[3-(trimethylammonio)propyl]methacrylamid, Poly-N,N,N-[3-(trimethylammonio)butyl]methacrylamid, Poly-N,N,N-[3-(methyldiethylammonio)propyl]methacrylamid und Mischungen von zwei oder mehr dieser Poly-N,N,N-tri-C₁-C₅-alkylammonioalkylmethacrylamide;
e) Poly-N-3-methyl-1-vinylimidazolium;
f) quaternisierter Poly-[bis-(2-chlorethyl)-ether-*alt*-1,3-bis-(3-dimethylamino-propyl)-harnstoff];
g) Poly-(dimethylamin-co-epichlorhydrin-co-ethylendiamin);
h) Poly-dimethyldiallylammonium;
i) Poly-(dimethyldiallylammonium-co-methyldiallylaminhydrochlorid); und
j) Poly-N,N-R₁,R₂-disubstituiertes-3,4-dimethylen-pyrrolidinium, wobei R₁ und R₂ unabhängig voneinander ausgewählt sind aus der Gruppe bestehend aus Wasserstoffatom, C₁ bis C₁₈-Alkylrest und Benzylrest;
wobei die positive Ladung des Stickstoffatoms des quaternären Ammoniumkations durch ein einfach geladenes Anion, bevorzugt ein Anion ausgewählt aus der Gruppe von Halogenidanion, insbesondere Chloridanion, Methosulfatanion, Ethosulfatanion und Mischungen von zwei oder mehr dieser Anionen, kompensiert ist.

Gemäß einer Ausführungsform (4), welche eine der Ausführungsformen (1) bis (3) konkretisiert, betrifft die Erfindung ein Hydrophobierungsmittel, wobei die Polykationen (i.1) des Polyionen-Komplexes (i) kationische Polymere oder Copolymere sind, welche mindestens ein quaternäres Ammoniumkation aufweisen und welche ausgewählt sind aus der Gruppe bestehend aus
a.1) Poly-N,N,N-tri-C₁-C₅-alkylammonioalkylacrylatchlorid bzw. -methosulfat, bevorzugt ausgewählt aus der Gruppe bestehend aus Poly-N,N,N-[3-(trimethylammonio)ethyl]acrylatchlorid, Poly-N,N,N-[3-(trimethylammonio)propyl]acrylatchlorid, Poly-N,N,N-[3-(trimethylammonio)butyl]acrylatchlorid, Poly-N,N,N-[3-(methyldiethylammonio)propyl]acrylatmethosulfat, und Mischungen von zwei oder mehr dieser Poly-N,N,N-tri-C₁-C₅-alkylammonioalkylacrylatchloride bzw. -methosulfate;
b.1) Poly-N,N,N-tri-C₁-C₅-alkylammonioalkylmethacrylatchlorid bzw. -methosulfat, bevorzugt ausgewählt aus der Gruppe bestehend aus Poly-N,N,N-[3-(trimethylammonio)ethyl]methacrylatchlorid, Poly-N,N,N-[3-(trimethylammonio)propyl]methacrylatchlorid, Poly-N,N,N-[3-(trimethylammonio)butyl]methacrylatchlorid, Poly-N,N,N-[3-(methyldiethylammonio)propyl]methacrylatmethosulfat, und Mischungen von zwei oder mehr dieser Poly-N,N,N-tri-C₁-C₅-alkylammonioalkylmethacrylatchloride bzw. -methosulfate;
c.1) Poly-N,N,N-tri-C₁-C₅-alkylammonioalkylacrylamidchlorid bzw. -methosulfat, bevorzugt ausgewählt aus der Gruppe bestehend aus Poly-N,N,N-[3-(trimethylammonio)ethyl]acrylamidchlorid, Poly-N,N,N-[3-(trimethylammonio)propyl]acrylamidchlorid, Poly-N,N,N-[3-(trimethylammonio)butyl]acrylamidchlorid, Poly-N,N,N-[3-(methyldiethylammonio)propyl]acrylamidchlorid, und Mischungen von zwei oder mehr dieser Poly-N,N,N-tri-C₁-C₅-alkylammonioalkylacrylamidchloride bzw. -methosulfate;
d.1) Poly-N,N,N-tri-C₁-C₅-alkylammonioalkylmethacrylamidchlorid bzw. - methosulfat,
   bevorzugt ausgewählt aus der Gruppe bestehend aus Poly-N,N,N-[3-(trimethylammonio)ethyl]methacrylamidchlorid, Poly-N,N,N-[3-(trimethylammonio)propyl]methacrylamidchlorid, Poly-N,N,N-[3-(trimethylammonio)butyl]methacrylamidchlorid, Poly-N,N,N-[3-(methyldiethylammonio)propyl]methacrylamidchlorid, und Mischungen von zwei oder mehr dieser Poly-N,N,N-tri-C₁-C₅-alkylammonioalkylmethacrylamidchloride bzw. -methosulfate;
e.1) Poly-N-3-methyl-1-vinylimidazoliumchlorid;
f.1) Poly-[bis-(2-chlorethyl)-ether-*alt*-1,3-bis-(3-dimethylamino-propyl)-harnstoff], quaternisiert;
g.1) Poly-(dimethylamin-co-epichlorhydrin-co-ethylendiamin);
h.1) Poly-dimethyldiallylammoniumchlorid;
i.1) Poly-(dimethyldiallylammoniumchlorid-co-methyldiallylaminhydrochlorid); und
j.1) Poly-N,N-R₁,R₂-disubstituiertes-3,4-dimethylen-pyrrolidiniumchlorid, wobei R₁ und R₂ unabhängig voneinander ausgewählt sind aus der Gruppe bestehend aus Wasserstoffatom, C₁ bis C₁₈-Alkylrest und Benzylrest.

Gemäß einer Ausführungsform (5), welche eine der Ausführungsformen (1) bis (4) konkretisiert, betrifft die Erfindung ein Hydrophobierungsmittel, wobei die Polykationen (i.1) des Polyionen-Komplexes (i) Poly-N,N-disubstituierte-3,4-dimethylen-pyrrolidiniumsalze, bevorzugt Chloridsalze, der allgemeinen Formel (I) sind: 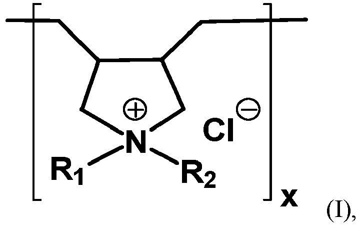 wobei
- R₁ und R₂: unabhängig voneinander ausgewählt sind aus der Gruppe bestehend aus Wasserstoffatom, C₁ bis C₁₈-Alkylrest und Benzylrest;
- x: eine ganze Zahl darstellt (Polymerisationsgrad).

Gemäß einer Ausführungsform (6), welche eine der Ausführungsformen (1) bis (5) konkretisiert, betrifft die Erfindung ein Hydrophobierungsmittel, wobei die Polyanionen (i.2) des Polyionen-Komplexes (i) copolymere ein- bis mehrbasische Polyanionenester (Polycarboxylatether, PCE) auf der Basis von einfach ungesättigten C₃ bis C₁₀-Mono-, Di- und Tricarbonsäuren, bevorzugt ausgewählt aus der Gruppe bestehend aus Methacrylsäure, Maleinsäure, Methylenbernsteinsäure, Aconitsäure und Mischungen von zwei oder mehr dieser Säuren, sind, die in Form ihrer Alkalisalze oder Ammoniumsalze, bevorzugt als Lithium-, Natrium-, Kalium- oder Ammoniumsalze, weiter bevorzugt als Natriumsalze vorliegen.

Gemäß einer Ausführungsform (7), welche Ausführungsform (6) konkretisiert, betrifft die Erfindung ein Hydrophobierungsmittel, wobei die Polyanionen (i.2) des Polyionen-Komplexes (i) ausgewählt sind aus der Gruppe der Polycarboxylatether (PCE), bevorzugt ausgewählt aus der Gruppe bestehend aus Poly-(methacrylsäure-co-methacrylsäure-polyethylenglykol-monomethylether-ester), Poly-(acrylsäure-co-methacrylsäure-polyethylenglykol-monomethylether-ester), Poly-(methacrylsäure-co-acrylsäure-polyethylenglykol-monomethylether-ester), Poly-(maleinsäure-co-methacrylsäure-polyethylenglykol-monomethylether-ester), Poly-(methacrylsäure-co-methacrylsäure-polyethylenglykol-monomethylether-amid), Poly-(maleinsäure-co-methacrylsäure-polyethylenglykol-monomethylether-ester), Poly-(itaconsäure-co-methacrylsäure-polyethylenglykol-monomethylether-ester), Poly-(aconitsäure-co-methacrylsäure-polyethylenglykol-monomethylether-ester), Poly-(maleinsäure-co-methacrylsäure-polyethylenglykol-monomethylether-amid), Poly-(maleinsäure-co-methacrylsäure-polyethylenglykol-methylamid), Poly-(methacrylsäure-co-maleinsäure-polyethylenglykol-monomethylether-halbester), Poly-(acrylsäure-co-maleinsäure-polyethylenglykol-monomethylether-halbester), Poly-(methacrylsäure-co-itaconsäure-polyethylenglykol-monomethylether-halbester), Poly-(acrylsäure-co-itaconsäure-polyethylenglykol-monomethylether-halbester), Poly-(methacrylsäure-co-aconitsäure-polyethylenglykol-monomethylether-monoester), Poly-(acrylsäure-co-aconitsäure-polyethylenglykol-monomethylether-monoester), sowie Mischungen von zwei oder mehr dieser PCEs, wobei der Polyethylenglykol-(oder - methylether)-Rest, in den vorstehend aufgeführten anionischen Polymeren für ―[CH₂-CH₂-O]ₐ-H oder ―[CH₂-CH₂-O]ₐ-CH₃ steht, wobei a den Ethoxylierungsgrad bedeutet (Anzahl der monomeren Ethylenoxid-Wiederholungseinheiten) und a eine ganze Zahl im Bereich von 1 bis 100 darstellt; wobei die negative Ladung jeweils durch ein oder mehr einfach geladene(s) Kation(en), bevorzugt ein Kation ausgewählt aus der Gruppe der Alkalikationen oder Ammoniumkation und Mischungen von zwei oder mehr dieser Kationen, bevorzugt durch Natriumkation(en) kompensiert ist.

Gemäß einer Ausführungsform (8), welche eine der Ausführungsformen (1) bis (7) konkretisiert, betrifft die Erfindung ein Hydrophobierungsmittel, wobei der Polyionen-Komplex (i) ein molares Verhältnis Polykationen (i.1) : Polyanionen (i.2) von >1, bevorzugt im Bereich von 2:1 bis 4:1 aufweist.

Gemäß einer Ausführungsform (9), welche Ausführungsform (8) konkretisiert, betrifft die Erfindung ein Hydrophobierungsmittel, wobei der Polyionen-Komplex (i) ein molares Verhältnis Polykationen (i.1) : Polyanionen (i.2) im Bereich von 2:1 bis 4:1 zeigt; wobei bevorzugt die Polykationen (i.1) Poly-N,N-disubstituierte-3,4-dimethylen-pyrrolidiniumsalze und die Polyanionen (i.2) Polyanionenester auf der Basis von einfach ungesättigten C₃ bis C₁₀-Mono-, Di- und Tricarbonsäuren der allgemeinen Formel (Ia) sind, 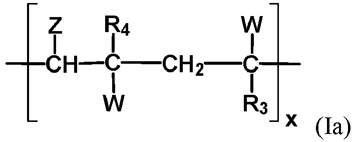 wobei
R₃ ein Wasserstoffatom oder ein C₁ bis C₄-Alkylrest ist, bevorzugt eine Methylgruppe,
R₄ ausgewählt ist aus der Gruppe bestehend aus Wasserstoffatom, C₁ bis C₄-Alkylrest, bevorzugt Methyl, und ―CH₂―Z-Gruppe, wobei
Z jeweils ein Wasserstoffatom oder ein N,N-disubstituierter-3,4-dimethylen-pyrrolidinium-Rest sein kann, in dem die positive Ladung des Stickstoffatoms des quaternären Pyrrolidiniumkations durch ein Carboxylatanion-Rest kompensiert ist, wobei der Pyrrolidiniumsalz-Rest die allgemeine Formel (Ia.1) aufweist, 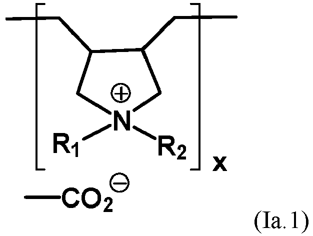 worin
   R₁ und R₂ unabhängig voneinander ausgewählt sind aus der Gruppe bestehend aus Wasserstoffatom, C₁ bis C₁₈-Alkylrest und Benzylrest;
   x den Polymerisationsgrad (Anzahl monomerer Wiederholungseinheiten im Polymer) bedeuten;
W gleich Z oder ein verdoppelter N,N-disubstituierter-3,4-dimethylen-pyrrolidinium-Rest ist, in dem die positiven Ladungen der Stickstoffatome der quaternären Pyrrolidiniumkationen durch ein Chloridanion und einen Carboxylatanion-Rest kompensiert sind, wobei der Bis-N,N-disubstituierte-3,4-dimethylen-pyrrolidiniumsalz-Rest die allgemeine Formel (Ia.2) aufweist, 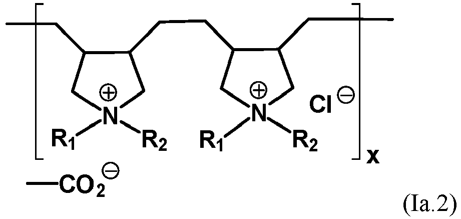 mit den für R₁, R₂ und x oben zur allgemeinen Formel (Ia.1) genannten Bedeutungen, oder ein Polyethylenglykol-monomethylether-ester-Rest der allgemeinen Formel (Ia.3) ist, 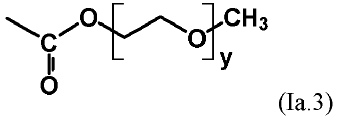 worin
   y ganze Zahlen von 1 bis 100 bedeutet (Ethoxylierungsgrad, Anzahl der monomeren Ethylenoxid-Wiederholungseinheiten).

Gemäß einer Ausführungsform (10), welche Ausführungsform (9) konkretisiert, betrifft die Erfindung ein Hydrophobierungsmittel, wobei der Polyionen-Komplex (i) die allgemeine Formel (Ib) aufweist, 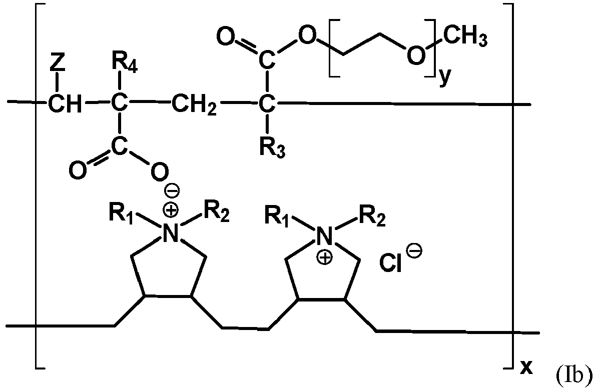 mit den für R₁, R₂, R₃, R₄, Z, x und y oben zu den allgemeinen Formeln (Ia), (Ia.1) und (Ia.3) genannten Bedeutungen.

Gemäß einer Ausführungsform (11), welche eine der Ausführungsformen (1) bis (7) konkretisiert, betrifft die Erfindung ein Hydrophobierungsmittel, wobei der Polyionen-Komplex (i) ein molares Verhältnis Polykationen (i.1) : Polyanionen (i.2) von 1 aufweist.

Gemäß einer Ausführungsform (12), welche Ausführungsform (11) konkretisiert, betrifft die Erfindung ein Hydrophobierungsmittel, wobei der Polyionen-Komplex (i) eine copolymere Verbindung aus, bevorzugt alternierend angeordneten, molaren Mengen Polykationen, bevorzugt Poly-N,N-disubstituierte-3,4-dimethylen-pyrrolidiniumsalze, und molaren Mengen Monocarbonsäureestern bezogen auf die monomeren Wiederholungseinheiten aufweist.

Gemäß einer Ausführungsform (13), welche Ausführungsform (11) oder (12) konkretisiert, betrifft die Erfindung ein Hydrophobierungsmittel, wobei der Polyionen-Komplex (i) eine copolymere Verbindung aus alternierend angeordneten molaren Mengen Poly-N,N-disubstituierte-3,4-dimethylen-pyrrolidiniumsalze und molaren Mengen Monocarbonsäureestern der allgemeinen Formel (II) aufweist, 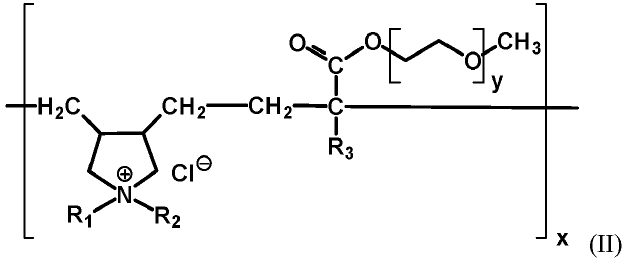 wobei
- R₁, R₂: unabhängig voneinander ausgewählt sind aus der Gruppe bestehend aus Wasserstoffatom, C₁ bis C₁₈-Alkylrest und Benzylrest;
- R₃: ein Wasserstoffatom oder ein C₁ bis C₄-Alkylrest ist, bevorzugt eine Methylgruppe;
- y: ganze Zahlen von 1 bis 100 bedeutet (Ethoxylierungsgrad, Anzahl der monomeren Ethylenoxid-Wiederholungseinheiten);
- x: den Polymerisationsgrad (Anzahl monomerer Wiederholungseinheiten im Polymer) bedeutet.

Gemäß einer Ausführungsform (14), welche eine der Ausführungsformen (1) bis (13) konkretisiert, betrifft die Erfindung ein Hydrophobierungsmittel, wobei die Siliconverbindungszusammensetzung (ii) mindestens eine Siliconverbindung (ii.1) umfasst, welche ausgewählt ist aus der Gruppe bestehend aus Monoorgano-C₁-C₂₀-trialkoxysilan, Diorgano-C₁-C₂₀-dialkoxysilan, Poly-(organo-C₁-C₂₀-alkoxysiloxan) und Mischungen von zwei oder mehr dieser Siliconverbindungen.

Gemäß einer Ausführungsform (15), welche Ausführungsform (14) konkretisiert, betrifft die Erfindung ein Hydrophobierungsmittel wobei das Monoorgano-C₁-C₂₀-trialkoxysilan ausgewählt ist aus der Gruppe bestehend aus Methyltrimethoxysilan,

Methyltriethoxysilan, Ethyltrimethoxysilan, Ethyltriethoxysilan, Propyltrimethoxysilan, Propyltriethoxysilan, Butyltrimethoxysilan, Butyltriethoxysilan, iso-Butyltrimethoxysilan, iso-Butyltriethoxysilan, Pentyltriethoxysilan, Cyclopentyltrimethoxysilan, Octyltriethoxysilan, iso-Octyltriethoxysilan, n-Decyltriethoxysilan, Dodecyltriethoxysilan, Hexadecyltriethoxysilan, Octadecyltrimethoxysilan, Octadeyltriethoxysilan, Phenyltriethoxysilan, und Mischungen von zwei oder mehr dieser Monoorgano-C₁-C₂₀-trialkoxysilane.

Gemäß einer Ausführungsform (16), welche Ausführungsform (14) konkretisiert, betrifft die Erfindung ein Hydrophobierungsmittel wobei das Diorgano-C₁-C₂₀-dialkoxysilan ausgewählt ist aus der Gruppe bestehend aus Dimethyldiethoxysilan, Diethyldiethoxysilan, Diisopropyldimethoxysilan, Diisobutyldimethoxysilan, Di-n-butyldimethoxysilan, Dicyclopentyldimethoxysilan, Di-n-octyldiethoxysilan, Dodecylmethyldiethoxysilan, n-Octadecylmethyldiethoxysilan, Phenylmethyldiethoxysilan, Diphenyldiethoxysilan, und Mischungen von zwei oder mehr dieser Diorgano-C₁-C₂₀-dialkoxysilane.

Gemäß einer Ausführungsform (17), welche Ausführungsform (14) konkretisiert, betrifft die Erfindung ein Hydrophobierungsmittel, wobei das Poly-(organo-C₁-C₂₀-alkoxysiloxan) bevorzugt ein Oligo-(organo-C₁-C₂₀-0,6-1,4-alkoxysiloxan) ("Oligo" meint eine Struktur mit 3 bis 10 Wiederholungseinheiten) ist, bevorzugt erhalten oder erhältlich aus einem oder mehreren Monoorgano-C₁-C₂₀-trialkoxysilan(en) gemäß Ausführungsform 15, bevorzugt durch Erwärmen des/der Monoorgano-C₁-C₂₀-trialkoxysilans/e auf Temperaturen im Bereich von 50 ° bis 130 °C in Gegenwart von 0,8 bis 1,2 Mol Wasser pro Mol Monoorgano-C₁-C₂₀-trialkoxysilan/e.

Gemäß einer Ausführungsform (18), welche eine der Ausführungsformen (1) bis (17) konkretisiert, betrifft die Erfindung ein Hydrophobierungsmittel, wobei das Gewichtsverhältnis Polyionen-Komplex (i) zu Siliconverbindungszusammensetzung (ii) im Bereich von 1 zu 7 bis 1 zu 17 liegt.

Gemäß einer Ausführungsform (19), welche eine der Ausführungsformen (1) bis (18) konkretisiert, betrifft die Erfindung ein Hydrophobierungsmittel, weiterhin umfassend eine Trägermittelzusammensetzung (iii), wobei die Trägermittelzusammensetzung mindestens ein Trägermittel umfasst, welches ausgewählt ist aus der Gruppe bestehend aus amorphem Siliciumdioxid, amorphem agglomeriertem Siliciumdioxid, Quarzmehl, Kalksteinmehl, Aluminiumoxid, Illit, Eisenoxid und Mischungen von zwei oder mehr dieser Trägermittel, bevorzugt mindestens amorphes agglomeriertes Siliciumdioxid umfasst.

Gemäß einer Ausführungsform (20), welche Ausführungsform (19) konkretisiert, betrifft die Erfindung ein Hydrophobierungsmittel, bestehend zu mindestens 90 Gewichts-% aus Polyionen-Komplex (i), Siliconverbindungszusammensetzung (ii), Trägermittelzusammensetzung (iii) und höchstens 10 Gewichts-% aus Wasser bezogen auf das Gesamtgewicht des Hydrophobierungsmittels.

Gemäß einer Ausführungsform (21), welche Ausführungsform (19) oder (20) konkretisiert, betrifft die Erfindung ein Hydrophobierungsmittel, wobei das Gewichtsverhältnis Polyionen-Komplex (i) zu Siliconverbindungszusammensetzung (ii) im Bereich von 2 : 22 bis 6 : 34 liegt.

Gemäß einer Ausführungsform (22), welche eine der Ausführungsformen (1) bis (21) konkretisiert, betrifft die Erfindung ein Hydrophobierungsmittel, weiterhin umfassend
(iv) optional eine Tensidzusammensetzung umfassend ein oder mehrere Tenside, wobei das/die Tensid(e) ausgewählt ist/sind aus der Gruppe bestehend aus Capronsäure-(polyethylenglykol)-ester, Caprylsäure-(polyethylenglykol)-ester, Caprinsäure-(polyethylenglykol)-ester, Undecylensäure-(polyethylenglykol-monomethylether)-ester, Undecylensäure-(polyethylenglykol)-ester, Laurinsäure-(polyethylenglykol)-ester, Myristinsäure-(polyethylenglykol)-ester, Palmitinsäure-(polyethylenglykol)-ester, Stearinsäure-(polyethylenglykol)-ester, Ölsäure-(polyethylenglykol-monomethylether)-ester, Ricinolsäure-(polyethylenglykol)-ester, Elaidinsäure-(polyethylenglykol)-ester, Linolsäure-(polyethylenglykol)-ester, Linolensäure-(polyethylenglykol)-ester, Erucasäure-(polyethylenglykol)-ester, Palmitin-/Stearinsäurediethanol-*block*-(polypropylenglykol)-amid und Mischungen von zwei oder mehr dieser Tenside;
(v) optional eine UV-Farbstoffzusammensetzung, umfassend einen oder mehrere UV-Farbstoffe, wobei der/die UV-Farbstoff(e) ausgewählt ist/sind aus der Gruppe bestehend aus 2,2'-(2,5-thiophenediyl)-bis-(5-tert.-butyl-1,3-benzoxazol), (Dinatrium-4,4'-bis-(2-sulfostyryl)-biphenyl), Fluorescein, 2,7-Dichlorfluorescein, Rhodamin B und Mischungen von zwei oder mehr dieser Farbstoffe.

Gemäß einer Ausführungsform (23), welche Ausführungsform (22) konkretisiert, betrifft die Erfindung ein Hydrophobierungsmittel, bestehend zu mindestens 90 Gewichts-% aus Polyionen-Komplex (i), Siliconverbindungszusammensetzung (ii), Trägermittelzusammensetzung (iii) und höchstens 10 Gewichts-% aus Wasser sowie (iv) optional Tensidzusammensetzung und (v) optional UV-Farbstoffzusammensetzung bezogen auf das Gesamtgewicht des Hydrophobierungsmittels.

Gemäß einer Ausführungsform (24) betrifft die Erfindung ein Verfahren zur Herstellung eines Hydrophobierungsmittels, umfassend
i) einen Polyionen-Komplex umfassend mindestens ein Polykation (i.1) und mindestens ein Polyanion (i.2), wobei das molare Verhältnis von Polykation : Polyanion im Polyionen-Komplex ≥ 1 ist;
ii) eine Siliconverbindungszusammensetzung;
iii) eine Trägermittelzusammensetzung;
wobei das Verfahren die Schritte umfasst:
a) Bereitstellen eines Polyionen-Komplexes (i) in wässriger Lösung;
b) Bereitstellen einer Trägermittelzusammensetzung (iii);
c) Vermischen von wässriger Lösung des Polyionen-Komplexes (i) gemäß (a) mit Trägermittelzusammensetzung (iii) gemäß (b), bevorzugt unter mechanischer Vermischung (bevorzugt Rühren/Kneten), unter Erhalt einer ersten Mischung;
d) Zugabe einer Siliconverbindungszusammensetzung (ii), die optional eine Tensidzusammensetzung und/oder eine UV-Farbstoffzusammensetzung enthält, zur gemäß (c) erhaltenen ersten Mischung, bevorzugt unter mechanischer Vermischung (bevorzugt Rühren/Kneten), unter Erhalt einer beschichteten pulverförmigen Trägermittelzusammensetzung des Hydrophobierungsmittels.

Eine Ausführungsform (25) betrifft die Verwendung eines Hydrophobierungsmittels gemäß einer der Ausführungsformen (1) bis (23) oder eines Hydrophobierungsmittels erhalten nach dem Verfahren gemäß Ausführungsform (24) zur Hydrophobierung mineralischer Bindemittel und/oder von Zusammensetzungen, welche mineralische Bindemittel enthalten (Bindemittelzusammensetzung) und/oder von Materialien, welche mineralische Bindemittel umfassen.

Eine Ausführungsform (26) betrifft eine Bindemittelzusammensetzung, umfassend ein oder mehrere mineralische(s) Bindemittel, bevorzugt ausgewählt aus der Gruppe bestehend aus Zement, gelöschtem Kalk (Ca(OH)₂) und Gips, und ein Hydrophobierungsmittel gemäß einer der Ausführungsformen (1) bis (23).

Eine Ausführungsform (27) betrifft ein Verfahren zur Hydrophobierung von Materialien, welche mineralische Bindemittel umfassen, umfassend die Schritte
A) Bereitstellen einer Bindemittelzusammensetzung, umfassend ein oder mehrere mineralische(s) Bindemittel, bevorzugt ausgewählt aus der Gruppe bestehend aus Zement, gelöschtem Kalk und Gips;
B) Bereitstellen eines Hydrophobierungsmittels umfassend einen Polyionen-Komplex (i) umfassend mindestens ein Polykation (i.1) und mindestens ein Polyanion (i.2), wobei das molare Verhältnis von Polykation : Polyanion im Polyionen-Komplex ≥ 1 ist; eine Siliconverbindungszusammensetzung (ii); eine Trägermittelzusammensetzung (iii);
C) Vermischen der Bindemittelzusammensetzung gemäß (A) und des Hydrophobierungsmittels gemäß (B); unter Erhalt einer Mischung aus Bindemittelzusammensetzung und Hydrophobierungsmittel;
D) Zugabe von Wasser (w) zur gemäß (C) erhaltenen Mischung aus Bindemittelzusammensetzung (b) und Hydrophobierungsmittel, bevorzugt in einem w/b-Verhältnis im Bereich von 0,1 bis 1,0, weiter bevorzugt in einem w/b-Verhältnis im Bereich von 0,2 bis 0,6, weiter bevorzugt in einem w/b-Verhältnis im Bereich von 0,3 bis 0,5; und Vermischen der Komponenten;
unter Erhalt eines hydrophobierten Materials, welche(s) mineralische Bindemittel umfasst.

Eine Ausführungsform (28) betrifft ein Verfahren zur Hydrophobierung von Materialien, welche mineralische Bindemittel umfassen, wobei Bindemittelzusammensetzung und Hydrophobierungsmittel derart vermischt werden, dass das erhaltene hydrophobierte Material 0,1 bis 10 Gewichts-%, bevorzugt 0,3 bis 5 Gewichts-%, weiter bevorzugt 0,5 bis 2,0 Gewichts-% an Hydrophobierungsmittel enthält, bezogen auf das Gesamtgewicht des hydrophobierten Materials, welche(s) mineralische Bindemittel umfasst.

Nachfolgende Beispiele erläutern die Erfindung näher, ohne sie auf diese zu beschränken.

### Beispiele

**1. Chemikalien**

| Polymere Wirkstoffe: | Details |
|---|---|
| Poly- N,N-dimethyl-3,4-dimethylenpyrrolidiniumchlorid | 20 Gewichts-%ige wässrige Lösung, Molmasse: |
| | 70.000 bis 75.000 g/mol oder |
| | 40 Gewichts-% ige wässrige Lösung, |
| | Molmasse: 25.000 bis 30.000 g/mol |
| Poly-(methacrylsäure-co-methacrylsäurepolyethylen glykolmonomethylether -ester) Natriumsalz | 25,5 Gewichts-%ige wässrige Lösung, |
| | 39,5 Gewichts-%ige wässrige Lösung, anionisches Copolymer |

| Trägermaterialien: | |
|---|---|
| amorphes Siliciumdioxid | agglomeriert, Partikelgröße: 0,15 µm, |
| | spezifische Oberfläche: 18 bis 25 m²/g |
| Kalksteinmehl | Calciumcarbonat (CaCO₃), |
| | Partikelgröße: 0,06 bis 0,15 mm, |
| | spezifische Oberfläche: 1,2 m²/g |
| Illit NX | Mischung umfassend > 50 Gewichts-% Illit und weiterhin Anteile von Quarz, Feldspat, Kaolinit und Illit-Smektit |
| Quarzmehl | M8, spezifische Oberfläche: 1,5 m²/g, |
| | Partikelgröße: 27 bis 75 µm, |

| Siloxane/Silane: | |
|---|---|
| Oligo-(iso-octyl-ethoxysiloxan) | klare farblose Flüssigkeit, |
| | Viskosität: 122 mPa.s |
| iso-Octyl-triethoxysilan | klare farblose Flüssigkeit, |
| | Siedepunkt: 237 °C, Viskosität: 1,9 mPa.s |
| n-Octyl-triethoxysilan | farblose bis gelbliche Flüssigkeit, |
| | Siedepunkt: 265 °C, Viskosität: 2 mPa.s |
| iso-Butyltriethoxysilan | klare farblose Flüssigkeit, |
| | Siedepunkt: 190 °C |

| Spezialtenside: | |
|---|---|
| Ricinolsäure-(polyethylenglykol)-ester | nichtionisches Tensid, farblose bis gelbliche, leicht trübe viskose Flüssigkeit |

| UV-Farbstoffe: | |
|---|---|
| 2,2'-(2,5-thiophenediyl)-bis-(5-tert.-butyl-1,3-benzoxazol) | gelbliches Pulver, |
| | Schmelzpunkt: 196 bis 203 °C |
| (Dinatrium-4,4'-bis-(2-sulfostyryl)-biphenyl) | gelbliches Pulver, |
| | Schmelzpunkt: >300 °C |

| Bindemittel: | |
|---|---|
| Zement 1 | CEM I 52,5 N: Portlandzement der Festigkeitsklasse 52,5 N (DIN EN 197-1), hergestellt durch Vermahlen von Portlandzementklinker unter Zugabe eines Sulfat-Trägers, sowie ggf. von Nebenbestandteilen, Klinkergehalt ≥95 Gewichts-% |
| Zement 2 | CEM I 52,5 R: Portlandzement der Festigkeitsklasse 52,5 R (DIN EN 197-1) Hergestellt mittels Vermahlens von Portlandzementklinker und eines Sulfat-Trägers, sowie ggf. von Nebenbestandteilen, Klinkergehalt ≥95 Gewichts-% |

### 2. Abkürzungen

HM: Hydrophobierungsmittel
WA bez. auf TG [%]: die Beschriftung der y-Achse der Wasseraufnahmebestimmung in den jeweiligen Abbildungen steht für "Wasseraufnahme bezogen auf das Trockengewicht in Prozent"

Alle Mengenangaben (kg in Mol) in den nachfolgenden Beispielen beziehen sich auf Salze von Polyionen bzw. den ihnen zu Grunde liegenden monomeren Wiederholungseinheiten.

### 3. Herstellung der Polyionen-Komplex-Lösungen

### Beispiel 1

In einem Gefäß mit mechanischem Rührer wurden 44,0 kg (54,43 Mol) 20 Gewichts-%ige wässrige Poly-N,N-dimethyl-3,4-dimethylen-pyrrolidiniumchlorid-Lösung und 56,0 kg (27,13 Mol) 25,5 Gewichts-%ige wässrige Poly-(methacrylsäure-co-methacrylsäure-polyethylenglykol-monomethyl-ether-ester) Natriumsalz-Lösung in beliebiger Reihenfolge vorgelegt und danach für ca. 5 Minuten homogen verrührt. Man erhielt 100 kg einer viskosen Polyionen-Komplex-Lösung vom pH-Wert ~ 8 mit einem Wirkstoffgehalt von 21,5 Gewichts-%. Das Polykationen-/Polyanionen-Molverhältnis im Polyionen-Komplex betrug 2 zu 1.

### Beispiel 2

In einem Rührgefäß wurden 45,2 kg (33,9 Mol) 39,5 Gewichts-%ige wässrige Poly-(methacrylsäure-co-methacrylsäure-polyethylenglykol-monomethylether-ester) Natriumsalz-Lösung und 54,8 kg (67,8 Mol) 20 Gewichts-%ige wässrige Poly-N,N-dimethyl-3,4-dimethylen-pyrrolidiniumchlorid-Lösung in beliebiger Reihenfolge vorgelegt und danach für ca. 5 Minuten homogen verrührt.

Man erhielt 100 kg einer viskosen Polyionen-Komplex-Lösung vom pH-Wert ~ 8 mit einem Wirkstoffgehalt von 26,8 Gewichts-%. Das Polykationen-/Polyanionen-Molverhältnis im Polyionen-Komplex betrug 2 zu 1.

### Beispiel 3

In einem Rührgefäß wurden 37,8 kg (93,5 Mol) 40 Gewichts-%ige wässrige Poly-N,N-dimethyl-3,4-dimethylen-pyrrolidiniumchlorid-Lösung und 62,2 kg (46,7 Mol) 39,5 Gewichts-%ige wässrige Poly-(methacrylsäure-co-methacrylsäure-polyethylenglykol-monomethyl-ether-ester) Natriumsalz-Lösung in beliebiger Reihenfolge vorgelegt und danach für ca. 5 Minuten homogen verrührt. Man erhielt 100 kg einer viskosen Polyionen-Komplex-Lösung vom pH-Wert ~ 8 mit einem Wirkstoffgehalt von 37,0 Gewichts-%. Das Polykationen-/Polyanionen-Molverhältnis im Polyionen-Komplex betrug 2 zu 1.

Setzte man jedoch den Rührvorgang der Polyionen-Komplex-Lösung entweder unter vermindertem Druck (< 1013 mbar) oder aber bei Normaldruck (1013 mbar) unter Erwärmung auf 40 ° bis 70 °C und dem ständigen Abführen der dadurch freigesetzten Feuchtigkeit mittels eines über die Flüssigkeitsoberfläche geleiteten Luftstroms fort, wurde durch den Eindampfprozess die immer viskoser werdende Lösung am Ende in ein beigefarbenes Polyionen-Komplex-Pulver umgewandelt.

### Beispiel 4

In einem Rührgefäß wurden 28, 145 kg (69,63 Mol) 40 Gewichts-%ige wässrige Poly-N,N-dimethyl-3,4-dimethylen-pyrrolidiniumchlorid-Lösung und 71,855 kg (34,81 Mol) 25,5 Gewichts-%ige wässrige Poly-(methacrylsäure-co-methacrylsäure-polyethylenglykol-monomethylether-ester) Natriumsalz-Lösung in beliebiger Reihenfolge vorgelegt und danach für ca. 5 Minuten homogen verrührt. Man erhielt 100 kg einer viskosen Polyionen-Komplex-Lösung vom pH-Wert ~ 8 mit einem Wirkstoffgehalt von 27,55 Gewichts-%.

Das Polykationen-/Polyanionen-Molverhältnis im Polyionen-Komplex betrug 2 zu 1.

### 4. Anwendung von Polyionen-Komplex-Zubereitungen gemäß den Zusammensetzungen der Beispiele 1 bis 4

### 4.1 Allgemeine Vorschriften der Beschichtung des Trägermaterials / Herstellung der Pulver

### 4.1.1 Beschichtung von kleinen Mengen im Unterkilogrammmaßstab

46 g von einem Trägermaterial, beispielsweise einem amorphen agglomerierten Siliciumdioxid oder Mischungen desselben mit Kalksteinmehl im Gewichtsverhältnis 1:1 oder mit Quarzmehl im Gewichtsverhältnis 2:1 wurden in ein 400 ml Becherglas vorgelegt; dazu gab man unter langsamen Rühren 10 g des Polyionenkomplexes nach Beispiel 1. Nach beendeter Zugabe wurde noch 30 min nachgerührt.

Danach wurden ebenfalls unter Rühren portionsweise 17 g einer Mischung bestehend aus einem Oligo-(iso-/n-octylalkoxysiloxan) (8 g) und einem Alkyltrialkoxysilan (8 g) oder einer Komponente davon allein, dann 1 g eines Tensids [Ricinolsäure-(polyethylenglykol)-ester] als Hilfsstoff sowie einem UV-Farbstoff [beispielsweise 2,2'-(2,5-thiophenediyl)-bis-(5-tert.-butyl-1,3-benzoxazol)] zugegeben. Nach beendeter Zugabe wurde ebenfalls noch 1 Stunde nachgerührt. Das erhaltende Produkt wurde auf seine Benetzbarkeit mit Wasser überprüft.

Das beschichtete Material konnte dann in den weiterführenden Untersuchungen eingesetzt und charakterisiert werden.

### 4.1.2 Beschichtung von Mengen im Kilogrammmaßstab

1380 g von einem Trägermaterial, beispielsweise einem amorphen agglomerierten Siliciumdioxid oder Mischungen desselben mit Kalksteinmehl im Gewichtsverhältnis 1:1 oder mit Quarzmehl im Gewichtsverhältnis 2:1, wurden in einem 10 l Rührgefäß vorgelegt; dazu gab man unter langsamen Rühren 300 g des Polyionenkomplexes nach Beispiel 1. Nach beendeter Zugabe wurden noch 30 min nachgerührt.

Danach wurden ebenfalls unter Rühren portionsweise 510,5 g einer Mischung bestehend aus einem Oligo-(iso-/n-octylalkoxysiloxan) (240 g) und einem Alkyltrialkoxysilan (240 g) oder einer Komponente davon allein, dann 30 g eines Tensids [(Ricinolsäure-(polyethylenglykol)-ester] als Hilfsstoff sowie einem UV-Farbstoff [0,5 g beispielsweise 2,2'-(2,5-thiophenediyl)-bis-(5-tert.-butyl-1,3-benzoxazol)] zugegeben. Nach der beendeten Zugabe wurde ebenfalls noch 1 Stunde nachgerührt. Das erhaltende Produkt wurde auf seine Benetzbarkeit mit Wasser überprüft. Das beschichtete Material konnte dann in den weiterführenden Untersuchungen eingesetzt und charakterisiert werden.

### 4.1.3 Beschichtung im 10 kg - Maßstab

6,9 kg von einem Trägermaterial, beispielsweise einem amorphen agglomerierten Siliciumdioxid oder Mischungen desselben mit Kalksteinmehl im Gewichtsverhältnis 1:1 oder mit Quarzmehl im Gewichtsverhältnis 2: 1 wurden in einem 30 l Knetgefäß vorgelegt; dazu gab man unter Kneten 1,5 kg des Polyionenkomplexes nach Beispiel 1. Nach beendeter Zugabe wurde noch für 40 Minuten nachgeknetet.

Danach wurden ebenfalls unter Kneten portionsweise 2,553 kg einer Mischung bestehend aus einem Oligo-(iso-/n-octylalkoxysiloxan) (1,2 kg) und einem Alkyltrialkoxysilan (1,2 kg) oder einer Komponente davon allein, dann 150 g eines Tensids [Ricinolsäure-(polyethylenglykol)-ester] als Hilfsstoff sowie einem UV-Farbstoff [2,5 g 2,2'-(2,5-thiophenediyl)-bis-(5-tert.-butyl-1,3-benzoxazol)] zugegeben. Nach der beendeten Zugabe wurde ebenfalls noch 1,2 Stunden nachgeknetet. Das erhaltende Produkt wurde auf seine Benetzbarkeit mit Wasser überprüft. Das beschichtete Material konnte dann in den weiterführenden Untersuchungen eingesetzt und charakterisiert werden.

### 4.1.4 Beschichtung im 100 kg - Maßstab

69 kg von einem Trägermaterial, beispielsweise einem amorphen agglomerierten Siliciumdioxid oder Mischungen desselben mit Kalksteinmehl im Gewichtsverhältnis 1 : 1 oder mit Quarzmehl im Gewichtsverhältnis 2 : 1 wurden in einem 300 l Rührgefäß vorgelegt; dazu gab man unter langsamen Rühren 12 kg des Polyionenkomplexes nach Beispiel 2. Nach beendeter Zugabe wurde noch Minuten nachgerührt, wobei die Nachrührzeit im Bereich von 5 bis 30 Minuten lag. Danach wurden ebenfalls unter Rühren portionsweise 25,525 kg einer Mischung bestehend aus einem Oligo-(iso-/n-octylalkoxysiloxan) (12 kg) und einem Alkyltrialkoxysilan (12 kg) oder einer Komponente davon allein, dann 1,5 kg eines Tensids [Ricinolsäure-(polyethylenglykol)-ester] als Hilfsstoff sowie einem UV-Farbstoff [25 g 2,2'-(2,5-thiophenediyl)-bis-(5-tert.-butyl-1,3-benzoxazol)] zugegeben. Nach der beendeten Zugabe wurde ebenfalls noch für 5 bis 60 Minuten nachgerührt. Die Nachrührzeiten nach Zugabe des Polyionenkomplexes bzw. nach Zugabe des Siloxans/Silans wurden in Abhängigkeit vom eingesetzten Trägermaterial variiert, so waren bei amorphem agglomerierten Siliciumdioxid relativ kurze Nachrührzeiten von 5 bis 10 Minuten bei beiden Schritten ausreichend, wohingegen für andere Trägermaterialien, wie Kalksteinmehl oder Quarzmehl, längere Nachrührzeiten von bis zu 30 Minuten bzw. bis zu 60 Minuten günstiger waren, um eine vollständige Beschichtung zu erzielen. Das erhaltende Produkt wurde auf seine Benetzbarkeit mit Wasser überprüft. Das beschichtete Material konnte dann in den weiterführenden Untersuchungen eingesetzt und charakterisiert werden.

### 4.2 Herstellung der Pulver

Die folgenden Pulver wurden gemäß Vorschrift 1 aus 4.1 hergestellt:
Pulver 1
   46,0 g amorphes agglomeriertes Siliciumdioxid
   10,0 g Polyionen-Komplex nach Beispiel 1
   16,0 g n-Octyl-triethoxysilan
      1,0 g Ricinolsäure-(polyethylenglykol)-ester
Pulver 2
   46,0 g amorphes agglomeriertes Siliciumdioxid
   10,0 g Polyionen-Komplex nach Beispiel 1
   16,0 g iso-Octyl-triethoxysilan
      1,0 g Ricinolsäure-(polyethylenglykol)-ester
Pulver 3
   46,0 g amorphes agglomeriertes Siliciumdioxid
   10,0 g Polyionen-Komplex nach Beispiel 1
   16,0 g Oligo-(iso-octyl-ethoxysiloxan)
   1,0 g Ricinolsäure-(polyethylenglykol)-ester
Pulver 4
   46,0 g amorphes agglomeriertes Siliciumdioxid
   10,0 g Polyionen-Komplex nach Beispiel 1
   20,0 g n-Octyl-triethoxysilan
      1,0 g Ricinolsäure-(polyethylenglykol)-ester
Pulver 5
   46,0 g amorphes agglomeriertes Siliciumdioxid
   10,0 g Polyionen-Komplex nach Beispiel 1
   32,0 g n-Octyl-triethoxysilan
      1,0 g Ricinolsäure-(polyethylenglykol)-ester
Pulver 6
   46,0 g Illit NX
   10,0 g Polyionen-Komplex nach Beispiel 1
   16,0 g Oligo-(iso-octyl-ethoxysiloxan)
      1,0 g Ricinolsäure-(polyethylenglykol)-ester
Pulver 7
   46,0 g Illit NX
   10,0 g Polyionen-Komplex nach Beispiel 1
   16,0 g n-Octyl-triethoxysilan
      1,0 g Ricinolsäure-(polyethylenglykol)-ester
Pulver 8
   46,0 g Illit NX
   10,0 g Polyionen-Komplex nach Beispiel 1
   16,0 g n-Octyl-triethoxysilan
      1,0 g Ricinolsäure-(polyethylenglykol)-ester
Pulver 9
   46,0 g Quarzmehl
   10,0 g Polyionen-Komplex nach Beispiel 1
      8,0 g n-Octyl-triethoxysilan
      1,0 g Ricinolsäure-(polyethylenglykol)-ester
Pulver 10
   46,0 g Kalksteinmehl
   10,0 g Polyionen-Komplex nach Beispiel 1
      8,0 g n-Octyl-triethoxysilan
      1,0 g Ricinolsäure-(polyethylenglykol)-ester
Pulver 11
   46,0 g amorphes agglomeriertes Siliciumdioxid
   10,0 g Polyionen-Komplex nach Beispiel 1
      8,0 g Oligo-(iso-octyl-ethoxysiloxan)
      8,0 g n-Octyl-triethoxysilan
      1,0 g Ricinolsäure-(polyethylenglykol)-ester
Pulver 12
   46,0 g amorphes agglomeriertes Siliciumdioxid
   7,5 g Polyionen-Komplex nach Beispiel 1
   8,0 g Oligo-(iso-octyl-ethoxysiloxan)
   8,0 g n-Octyl-triethoxysilan
   1,0 g Ricinolsäure-(polyethylenglykol)-ester
Pulver 13
   46,0 g amorphes agglomeriertes Siliciumdioxid
   5,0 g Polyionen-Komplex nach Beispiel 1
   8,0 g Oligo-(iso-octyl-ethoxysiloxan)
   8,0 g n-Octyl-triethoxysilan
   1,0 g Ricinolsäure-(polyethylenglykol)-ester
Pulver 14
   46,0 g amorphes agglomeriertes Siliciumdioxid
   10,0 g Polyionen-Komplex nach Beispiel 1
      8,0 g Oligo-(iso-octyl-ethoxysiloxan)
      8,0 g iso-Butyl-triethoxysilan
      1,0 g Ricinolsäure-(polyethylenglykol)-ester
Pulver 15
   46,0 g amorphes agglomeriertes Siliciumdioxid
   5,0 g Polyionen-Komplex nach Beispiel 1
   8,0 g Oligo-(iso-octyl-ethoxysiloxan)
   8,0 g iso-Butyl-triethoxysilan
   1,0 g Ricinolsäure-(polyethylenglykol)-ester
Pulver 16
   46,0 g Quarzmehl
   10,0 g Polyionen-Komplex nach Beispiel 1
      8,0 g Oligo-(iso-octyl-ethoxysiloxan)
      1,0 g Ricinolsäure-(polyethylenglykol)-ester
Pulver 17
   46,0 g Quarzmehl
   10,0 g Polyionen-Komplex nach Beispiel 1
      4,0 g Oligo-(iso-octyl-ethoxysiloxan)
      4,0 g n-Octyl-triethoxysilan
      1,0 g Ricinolsäure-(polyethylenglykol)-ester
Pulver 18
   46,0 g Quarzmehl
   5,0 g Polyionen-Komplex nach Beispiel 1
   4,0 g Oligo-(iso-octyl-ethoxysiloxan)
   4,0 g n-Octyl-triethoxysilan
   1,0 g Ricinolsäure-(polyethylenglykol)-ester
Pulver 19
   30,0 g amorphes agglomeriertes Siliciumdioxid
   16,0 g Quarzmehl
   10,0 g Polyionen-Komplex nach Beispiel 1
      8,0 g Oligo-(iso-octyl-ethoxysiloxan)
      8,0 g n-Octyl-triethoxysilan
      1,0 g Ricinolsäure-(polyethylenglykol)-ester
Pulver 20
   23,0 g amorphes agglomeriertes Siliciumdioxid
   23,0 g Kalksteinmehl
   10,0 g Polyionen-Komplex nach Beispiel 1
      8,0 g Oligo-(iso-octyl-ethoxysiloxan)
      8,0 g n-Octyl-triethoxysilan
      1,0 g Ricinolsäure-(polyethylenglykol)-ester
Pulver 21
   23,0 g amorphes agglomeriertes Siliciumdioxid
   23,0 g Kalksteinmehl
   10,0 g Polyionen-Komplex nach Beispiel 1
   16,0 g n-Octyl-triethoxysilan
      1,0 g Ricinolsäure-(polyethylenglykol)-ester
Pulver 22
   46,0 g amorphes agglomeriertes Siliciumdioxid
   10,0 g Polyionen-Komplex nach Beispiel 1
   30,0 g Oligo-(iso-octyl-ethoxysiloxan)
      1,0 g Ricinolsäure-(polyethylenglykol)-ester
Pulver 23
   46,0 g amorphes agglomeriertes Siliciumdioxid
   7,8 g Polyionen-Komplex nach Beispiel 4
   8,0 g Oligo-(iso-octyl-ethoxysiloxan)
   8,0 g n-Octyl-triethoxysilan
   1,0 g Ricinolsäure-(polyethylenglykol)-ester
   0,01 g 2,2'-(2,5-thiophenediyl)-bis-(5-tert.-butyl-1,3-benzoxazol)
Pulver 24
   23,0 g amorphes Siliciumdioxid
   23,0 g Kalksteinmehl
      7,8 g Polyionen-Komplex nach Beispiel 4
      8,0 g Oligo-(iso-octyl-ethoxysiloxan)
      8,0 g n-Octyl-triethoxysilan
      1,0 g Ricinolsäure-(polyethylenglykol)-ester
      0,01 g 2,2'-(2,5-thiophenediyl)-bis-(5-tert.-butyl-1,3-benzoxazol)
Pulver 25
   46,0 g amorphes agglomeriertes Siliciumdioxid
   7,5 g Polyionen-Komplex nach Beispiel 1
   8,0 g Oligo-(iso-octyl-ethoxysiloxan)
   8,0 g n-Octyl-triethoxysilan
   1,0 g Ricinolsäure-(polyethylenglykol)-ester
   0,01 g (Dinatrium-4,4'-bis-(2-sulfostyryl)-biphenyl)
Pulver 26
   46,0 g amorphes agglomeriertes Siliciumdioxid
   7,5 g Polyionen-Komplex nach Beispiel 1
   8,0 g Oligo-(iso-octyl-ethoxysiloxan)
   8,0 g n-Octyl-triethoxysilan
   1,0 g Ricinolsäure-(polyethylenglykol)-ester
   0,01 g 2,2'-(2,5-thiophenediyl)-bis-(5-tert.-butyl-1,3-benzoxazol)
Pulver 27
   46,6 g amorphes agglomeriertes Siliciumdioxid
   10,0 g Polyionen-Komplex nach Beispiel 1
      8,0 g Oligo-(iso-octyl-ethoxysiloxan)
      8,0 g iso-Octyl-triethoxysilan
      1,0 g Ricinolsäure-(polyethylenglykol)-ester
Pulver 28
   23,0 g amorphes agglomeriertes Siliciumdioxid
   23,0 g Kalksteinmehl
   10,0 g Polyionen-Komplex nach Beispiel 1
      8,0 g Oligo-(iso-octyl-ethoxysiloxan)
      8,0 g iso-Octyl-triethoxysilan
      1,0 g Ricinolsäure-(polyethylenglykol)-ester
Pulver 29
   46,6 g amorphes agglomeriertes Siliciumdioxid
   10,0 g Polyionen-Komplex nach Beispiel 1
      8,0 g Oligo-(iso-octyl-ethoxysiloxan)
      8,0 g iso-Octyl-triethoxysilan
      1,0 g Ricinolsäure-(polyethylenglykol)-ester
      0,01 g 2,2'-(2,5-thiophenediyl)-bis-(5-tert.-butyl-1,3-benzoxazol)
Pulver 30
   23,0 g amorphes agglomeriertes Siliciumdioxid
   23,0 g Kalksteinmehl
   10,0 g Polyionen-Komplex nach Beispiel 1
      8,0 g Oligo-(iso-octyl-ethoxysiloxan)
      8,0 g iso-Octyl-triethoxysilan
         1,0 g Ricinolsäure-(polyethylenglykol)-ester
      0,01 g 2,2'-(2,5-thiophenediyl)-bis-(5-tert.-butyl-1,3-benzoxazol)
Pulver 31
   23,0 g amorphes agglomeriertes Siliciumdioxid
   23,0 g Kalksteinmehl
   10,0 g Polyionen-Komplex nach Beispiel 1
      8,0 g Oligo-(iso-octyl-ethoxysiloxan)
      8,0 g n-Octyl-triethoxysilan
      1,0 g Ricinolsäure-(polyethylenglykol)-ester
      0,01 g 2,2'-(2,5-thiophenediyl)-bis-(5-tert.-butyl-1,3-benzoxazol)
Pulver 32
   23,0 g amorphes agglomeriertes Siliciumdioxid
   23,0 g Kalksteinmehl
      8,01 g Polyionen-Komplex nach Beispiel 2
      8,0 g Oligo-(iso-octyl-ethoxysiloxan)
      8,0 g n-Octyl-triethoxysilan
      1,0 g Ricinolsäure-(polyethylenglykol)-ester
      0,01 g 2,2'-(2,5-thiophenediyl)-bis-(5-tert.-butyl-1,3-benzoxazol)
Pulver 33
   23,0 g amorphes agglomeriertes Siliciumdioxid
   23,0 g Kalksteinmehl
      5,82 g Polyionen-Komplex nach Beispiel 3
      8,0 g Oligo-(iso-octyl-ethoxysiloxan)
      8,0 g n-Octyl-triethoxysilan
      1,0 g Ricinolsäure-(polyethylenglykol)-ester
      0,01 g 2,2'-(2,5-thiophenediyl)-bis-(5-tert.-butyl-1,3-benzoxazol)

Die beschichteten Materialien (Pulver 1 bis 33) mit den oben beschriebenen Zusammensetzungen gemäß 4.2, die nach der Vorschrift 4.1.1 aus 4.1 hergestellt worden waren, wurden in den nachfolgenden Vorschriften und Versuchen mit entsprechenden Bindemitteln vermischt und deren daraus erhaltenen Produkte wurden dann hinsichtlich ihres hydrophoben Verhaltens untersucht. Dokumentiert und demonstriert wurde dies durch Kontaktwinkelmessungen und der zeitabhängigen kapillaren Wasseraufnahme.

### 4.3 Probenherstellung

Als Bindemittel wurden die beiden Zemente "CEM I 52,5 N" und "CEM I 52,5 R" verwendet. Für Proben mit Pulver 1 ― 10 kam der Zement "CEM I 52,5 N" zum Einsatz, für die Proben mit Pulver 11 - 22 sowie Pulver 25 - 31 der Zement "CEM I 52,5 R".

Zunächst wurden 300 g Bindemittel in den Mörtelbecher eingewogen. Dem Bindemittel wurde die berechnete Menge des jeweiligen HM-Pulvers aus 4.2 zugegeben. Die trockenen Pulver wurden mit einem großen Spatel vorsichtig vorgemischt. Anschließend wurde die Trockenmischung in den Einwegbecher umgefüllt.

Zu der Trockenmischung wurden 120 ml Wasser entsprechend einem w/z-Verhältnis (Wasser/Zement) von 0,4 zugegeben. Die Mischung wurde 3,5 Minuten mit dem Handrührgerät durchgerührt, beginnend auf Stufe 2 mit Erhöhung auf Stufe 4-6. Danach wurde die Mischung in die beiden Petrischalen (in den kleineren Teil) und den Becher verteilt ausgegossen und die Behälter abgedeckt.

### 4.4 Untersuchung der Proben

### 4.4.1 Allgemeines

Eine Probenserie besteht aus einer Referenz, d.h. einer Probe ohne HM-Pulver und den HM-Pulver-haltigen Proben (zwei - drei unterschiedliche Konzentrationen. Vergleiche sollten ausschließlich innerhalb einer Probenserie stattfinden.

### 4.4.2 Bestimmung der kapillaren Wasseraufnahme

Die kapillare Wasseraufnahme wurde an vollständig in Wasser eingetauchten Scheiben, resultierend aus dem Abguss in eine Petrischale, bestimmt. Zur Vorbereitung wurden die gemäß 4.3 hergestellten Prüfkörper frühestens nach sieben Tagen aufgedeckt und ausgeschalt. Die Zementsteinprüfkörper wurden für mindestens vier Tage im Klima (20 ± 2) °C und (65 ± 5) °C konditioniert. Die Scheiben wurden trocken gewogen, ins Wasser gelegt und dann an Tag 1, 3 (4), Tag 7 (8), Tag 14, Tag 21 und Tag 28 zur jeweils gleichen Uhrzeit gewogen. Das Gewicht wurde in eine Tabelle eingetragen und die Gewichtszunahme (kapillare Wasseraufnahme) wurde prozentual zum Trockengewicht berechnet.

### 4.4.3 Kontaktwinkelmessungen

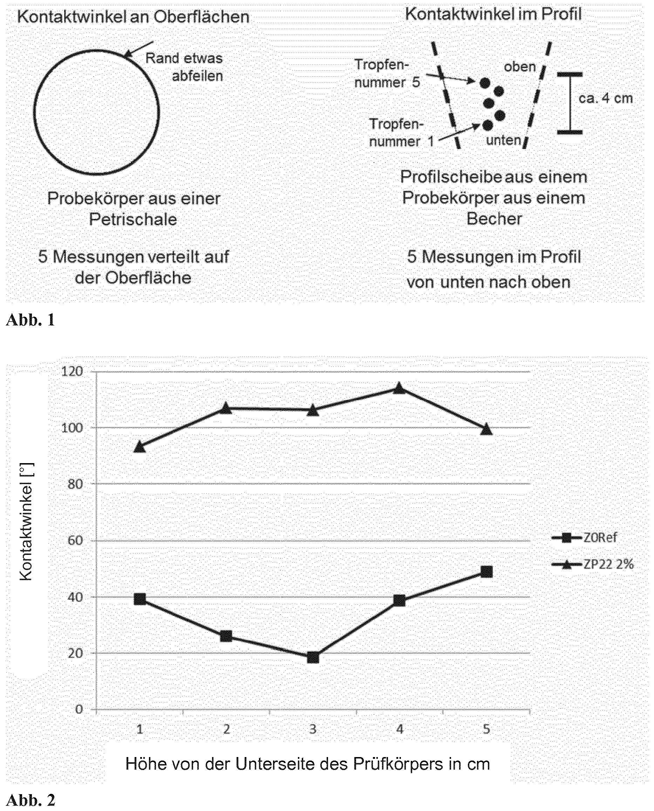

Die Kontaktwinkelmessungen wurden mit destilliertem Wasser durchgeführt und fanden zum Einen an den Oberflächen einer Scheibe aus einer Petrischale, zum Anderen an einem Profil, gesägt aus dem Probekörper aus dem Becher, statt. Eine schematische Darstellung ist in Abb. 1 zu finden.

Für die Messung der Kontaktwinkel an der Oberfläche wurden die Scheiben nach frühestens zwei Tagen aufgedeckt und mindestens 24 Stunden im Klima (20 ± 2) °C und (65 ± 5) °C konditioniert. Die Werte wurden in eine Tabelle eingetragen und der Mittelwert gebildet. Damit von einer hydrophoben Wirkung eines HM gesprochen werden konnte, musste dieser Mittelwert mindestens 90° betragen.

Für die Messung der Kontaktwinkel im Profil wurden die Becherproben nach ca. drei Tagen ausgeschalt und eine ca. 0,5 - 1,5 cm dicke, möglichst planparallele Scheibe geschnitten. An dieser Scheibe wurde von unten zur Oberfläche hin an fünf Stellen der Kontaktwinkel gemessen. Die Werte wurden in eine Tabelle eingetragen. Zum einen wurde aus diesen Werten ein Mittelwert berechnet. Zum anderen wurde die Verteilung des HM im Profil anhand einer graphischen Auftragung verglichen.

### 4.5 Charakterisierung der Proben

### 4.5.1 Serie 1: Pulver 1 ― Pulver 10, Gehalt 1,5 Gewichts-%

In der ersten Serie wurden neben einer Referenz ohne Zusatz (Z0) Proben mit einem Gehalt von 1,5 Gewichts-% des jeweiligen HM-Pulvers (ZPn 1,5 %, n = 1, ..., 10) aus 4.2 hergestellt, wobei sich die Prozentangabe auf die jeweiligen Gewichtsprozente bezog. An diesen Proben wurden wie oben beschrieben, die Wasseraufnahme sowie die Kontaktwinkel von Wasser auf den Oberflächen der Scheiben bestimmt. Die Ergebnisse der kapillaren Wasseraufnahme sind in der nachfolgenden Tabelle 1, die der Kontaktwinkelmessungen in Tabelle. 2 zu finden.

**Tabelle 1**

| Ergebnisse der Wasseraufnahme | | | | | | | |
|---|---|---|---|---|---|---|---|
| | 0 Tage | 1 Tag | 3 Tage | 8 Tage | 14 Tage | 21 Tage | 28 Tage |
| Z0 | 0,00% | 9,23% | 9,46% | 9,60% | 9,74% | 9,73% | 10,00% |
| ZP1 1,5% | 0,00% | 3,76% | 4,75% | 5,75% | 6,18% | 6,48% | 6,91% |
| ZP2 1,5% | 0,00% | 3,11% | 4,01% | 4,70% | 5,22% | 5,37% | 5,74% |
| ZP3 1,5% | 0,00% | 2,84% | 3,80% | 4,80% | 5,01% | 5,23% | 5,70% |
| ZP4 1,5% | 0,00% | 3,63% | 5,24% | 5,99% | 6,28% | 6,64% | 7,28% |
| ZP5 1,5% | 0,00% | 3,63% | 4,59% | 5,44% | 5,88% | 6,27% | 6,68% |
| ZP6 1,5% | 0,00% | 6,54% | 7,26% | 7,73% | 7,94% | 8,09% | 8,51% |
| ZP7 1,5% | 0,00% | 5,32% | 6,40% | 7,27% | 7,57% | 7,89% | 8,42% |
| ZP8 1,5% | 0,00% | 4,30% | 5,28% | 6,28% | 7,13% | 6,89% | 7,40% |
| ZP9 1,5% | 0,00% | 5,29% | 6,65% | 7,94% | 8,34% | 8,76% | 9,42% |
| ZP10 1,5% | 0,00% | 4,26% | 5,49% | 6,77% | 7,29% | 7,84% | 8,44% |

**Tabelle 2**

| Ergebnisse der Kontaktwinkelmessungen | |
|---|---|
| Probe | MW [°] |
| Z0 | 0,0 |
| ZP1 1,5% | 123,8 |
| ZP2 1,5% | 111,5 |
| ZP3 1,5% | 106,6 |
| ZP4 1,5% | 111,5 |

| Probe | MW [°] |
|---|---|
| ZP5 1,5% | 121,3 |
| ZP6 1,5% | 87,6 |
| ZP7 1,5% | 114,9 |
| ZP8 1,5% | 120,3 |
| ZP9 1,5% | 130,7 |
| ZP10 1,5% | 139,4 |

Bei allen mit den Pulvern 1-10 hergestellten Proben war die kapillare Wasseraufnahme geringer als bei der Referenz ohne HM. Am deutlichsten war die Wasseraufnahme bei den mit den Pulvern 2 und 3 hergestellten Proben reduziert. An Tag 1 und 3 war die Wasseraufnahme bei der Probe mit Pulver 6 am höchsten, ab Tag 8 bei der Probe mit Pulver 9.

Mit Ausnahme der Referenz und der Probe mit Pulver 6 erreichten alle Proben an der Oberfläche einen Kontaktwinkel-Mittelwert über 100° und konnten somit als hydrophob bezeichnet werden.

### 4.5.2 Serie 2: Pulver 1 - 5, 9 und 10, Gehalte 0,5 Gewichts-% und 1 Gewichts-%

In der zweiten Serie wurden neben einer Referenz ohne Zusatz (ZP0) Proben mit einem Gehalt von 0,5 Gewichts-% und 1 Gewichts-% der HM-Pulver 1 ― 5 sowie der HM-Pulver 9 und 10 aus 4.2 hergestellt. Die Bezeichnungen folgten dem Muster ZPn 0,5 % und ZPn 1 % für n = 1, 5, 9, 10, wobei der jeweilige %-Wert sich auf die genannten Gewichts-% bezieht. An diesen Proben wurden wie oben beschrieben, die kapillare Wasseraufnahme sowie die Kontaktwinkel auf den Oberflächen der Scheiben bestimmt. Die Ergebnisse der Wasseraufnahmebestimmungen sind in Tabelle 3, die der Kontaktwinkelmessungen in Tabelle 4 zu finden.

**Tabelle 3**

| Ergebnisse der Wasseraufnahme | | | | | | |
|---|---|---|---|---|---|---|
| | 0 Tage | 1 Tag | 7 Tage | 14 Tage | 21 Tage | 28 Tage |
| ZP0 | 0,00% | 6,74% | 7,14% | 7,30% | 7,41% | 7,47% |
| ZP1 0,5% | 0,00% | 4,06% | 5,73% | 6,35% | 6,65% | 6,93% |
| ZP1 1% | 0,00% | 3,01% | 4,68% | 5,47% | 5,78% | 6,05% |
| ZP2 0,5% | 0,00% | 3,75% | 5,10% | 5,65% | 5,88% | 6,09% |
| ZP2 1% | 0,00% | 2,53% | 3,95% | 4,54% | 4,85% | 5,09% |
| ZP3 0,5% | 0,00% | 3,75% | 5,16% | 5,66% | 6,12% | 6,07% |
| ZP3 1% | 0,00% | 2,92% | 4,51% | 5,10% | 5,32% | 5,49% |
| ZP4 0,5% | 0,00% | 3,35% | 5,04% | 5,70% | 6,09% | 6,40% |
| ZP4 1% | 0,00% | 3,01% | 4,79% | 5,52% | 5,88% | 6,16% |
| ZP5 0,5% | 0,00% | 3,89% | 5,71% | 6,33% | 6,70% | 6,92% |
| ZP5 1% | 0,00% | 2,61% | 4,32% | 5,00% | 5,46% | 5,67% |
| ZP9 0,5% | 0,00% | 4,55% | 6,07% | 6,68% | 7,03% | 7,35% |
| ZP9 1% | 0,00% | 3,08% | 4,75% | 5,49% | 5,89% | 6,19% |
| ZP10 0,5% | 0,00% | 3,69% | 5,13% | 5,81% | 6,20% | 6,43% |
| ZP10 1% | 0,00% | 2,80% | 4,45% | 5,13% | 5,55% | 5,80% |

**Tabelle 4**

| Ergebnisse der Kontaktwinkelmessungen | |
|---|---|
| Probe | MW[°] |
| ZP0 | 17,02 |
| ZP1 0,5% | 119,00 |
| ZP1 1% | 136,53 |
| ZP2 0,5% | 113,35 |
| ZP2 1% | 122,69 |
| ZP3 0,5% | 114,14 |
| ZP3 1% | 117,62 |
| ZP4 0,5% | 135,86 |
| ZP4 1% | 135,92 |
| ZP5 0,5% | 139,46 |
| ZP5 1% | 122,92 |
| ZP9 0,5% | 138,31 |
| ZP9 1% | 136,09 |
| ZP10 0,5% | 142,72 |
| ZP10 1% | 137,23 |

Bei allen mit in der Serie 2 hergestellten Proben war die kapillare Wasseraufnahme geringer als bei der Referenz ohne HM. Die Proben mit 1 Gewichts-% Zugabe an HM-Pulvern reduzierten

die Wasseraufnahme stärker als die Proben mit 0,5 Gewichts-% Zugabe. Am deutlichsten wurde die Wasseraufnahme in beiden Fällen durch Pulver 2 und 3 gesenkt, am geringsten durch Pulver 9.

Alle Mittelwerte lagen über 110 °C und somit konnten die Oberflächen der Scheiben als hydrophob bezeichnet werden.

### 4.5.3 Serie 3: Pulver 11-22, Gehalte 1 Gewichts-%, 1,5 Gewichts-% und 2 Gewichts-%

In der dritten Serie wurden neben einer Referenz ohne Zusatz (ZORef) Proben mit einem Gehalt von 1 Gewichts-%, 1,5 Gewichts-% und 2 Gewichts-% Zusatz von HM-Pulver 11- 22 aus 4.2 hergestellt. Die Bezeichnungen folgten dem Muster ZPn 1 %, ZPn 1,5 % und ZPn 2 % für n=11 , 22, wobei der jeweilige %-Wert sich auf die genannten Gewichts-% bezieht. An diesen Proben wurden wie oben beschrieben, die Wasseraufnahme, die Kontaktwinkel auf den Oberflächen der Scheiben und im Profil (s. Abb. 1, rechtes Bild) bestimmt. Die Ergebnisse der Wasseraufnahmebestimmungen sind in Tabelle 5, die der Kontaktwinkelmessungen für einige ausgewählte Pulver mit 2 % in Tabelle 6 und die der Einzelmessungen im Profil für das Pulver 22 in Tabelle 7 zu finden.

**Tabelle 5**

| Ergebnisse der Wasseraufnahme | | | | | | | |
|---|---|---|---|---|---|---|---|
| | 0 Tage | 1 Tag | 3 Tage | 7 Tage | 14 Tage | 21 Tage | 28 Tage |
| ZORef | 0,00% | 5,28% | 5,67% | 5,78% | 6,08% | 6,22% | 6,30% |
| ZP11 1% | 0,00% | 1,98% | 2,89% | 3,24% | 3,81% | 4,07% | 4,33% |
| ZP11 1,5% | 0,00% | 1,82% | 2,81% | 3,30% | 3,71% | 4,07% | 4,29% |
| ZP11 2% | 0,00% | 1,66% | 2,59% | 3,01% | 3,49% | 3,81% | 4,12% |
| ZP12 1% | 0,00% | 2,22% | 3,05% | 3,35% | 3,81% | 4,12% | 4,36% |
| ZP12 1,5% | 0,00% | 1,76% | 2,59% | 2,95% | 3,44% | 3,76% | 3,97% |
| ZP12 2% | 0,00% | 1,74% | 2,63% | 3,08% | 3,52% | 3,83% | 4,13% |
| ZP13 1% | 0,00% | 2,45% | 3,26% | 3,62% | 4,08% | 4,44% | 4,66% |
| ZP13 1,5% | 0,00% | 2,28% | 3,11% | 3,54% | 4,01% | 4,39% | 4,57% |
| ZP13 2% | 0,00% | 1,96% | 2,84% | 3,23% | 3,72% | 4,00% | 4,30% |
| ZP14 1% | 0,00% | 4,65% | 5,04% | 5,24% | 5,52% | 5,70% | 5,95% |
| ZP14 1,5% | 0,00% | 2,17% | 3,04% | 3,49% | 4,01% | 4,32% | 4,56% |
| ZP14 2% | 0,00% | 2,08% | 3,09% | 3,62% | 4,09% | 4,38% | 4,66% |
| ZP15 1% | 0,00% | 4,42% | 4,85% | 5,14% | 5,38% | 5,61% | 5,76% |
| ZP15 1,5% | 0,00% | 3,72% | 4,39% | 4,72% | 5,11% | 5,37% | 5,63% |
| ZP15 2% | 0,00% | 2,58% | 3,51% | 3,95% | 4,44% | 4,75% | 5,08% |
| ZP16 1% | 0,00% | 2,62% | 3,36% | 3,77% | 4,24% | 4,59% | 4,79% |
| ZP16 1,5% | 0,00% | 2,16% | 2,99% | 3,44% | 3,93% | 4,26% | 4,61% |
| ZP16 2% | 0,00% | 1,98% | 2,91% | 3,37% | 4,08% | 4,18% | 4,41% |
| ZP17 1% | 0,00% | 3,56% | 4,27% | 4,71% | 5,28% | 5,48% | 6,04% |
| ZP17 | 0,00% | 2,50% | 3,34% | 3,83% | 4,37% | 4,64% | 4,94% |

| | 0 Tage | 1 Tag | 3 Tage | 7 Tage | 14 Tage | 21 Tage | 28 Tage |
|---|---|---|---|---|---|---|---|
| 1,5% | | | | | | | |
| ZP17 2% | 0,00% | 1,87% | 2,72% | 3,22% | 3,85% | 4,04% | 4,33% |
| ZP18 1% | 0,00% | 2,47% | 3,24% | 3,71% | 4,21% | 4,49% | 4,81% |
| ZP18 1,5% | 0,00% | 2,31% | 3,01% | 3,44% | 3,94% | 4,24% | 4,53% |
| ZP18 2% | 0,00% | 2,06% | 3,36% | 3,73% | 4,34% | 4,71% | 5,04% |
| ZP19 1% | 0,00% | 2,43% | 3,45% | 3,96% | 4,60% | 5,08% | 5,41% |
| ZP19 1,5% | 0,00% | 1,83% | 2,74% | 3,11% | 3,69% | 4,07% | 4,30% |
| ZP19 2% | 0,00% | 2,11% | 3,29% | 3,74% | 4,28% | 4,75% | 5,06% |
| ZP20 1% | 0,00% | 2,11% | 2,98% | 3,46% | 4,07% | 4,36% | 4,55% |
| ZP20 1,5% | 0,00% | 1,80% | 2,70% | 3,07% | 3,72% | 4,02% | 4,24% |
| ZP20 2% | 0,00% | 1,72% | 2,69% | 3,14% | 3,71% | 4,10% | 4,34% |
| ZP21 1% | 0,00% | 2,20% | 3,19% | 3,64% | 4,21% | 4,61% | 4,83% |
| ZP21 1,5% | 0,00% | 1,98% | 2,88% | 3,42% | 3,86% | 4,37% | 4,55% |
| ZP21 2% | 0,00% | 1,67% | 2,64% | 3,00% | 3,55% | 3,86% | 4,11% |
| ZP22 1% | 0,00% | 2,15% | 3,03% | 3,41% | 3,87% | 4,26% | 4,47% |
| ZP22 1,5% | 0,00% | 2,09% | 3,03% | 3,37% | 3,98% | 4,22% | 4,48% |
| ZP22 2% | 0,00% | 1,75% | 2,51% | 2,78% | 3,17% | 3,83% | 4,06% |

**Tabelle 6**

| Ergebnisse der Kontaktwinkelmessungen für die Pulver 17-19 und 21-22 bei je 2 Gewichts-% | |
|---|---|
| Probe | MW[°] |
| ZORef | 43,44 |
| ZP17 2% | 116,89 |
| ZP18 2% | 106,45 |
| ZP19 2% | 107,23 |
| ZP21 2% | 105,05 |
| ZP22 2% | 103,85 |

**Tabelle 7**

| Ergebnisse der Einzelmessungen im Profil (Pulver 22) | | | | | | |
|---|---|---|---|---|---|---|
| | Höhe von der Unterseite des Prüfkörpers in cm | | | | | |
| Probe | 1 | 2 | 3 | 4 | 5 | MW [°] |
| ZORef | 39,20 | 26,02 | 18,74 | 38,77 | 48,91 | 35,33 |
| ZP22 2% | 93,33 | 106,95 | 106,26 | 114,12 | 99,60 | 105,05 |

Durch die Zugabe der HM-Pulver reduzierte sich die Wasseraufnahme bei allen untersuchten Proben. Tendenziell war die Reduktion der Wasseraufnahme umso größer, je höher der Gehalt des HM-Pulvers war. Bei den Proben mit 1 Gewichts-% Zusatz wurde die Wasseraufnahme durch die Zugabe der Pulver 11 und 12 am stärksten, durch die Zugabe der Pulver 14 und 15 am geringsten reduziert. Bei den Proben mit 1,5 Gewichts-% Zusatz zeigte die Zugabe der Pulver 12 und 20 die beste Reduktion der Wasseraufnahme, die Zugabe von Pulver 15 und 17 die schlechteste. Bei den Proben mit 2 Gewichts-% Zusatz sank durch die Zugabe der Pulver 11 und 22 die Wasseraufnahme am stärksten, durch die Pulver 15 und 18 am geringsten.

Bei den Mittelwerten der Kontaktwinkel im Profil, exemplarisch gezeigt für das Pulver 22 und einen Gehalt von 2 Gewichts-%, ließ der Verlauf der Kurve auf eine weitestgehend gleichmäßige Verteilung des HM-Pulvers über die Höhe des Prüfkörpers schließen (siehe Abb. 2).

### 4.5.4 Serie 4: Pulver 25-31, Gehalte 0,5 Gewichts-% 1 Gewichts-% und 1,5 Gewichts-%

In der vierten Serie wurden neben einer Referenz ohne Zusatz (ZA) Proben mit einem Gehalt von 0,5 Gewichts-%, 1 Gewichts-% und 1,5 Gewichts-% Zusatz der HM-Pulver 26-31 aus 4.2 hergestellt. Die Bezeichnungen folgten dem Muster ZPn 0,5 %, ZPn 1 % und ZPn 1,5 % für n=26, ..., 31, wobei der jeweilige %-Wert sich auf die genannten Gewichts-% bezieht. An diesen Proben wurden wie oben beschrieben, die Wasseraufnahme, die Kontaktwinkel auf den Oberflächen der Scheiben und im Profil bestimmt. Die Ergebnisse der Wasseraufnahmebestimmungen sind in Tabelle 8, die der Kontaktwinkelmessungen in Tabelle 9 zu finden.

**Tabelle 8**

| Ergebnisse der Wasseraufnahmebestimmungen | | | | | | | |
|---|---|---|---|---|---|---|---|
| | 0 Tage | 1 Tag | 4 Tage | 7 Tage | 14 Tage | 21 Tage | 28 Tage |
| ZA | 0,00% | 6,27% | 6,52% | 6,63% | 6,98% | 7,01% | 7,13% |
| ZP26 0,5% | 0,00% | 4,29% | 5,51% | 6,00% | 6,71% | 6,91% | 7,17% |
| ZP26 1% | 0,00% | 3,06% | 4,43% | 5,14% | 6,27% | 6,51% | 6,93% |
| ZP26 1,5% | 0,00% | 2,63% | 3,72% | 4,29% | 5,16% | 5,44% | 5,81% |
| ZP27 0,5% | 0,00% | 3,66% | 4,68% | 5,11% | 5,75% | 5,99% | 6,28% |

| | 0 Tage | 1 Tag | 4 Tage | 7 Tage | 14 Tage | 21 Tage | 28 Tage |
|---|---|---|---|---|---|---|---|
| ZP27 1% | 0,00% | 2,37% | 3,46% | 4,05% | 4,81% | 5,13% | 5,52% |
| ZP27 1,5% | 0,00% | 2,95% | 4,06% | 4,63% | 5,53% | 5,66% | 6,09% |
| ZP28 0,5% | 0,00% | 2,20% | 3,24% | 3,79% | 4,58% | 4,79% | 5,15% |
| ZP28 1% | 0,00% | 1,83% | 2,76% | 3,26% | 4,04% | 4,27% | 4,66% |
| ZP28 1,5% | 0,00% | 1,66% | 2,47% | 2,92% | 3,56% | 3,78% | 4,13% |
| ZP29 0,5% | 0,00% | 2,60% | 3,63% | 4,15% | 5,05% | 5,20% | 5,55% |
| ZP29 1% | 0,00% | 1,97% | 2,91% | 3,34% | 4,18% | 4,26% | 4,58% |
| ZP29 1,5% | 0,00% | 1,81% | 2,75% | 3,16% | 3,75% | 4,02% | 4,38% |
| ZP30 0,5% | 0,00% | 2,48% | 3,50% | 3,97% | 4,69% | 4,99% | 5,41% |
| ZP30 1% | 0,00% | 2,09% | 2,97% | 3,40% | 4,02% | 4,34% | 4,73% |
| ZP30 1,5% | 0,00% | 1,98% | 2,95% | 3,37% | 4,09% | 4,42% | 4,77% |
| ZP31 0,5% | 0,00% | 2,62% | 3,84% | 4,35% | 5,36% | 5,58% | 5,95% |
| ZP31 1% | 0,00% | 2,19% | 3,06% | 3,52% | 4,14% | 4,43% | 4,73% |
| ZP31 1,5% | 0,00% | 2,08% | 3,02% | 3,50% | 4,35% | 4,41% | 4,74% |

**Tabelle 9**

| Ergebnisse der Kontaktwinkelmessungen | |
|---|---|
| Probe | MW[°] |
| ZA | 0,00 |
| ZP26 0,5% | 123,41 |
| ZP26 1% | 121,69 |
| ZP26 1,5% | 113,97 |
| ZP27 0,5% | 90,85 |
| ZP27 1% | 105,22 |
| ZP27 1,5% | 113,62 |
| ZP28 0,5% | 121,30 |
| ZP28 1% | 118,57 |
| ZP28 1,5% | 115,54 |
| ZP29 0,5% | 118,61 |
| ZP29 1% | 115,77 |
| ZP29 1,5% | 112,69 |
| ZP30 0,5% | 120,63 |
| ZP30 1% | 116,90 |
| ZP30 1,5% | 116,22 |
| ZP31 0,5% | 118,57 |
| ZP31 1% | 115,75 |
| ZP31 1,5% | 106,53 |

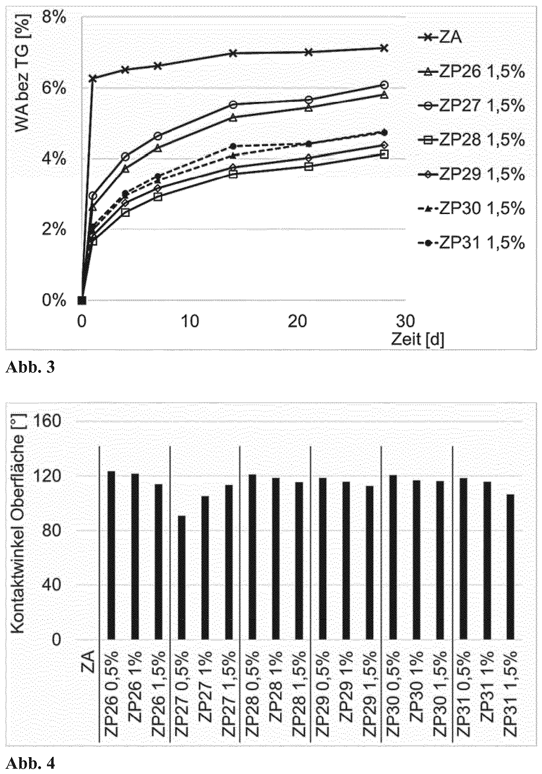

Eine graphische Darstellung der Wasseraufnahme der Proben mit 1,5 Gewichts-% Zusatz aus Probenserie 4 ist in Abb. 3 zu finden. Die Ergebnisse der Kontaktwinkelmessungen auf den Oberflächen aller Proben der Probenserie 4 sind in Abb. 4 zu finden.

Durch die Zugabe der HM-Pulver reduzierte sich die Wasseraufnahme bei allen untersuchten Proben. Tendenziell war die Reduktion der Wasseraufnahme umso größer je höher der Gehalt des HM-Pulvers war. Am höchsten fiel die Reduktion der Wasseraufnahme bei den drei untersuchten Konzentrationen durch die Zugabe von Pulver 28, am niedrigsten durch die Zugabe von Pulver 26 (0,5 Gewichts-%- und 1 Gewichts-%-Zugabe) und Pulver 27 (1,5 Gewichts-%-Zugabe), aus.

Die Mittelwerte der Kontaktwinkel auf den Oberflächen lagen alle über 90 °C, überwiegend sogar über 110 °C. Damit konnten die Oberflächen als hydrophob angesehen wurden.

### 4.5.5 Serie 5: Pulver 23, 24, 32 und 33, Gehalte 0,5 Gewichts-% 1 Gewichts-% und 1,5 Gewichts-%

In der fünften Serie wurden neben einer Referenz ohne Zusatz (ZPR) Proben mit einem Gehalt von 0,5 Gewichts-%, 1 Gewichts-% und 1,5 Gewichts-% Zusatz der HM-Pulver 23, 24, 32 und 33 aus 4.2 hergestellt. Die Bezeichnungen folgten dem Muster ZPn 0,5 %, ZPn 1 % und ZPn 1,5 % für n=23, 24, 32, 33, wobei der jeweilige %-Wert sich auf die genannten Gewichts-% bezieht. An diesen Proben wurden wie oben beschrieben, die Wasseraufnahme und die Kontaktwinkel auf den Oberflächen bestimmt. Die Ergebnisse der Wasseraufnahmebestimmungen sind in Tabelle 10, die der Kontaktwinkelmessungen in Tabelle 11 zu finden.

**Tabelle 10**

| Ergebnisse der Wasseraufnahmebestimmungen | | | | | | |
|---|---|---|---|---|---|---|
| | 0 Tage | 1 Tag | 3 Tage | 7 Tage | 14 Tage | 21 Tage |
| ZPR | 0,00% | 9,63% | 9,89% | 10,03% | 10,22% | 10,27% |
| ZP23 0,5% | 0,00% | 4,20% | 5,36% | 5,83% | 6,48% | 6,93% |
| ZP23 1% | 0,00% | 3,67% | 4,89% | 5,37% | 5,98% | 6,46% |
| ZP23 1,5% | 0,00% | 3,91% | 5,13% | 5,68% | 6,34% | 6,78% |
| ZP24 0,5% | 0,00% | 3,64% | 4,65% | 5,22% | 5,69% | 5,94% |
| ZP24 1% | 0,00% | 2,91% | 3,98% | 4,62% | 5,12% | 5,42% |
| ZP24 1,5% | 0,00% | 2,21% | 3,27% | 3,95% | 4,47% | 4,76% |
| ZP32 0,5% | 0,00% | 3,60% | 4,58% | 5,27% | 5,82% | 6,09% |
| ZP32 1% | 0,00% | 2,81% | 3,75% | 4,39% | 4,86% | 5,14% |
| ZP32 1,5% | 0,00% | 2,18% | 3,15% | 3,87% | 4,43% | 4,73% |
| ZP33 0,5% | 0,00% | 4,00% | 4,93% | 5,49% | 5,95% | 6,20% |
| ZP33 1% | 0,00% | 2,46% | 3,34% | 4,02% | 4,55% | 4,84% |
| ZP33 1,5% | 0,00% | 2,22% | 3,09% | 3,75% | 4,25% | 4,54% |

**Tabelle 11**

| Ergebnisse der Kontaktwinkelmessungen | |
|---|---|
| Probe | MW[°] |
| ZPR | 19,82 |
| ZP23 0,5% | 94,24 |
| ZP23 1% | 93,87 |
| ZP23 1,5% | 102,54 |
| ZP24 0,5% | 101,60 |
| ZP24 1% | 92,97 |
| ZP24 1,5% | 108,79 |
| ZP32 0,5% | 96,00 |
| ZP32 1% | 103,52 |
| ZP32 1,5% | 116,94 |
| ZP33 0,5% | 91,92 |
| ZP33 1% | 92,51 |
| ZP33 1,5% | 112,47 |

Bei allen mit in der Serie 5 hergestellten Proben war die kapillare Wasseraufnahme geringer als bei der Referenz ZPR ohne HM. Tendenziell war die Reduktion der Wasseraufnahme umso größer je höher der Gehalt des HM-Pulvers war.

Bei den Proben mit 0,5 Gewichts-% sowie 1 Gewichts-% und 1,5 Gewichts-% fiel die Reduktion der Wasseraufnahme durch die Zugabe von Pulver 23 am geringsten aus. Die Reduktion der Wasseraufnahme durch die Zugabe von Pulver 24, 32 und 33 mit 0,5 Gewichts-% sowie mit 1,5 Gewichts-% unterscheidet sich kaum. Bei Zugabe von 1 Gewichts-% HM-Pulver wird die Wasseraufnahme durch die Zugabe von Pulver 33 am stärksten verringert.

Die Mittelwerte der Kontaktwinkel auf den Oberflächen lagen alle über 90 °C. Damit konnten die Oberflächen als hydrophob angesehen werden.

### kurze Beschreibung der Abbildungen

- Abb. 1: Schematische Darstellung der Kontaktwinkelmesspunkte bzw. Prinzipskizze zur Bestimmung des Kontaktwinkels von Wasser auf Zementsteinoberflächen (links) sowie in unterschiedlichen Höhen im Probekörper;
- Abb. 2: Graphische Darstellung der Einzelmessungen der Kontaktwinkel im Profil der Probe mit 2 Gewichts-% Zusatz an Pulver 22 der Probenserie 3 / Kontaktwinkel von Wasser in Abhängigkeit von der Profilhöhe des Prüfkörpers;
- Abb. 3: Graphische Darstellung der prozentualen kapillaren Wasseraufnahme bezogen auf das trockene Zementsteingewicht der Proben mit 1,5 Gewichts-% Zusatz der Probenserie 4 über die Zeit, wobei "d" als Einheit der Zeit für "Tag" steht;
- Abb. 4: Mittelwerte der Kontaktwinkel von Wasser auf den Oberflächen der Zementstein-Scheiben der Probenserie 4 in Abhängigkeit vom verwendeten Pulver und der Dosierung.

### Angeführte Literatur

- ACI Materials Journal, 115, 5, 685-694 (2018)
- Ber. dtsch. chem. Ges. 70, 887 (1937)
- Helv. Chim. Acta 36, 1671 - 1680 (1953)
- "Encyclopedia of Polymer Science and Technology", Band 10, S. 765 - 780, (1969) - Verlag John Wiley & Sons Inc.
- DE 23 33 207 C3 (1972)
- DE 699 20 391 T2 (2006)
- EP 0796 826 A1 (1996)
- DE 197 47 794 A1 (1997)
- EP 1 289 905 B1 (2001)
- DE 102 20 659 A1 (2002)
- DE 10 2006 046 368 A1
- WO 2007/009935 A2
- DE 10 2008 041 920 A1
- DE 10 2009 022 628 A1
- DE 10 2009 028 640 A1
- DE 10 2010 003 868 A1
- DE 10 2010 003 870 A1
- DE 10 2010 038 768 A1
- DE 10 2010 038 774 A1
- EP 2415 797 A1 (2011)
- WO 2011/121 027 A1
- WO 2013/ 044980 A1
- KR 10-2013-0119586 A

## Patentansprüche

1. Hydrophobierungsmittel für mineralische Materialen, umfassend:
i) einen Polyionen-Komplex umfassend mindestens ein Polykation (i.1) und mindestens ein Polyanion (i.2), wobei das molare Verhältnis von Polykation : Polyanion im Polyionen-Komplex ≥ 1 ist;
ii) eine Siliconverbindungszusammensetzung;
iii) eine Trägermittelzusammensetzung, welche mindestens ein Trägermittel umfasst, welches ausgewählt ist aus der Gruppe bestehend aus amorphem Siliciumdioxid, amorphem agglomeriertem Siliciumdioxid, Quarzmehl, Kalksteinmehl, Aluminiumoxid, Illit, Eisenoxid und Mischungen von zwei oder mehr dieser Trägermittel.

2. Hydrophobierungsmittel gemäß Anspruch 1, wobei die Polykationen (i.1) des Polyionen-Komplexes (i) kationische Polymere oder Copolymere sind, bevorzugt kationische Polymere oder Copolymere, welche mindestens ein quaternäres Ammoniumkation aufweisen und welche weiter bevorzugt ausgewählt sind aus der Gruppe bestehend aus
a) Poly-N,N,N-tri-C₁-C₅-alkylammonioalkylacrylat, wobei das Poly-N,N,N-tri-C₁-C₅-alkylammonioalkylacrylat bevorzugt ausgewählt ist aus der Gruppe bestehend aus Poly-N,N,N-[3-(trimethylammonio)ethyl]acrylat, Poly-N,N,N-[3-(trimethylammonio)-propyl]acrylat, Poly-N,N,N-[3-(trimethylammonio)butyl]acrylat, Poly-N,N,N-[3-(methyldiethylammonio)propyl]acrylat und Mischungen von zwei oder mehr dieser Poly-N,N,N-tri-C₁-C₅-alkylammonioalkylacrylate;
b) Poly-N,N,N-tri-C₁-C₅-alkylammonioalkylmethacrylat, wobei das Poly-N,N,N-tri-C₁-C₅-alkylammonioalkylmethacrylat bevorzugt ausgewählt ist aus der Gruppe bestehend aus Poly-N,N,N-[3-(trimethylammonio)ethyl]methacrylat, Poly-N,N,N-[3-(trimethylammonio)propyl]methacrylat, Poly-N,N,N-[3-(trimethylammonio)butyl]methacrylat, Poly-N,N,N-[3-(methyldiethylammonio)propyl]methacrylat und Mischungen von zwei oder mehr dieser Poly-N,N,N-tri-C₁-C₅-alkylammonioalkylmethacrylate;
c) Poly-N,N,N-tri-C₁-C₅-alkylammonioalkylacrylamid, wobei das Poly-N,N,N-tri-C₁-C₅-alkylammonioalkylacrylamid bevorzugt ausgewählt ist aus der Gruppe bestehend aus Poly-N,N,N-[3-(trimethylammonio)ethyl]acrylamid, Poly-N,N,N-[3-(trimethylammonio)propyl]acrylamid, Poly-N,N,N-[3-(trimethylammonio)butyl]acrylamid, Poly-N,N,N-[3-(methyldiethylammonio)propyl]acrylamid und Mischungen von zwei oder mehr dieser Poly-N,N,N-tri-C₁-C₅-alkylammonioalkylacrylamide;
d) Poly-N,N,N-tri-C₁-C₅-alkylammonioalkylmethacrylamid, wobei das Poly-N,N,N-tri-C₁-C₅-alkylammonioalkylmethacrylamid bevorzugt ausgewählt ist aus der Gruppe bestehend aus Poly-N,N,N-[3-(trimethylammonio)ethyl]methacrylamid, Poly-N,N,N-[3-(trimethylammonio)propyl]methacrylamid, Poly-N,N,N-[3-(trimethylammonio)butyl]methacrylamid, Poly-N,N,N-[3-(methyldiethylammonio)propyl]methacrylamid und Mischungen von zwei oder mehr dieser Poly-N,N,N-tri-C₁-C₅-alkylammonioalkylmethacrylamide;
e) Poly-N-3-methyl-1-vinylimidazolium;
f) quaternisierter Poly-[bis-(2-chlorethyl)-ether-*alt*-1,3-bis-(3-dimethylamino-propyl)- harnstoff];
g) Poly-(dimethylamin-co-epichlorhydrin-co-ethylendiamin);
h) Poly-dimethyldiallylammonium;
i) Poly-(dimethyldiallylammonium-co-methyldiallylaminhydrochlorid); und
j) Poly-N,N-R₁,R₂-disubstituiertes-3,4-dimethylen-pyrrolidinium, wobei R₁ und R₂ unabhängig voneinander ausgewählt sind aus der Gruppe bestehend aus Wasserstoffatom, C₁ bis C₁₈-Alkylrest und Benzylrest;
wobei die positive Ladung des Stickstoffatoms des quaternären Ammoniumkations durch ein einfach geladenes Anion, bevorzugt ein Anion ausgewählt aus der Gruppe von Halogenidanion, insbesondere Chloridanion, Methosulfatanion, Ethosulfatanion und Mischungen von zwei oder mehr dieser Anionen, kompensiert ist.

3. Hydrophobierungsmittel gemäß Anspruch 1 oder 2, wobei die Polykationen (i.1) des Polyionen-Komplexes (i) Poly-N,N-disubstituierte-3,4-dimethylen-pyrrolidiniumsalze, bevorzugt Chloridsalze, der allgemeinen Formel (I) sind: 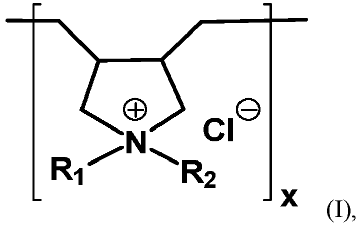 wobei
R₁ und R₂ unabhängig voneinander ausgewählt sind aus der Gruppe bestehend aus Wasserstoffatom, C₁ bis C₁₈-Alkylrest und Benzylrest;
x eine ganze Zahl darstellt (Polymerisationsgrad).

4. Hydrophobierungsmittel gemäß einem der Ansprüche 1 bis 3, wobei die Polyanionen (i.2) des Polyionen-Komplexes (i) copolymere ein- bis mehrbasische Polyanionenester (Polycarboxylatether, PCE) auf der Basis von einfach ungesättigten C₃ bis C₁₀-Mono-, Di- und Tricarbonsäuren, bevorzugt ausgewählt aus der Gruppe bestehend aus Methacrylsäure, Maleinsäure, Methylenbernsteinsäure, Aconitsäure und Mischungen von zwei oder mehr dieser Säuren, sind, die in Form ihrer Alkalisalze oder Ammoniumsalze, bevorzugt als Lithium-, Natrium-, Kalium- oder Ammoniumsalze, weiter bevorzugt als Natriumsalze vorliegen.

5. Hydrophobierungsmittel gemäß einem der Ansprüche 1 bis 4, wobei der Polyionen-Komplex (i) ein molares Verhältnis Polykationen (i.1) : Polyanionen (i.2) von >1, bevorzugt im Bereich von 2:1 bis 4:1 aufweist; wobei der Polyionen-Komplex (i) bevorzugt ein molares Verhältnis Polykationen (i.1) : Polyanionen (i.2) im Bereich von 2:1 bis 4:1 zeigt; wobei weiter bevorzugt die Polykationen (i.1) Poly-N,N-disubstituierte-3,4-dimethylen-pyrrolidiniumsalze und die Polyanionen (i.2) Polyanionenester auf der Basis von einfach ungesättigten C₃ bis C₁₀-Mono-, Di- und Tricarbonsäuren der allgemeinen Formel (Ia) sind, 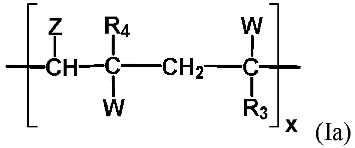 wobei
R₃ ein Wasserstoffatom oder ein C₁ bis C₄-Alkylrest ist, bevorzugt eine Methylgruppe,
R₄ ausgewählt ist aus der Gruppe bestehend aus Wasserstoffatom, C₁ bis C₄-Alkylrest, bevorzugt Methyl, und ―CH₂―Z-Gruppe, wobei
Z jeweils ein Wasserstoffatom oder ein N,N-disubstituierter-3,4-dimethylen-pyrrolidinium-Rest sein kann, in dem die positive Ladung des Stickstoffatoms des quaternären Pyrrolidiniumkations durch ein Carboxylatanion-Rest kompensiert ist, wobei der Pyrrolidiniumsalz-Rest die allgemeine Formel (Ia.1) aufweist, 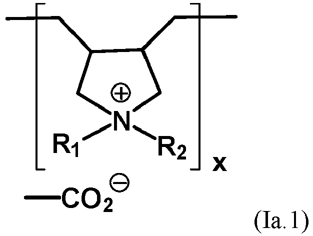 worin
R₁ und R₂ unabhängig voneinander ausgewählt sind aus der Gruppe bestehend aus Wasserstoffatom, C₁ bis C₁₈-Alkylrest und Benzylrest;
x den Polymerisationsgrad bedeutet;
W gleich Z oder ein verdoppelter N,N-disubstituierter-3,4-dimethylen-pyrrolidinium-Rest ist, in dem die positiven Ladungen der Stickstoffatome der quaternären Pyrrolidiniumkationen durch ein Chloridanion und einen Carboxylatanion-Rest kompensiert sind, wobei der Bis-N,N-disubstituierte-3,4-dimethylen-pyrrolidiniumsalz-Rest die allgemeine Formel (Ia.2) aufweist, 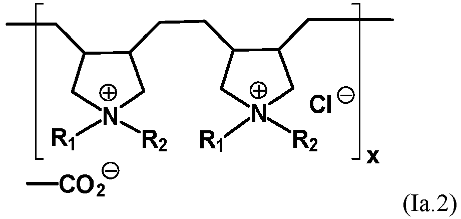 mit den für R₁, R₂ und x oben zur allgemeinen Formel (Ia.1) genannten Bedeutungen, oder ein Polyethylenglykol-monomethylether-ester-Rest der allgemeinen Formel (Ia.3) ist, 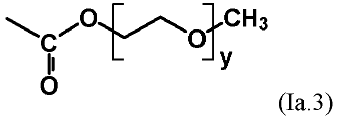 worin
y ganze Zahlen von 1 bis 100 bedeutet.

6. Hydrophobierungsmittel gemäß Anspruch 5, wobei der Polyionen-Komplex (i) die allgemeine Formel (Ib) aufweist, 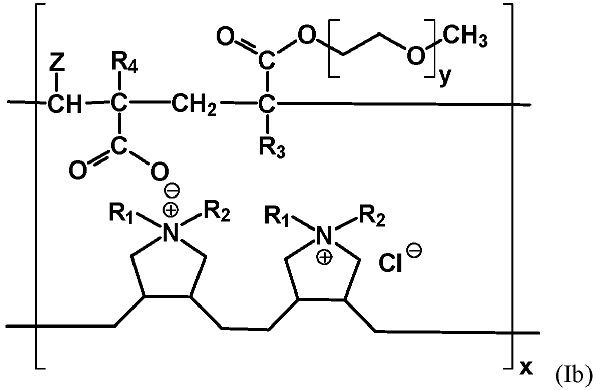 mit den für R₁, R₂, R₃, R₄, Z, x und y oben zu den allgemeinen Formeln (Ia), (Ia.1) und (Ia.3) genannten Bedeutungen.

7. Hydrophobierungsmittel gemäß einem der Ansprüche 1 bis 4, wobei der Polyionen-Komplex (i) ein molares Verhältnis Polykationen (i.1) : Polyanionen (i.2) von 1 aufweist, wobei der Polyionen-Komplex (i) bevorzugt eine copolymere Verbindung aus, bevorzugt alternierend angeordneten, molaren Mengen Polykationen, bevorzugt Poly-N,N-disubstituierte-3,4-dimethylen-pyrrolidiniumsalze, und molaren Mengen Monocarbonsäureestern bezogen auf die monomeren Wiederholungseinheiten aufweist, wobei der Polyionen-Komplex (i) weiter bevorzugt eine copolymere Verbindung aus alternierend angeordneten molaren Mengen Poly-N,N-disubstituierte-3,4-dimethylen-pyrrolidiniumsalze und molaren Mengen Monocarbonsäureestern der allgemeinen Formel (II) aufweist, 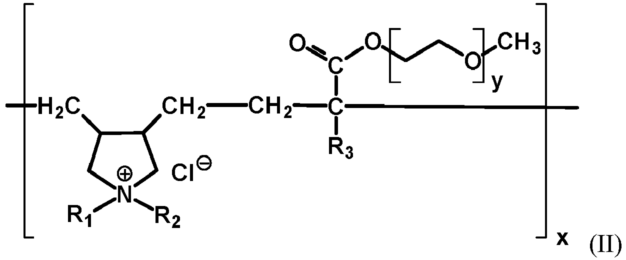 wobei
R₁, R₂ unabhängig voneinander ausgewählt sind aus der Gruppe bestehend aus Wasserstoffatom, C₁ bis C₁₈-Alkylrest und Benzylrest;
R₃ ein Wasserstoffatom oder ein C₁ bis C₄-Alkylrest ist, bevorzugt eine Methylgruppe;
y ganze Zahlen von 1 bis 100 bedeutet;
x den Polymerisationsgrad bedeutet.

8. Hydrophobierungsmittel gemäß einem der Ansprüche 1 bis 7, wobei die Siliconverbindungszusammensetzung (ii) mindestens eine Siliconverbindung (ii.1) umfasst, welche ausgewählt ist aus der Gruppe bestehend aus Monoorgano-C₁-C₂₀-trialkoxysilan, Diorgano-C₁-C₂₀-dialkoxysilan, Poly-(organo-C₁-C₂₀-alkoxysiloxan) und Mischungen von zwei oder mehr dieser Siliconverbindungen; wobei das Monoorgano-C₁-C₂₀-trialkoxysilan bevorzugt ausgewählt ist aus der Gruppe bestehend aus Methyltrimethoxysilan, Methyltriethoxysilan, Ethyltrimethoxysilan, Ethyltriethoxysilan, Propyltrimethoxysilan, Propyltriethoxysilan, Butyltrimethoxysilan, Butyltriethoxysilan, iso-Butyltrimethoxysilan, iso-Butyltriethoxysilan, Pentyltriethoxysilan, Cyclopentyltrimethoxysilan, Octyltriethoxysilan, iso-Octyltriethoxysilan, n-Decyltriethoxysilan, Dodecyltriethoxysilan, Hexadecyltriethoxysilan, Octadecyltrimethoxysilan, Octadeyltriethoxysilan, Phenyltriethoxysilan, und Mischungen von zwei oder mehr dieser Monoorgano-C₁-C₂₀-trialkoxysilane;
wobei das Diorgano-C₁-C₂₀-dialkoxysilan bevorzugt ausgewählt ist aus der Gruppe bestehend aus Dimethyldiethoxysilan, Diethyldiethoxysilan, Diisopropyldimethoxysilan, Diisobutyldimethoxysilan, Di-n-butyldimethoxysilan, Dicyclopentyldimethoxysilan, Di-n-octyldiethoxysilan, Dodecylmethyldiethoxysilan, n-Octadecylmethyldiethoxysilan, Phenylmethyldiethoxysilan, Diphenyldiethoxysilan, und Mischungen von zwei oder mehr dieser Diorgano-C₁-C₂₀-dialkoxysilane; und wobei
das Poly-(organo-C₁-C₂₀-alkoxysiloxan) bevorzugt ein Oligo-(organo-C₁-C₂₀-0,6-1,4-alkoxysiloxan) ist, bevorzugt erhalten oder erhältlich aus einem oder mehreren der genannten Monoorgano-C₁-C₂₀-trialkoxysilan(en)

9. Hydrophobierungsmittel gemäß einem der Ansprüche 1 bis 8, wobei die Trägermittelzusammensetzung (iii) mindestens amorphes agglomeriertes Siliciumdioxid umfasst.

10. Verfahren zur Herstellung eines Hydrophobierungsmittels, umfassend
i) einen Polyionen-Komplex umfassend mindestens ein Polykation (i.1) und mindestens ein Polyanion (i.2), wobei das molare Verhältnis von Polykation : Polyanion im Polyionen-Komplex ≥ 1 ist;
ii) eine Siliconverbindungszusammensetzung;
iii) eine Trägermittelzusammensetzung;
wobei das Verfahren die Schritte umfasst:
a) Bereitstellen eines Polyionen-Komplexes (i) in wässriger Lösung;
b) Bereitstellen einer Trägermittelzusammensetzung (iii);
c) Vermischen von wässriger Lösung des Polyionen-Komplexes (i) gemäß (a) mit Trägermittelzusammensetzung (iii) gemäß (b), bevorzugt unter mechanischer Vermischung, unter Erhalt einer ersten Mischung;
d) Zugabe einer Siliconverbindungszusammensetzung (ii), die optional eine Tensidzusammensetzung und/oder eine UV-Farbstoffzusammensetzung enthält, zur gemäß (c) erhaltenen ersten Mischung, bevorzugt unter mechanischer Vermischung, unter Erhalt einer beschichteten pulverförmigen Trägermittelzusammensetzung des Hydrophobierungsmittels.

11. Verwendung eines Hydrophobierungsmittels gemäß einem der Ansprüche 1 bis 9 oder eines Hydrophobierungsmittels erhalten nach dem Verfahren gemäß Anspruch 10 zur Hydrophobierung mineralischer Bindemittel und/oder von Zusammensetzungen, welche mineralische Bindemittel enthalten.

12. Bindemittelzusammensetzung, umfassend ein oder mehrere mineralische(s) Bindemittel, bevorzugt ausgewählt aus der Gruppe bestehend aus Zement, gelöschtem Kalk (Ca(OH)₂) und Gips, und ein Hydrophobierungsmittel gemäß einem der Ansprüche 1 bis 9.

13. Verfahren zur Hydrophobierung von Materialien, welche mineralische Bindemittel umfassen, umfassend die Schritte
A) Bereitstellen einer Bindemittelzusammensetzung, umfassend ein oder mehrere mineralische(s) Bindemittel, bevorzugt ausgewählt aus der Gruppe bestehend aus Zement, gelöschtem Kalk und Gips;
B) Bereitstellen eines Hydrophobierungsmittels umfassend einen Polyionen-Komplex (i) umfassend mindestens ein Polykation (i.1) und mindestens ein Polyanion (i.2), wobei das molare Verhältnis von Polykation : Polyanion im Polyionen-Komplex ≥ 1 ist; eine Siliconverbindungszusammensetzung (ii); eine Trägermittelzusammensetzung (iii);
C) Vermischen der Bindemittelzusammensetzung gemäß (A) und des Hydrophobierungsmittels gemäß (B); unter Erhalt einer Mischung aus Bindemittelzusammensetzung und Hydrophobierungsmittel;
D) Zugabe von Wasser (w) zur gemäß (C) erhaltenen Mischung aus Bindemittelzusammensetzung (b) und Hydrophobierungsmittel, bevorzugt in einem w/b-Verhältnis im Bereich von 0,1 bis 1,0, weiter bevorzugt in einem w/b-Verhältnis im Bereich von 0,2 bis 0,6, weiter bevorzugt in einem w/b-Verhältnis im Bereich von 0,3 bis 0,5; und Vermischen der Komponenten;
unter Erhalt eines hydrophobierten Materials, welche(s) mineralische Bindemittel umfasst.

## Claims

1. Hydrophobizing agent for mineral materials, comprising:
i) a polyion complex comprising at least one polycation (i.1) and at least one polyanion (i.2), wherein the molar ratio of polycation to polyanion in the polyion complex is ≥ 1;
ii) a silicone compound composition;
iii) a carrier composition comprising at least one carrier selected from the group consisting of amorphous silica, amorphous agglomerated silica, quartz powder, limestone powder, aluminium oxide, illite, iron oxide and mixtures of two or more of these carriers.

2. Hydrophobizing agent according to Claim 1, wherein the polycations (i.1) of the polyion complex (i) are cationic polymers or copolymers, preferably cationic polymers or copolymers having at least one quaternary ammonium cation and which are further preferably selected from the group consisting of
a) poly-N,N,N-tri-C₁-C₅-alkylammonioalkylacrylate, wherein the poly-N,N,N-tri-C₁-C₅-alkylammonio-alkylacrylate is preferably selected from the group consisting of poly-N,N,N-[3-(trimethyl-ammonio)ethyl]acrylate, poly-N,N,N-[3-(trimethylammonio)propyl]acrylate, poly-N,N,N-[3-(trimethylammonio)butyl]acrylate, poly-N,N,N-[3-(methyldiethylammonio)-propyl]acrylate and mixtures of two or more of these poly-N,N,N-tri-C₁-C₅-alkylammonio-alkylacrylates;
b) poly-N,N,N-tri-C₁-C₅-alkylammonio-alkylmethacrylate, wherein the poly-N,N,N-tri-C₁-C₅-alkylammonioalkylmethacrylate is preferably selected from the group consisting of poly-N,N,N-[3-(trimethylammonio)ethyl]-methacrylate, poly-N,N,N-[3-(trimethylammonio)-propyl]methacrylate, poly-N,N,N-[3-(trimethyl-ammonio)butyl]methacrylate, poly-N,N,N-[3-(methyldiethylammonio)propyl]methacrylate and mixtures of two or more of these poly-N,N,N-tri-C₁-C₅-alkylammonioalkyl-methacrylates;
c) poly-N,N,N-tri-C₁-C₅-alkylammonio-alkylacrylamide, wherein the poly-N,N,N-tri-C₁-C₅-alkylammonioalkylacrylamide is preferably selected from the group consisting of poly-N,N,N-[3-(trimethylammonio)ethyl]-acrylamide, poly-N,N,N-[3-(trimethylammonio)-propyl]acrylamide, poly-N,N,N-[3-(trimethyl-ammonio)butyl]acrylamide, poly-N,N,N-[3-(methyldiethylammonio)propyl]acrylamide and mixtures of two or more of these poly-N,N,N-tri-C₁-C₅-alkylammonioalkylacrylamides;
d) poly-N,N,N-tri-C₁-C₅-alkylammonioalkyl-methacrylamide, wherein the poly-N,N,N-tri-C₁-C₅-alkylammonioalkylmethacrylamide is preferably selected from the group consisting of poly-N,N,N-[3-(trimethylammonio)ethyl]-methacrylamide, poly-N,N,N-[3-(trimethyl-ammonio)propyl]methacrylamide, poly-N,N,N-[3-(trimethylammonio)butyl]methacrylamide, poly-N,N,N-[3-(methyldiethylammonio)-propyl]methacrylamide and mixtures of two or more of these poly-N,N,N-tri-C₁-C₅-alkylammonio-alkylmethacrylamides;
e) poly-N-3-methyl-1-vinylimidazolium;
f) quaternized poly-[bis(2-chlorethyl)-ether-*alt-*1,3-bis(3-dimethylaminopropyl)urea];
g) poly(dimethylamine-co-epichlorohydrin-coethylenediamine);
h) poly-dimethyldiallylammonium;
i) poly(dimethyldiallylammonium-comethyldiallylamine hydrochloride); and
j) poly-N,N-R₁,R₂-disubstituted 3,4-dimethylenepyrrolidinium, where R₁ and R₂ are independently selected from the group consisting of hydrogen atom, C₁ to C₁₈ alkyl radical and benzyl radical;
wherein the positive charge of the nitrogen atom of the quaternary ammonium cation is compensated by a singly charged anion, preferably an anion selected from the group of halide anion, in particular chloride anion, methosulfate anion, ethosulfate anion and mixtures of two or more of these anions.

3. Hydrophobizing agent according to Claim 1 or 2, wherein the polycations (i.1) of the polyion complex (i) are poly-N,N-disubstituted 3,4-dimethylenepyrrolidinium salts, preferably chloride salts, of the general formula (I): 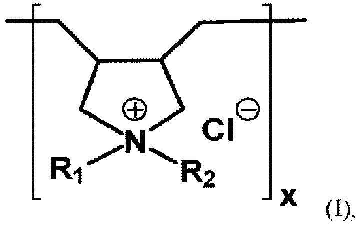 where
R₁ and R₂ are independently selected from the group consisting of hydrogen atom, C₁ to C₁₈ alkyl radical and benzyl radical;
x is an integer (degree of polymerization).

4. Hydrophobizing agent according to any of Claims 1 to 3, wherein the polyanions (i.2) of the polyion complex (i) are copolymeric mono- to polybasic polyanion esters (polycarboxylate ethers, PCE) based on singly unsaturated C₃ to C₁₀ mono-, diand tricarboxylic acids, preferably selected from the group consisting of methacrylic acid, maleic acid, methylenesuccinic acid, aconitic acid and mixtures of two or more of these acids, which are present in the form of the alkali metal or ammonium salts thereof, preferably as lithium, sodium, potassium, or ammonium salts, more preferably as sodium salts.

5. Hydrophobizing agent according to any of Claims 1 to 4, wherein the polyion complex (i) has a molar ratio of polycations (i.1) to polyanions (i.2) of > 1, preferably within a range from 2:1 to 4:1; wherein the polyion complex (i) preferably exhibits a molar ratio of polycations (i.1) to polyanions (i.2) within a range from 2:1 to 4:1; wherein more preferably the polycations (i.1) are poly-N,N-disubstituted 3,4-dimethylenepyrrolidinium salts and the polyanions (i.2) are polyanion esters based on singly unsaturated C₃ to C₁₀ mono-, di- and tricarboxylic acids of the general formula (Ia), 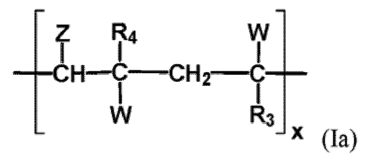 where
R₃ is a hydrogen atom or a C₁ to C₄ alkyl radical, preferably a methyl group,
R₄ is selected from the group consisting of hydrogen atom, C₁ to C₄ alkyl radical, preferably methyl, and -CH₂-Z group, where
Z may in each case be a hydrogen atom or an N,N-disubstituted 3,4-dimethylenepyrrolidinium radical in which the positive charge of the nitrogen atom of the quaternary pyrrolidinium cation is compensated by a carboxylate anion radical, the pyrrolidinium salt radical having the general formula (Ia.1), 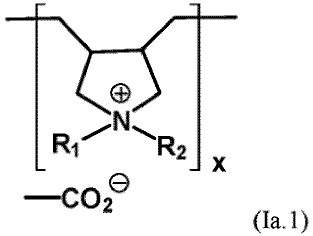 where
R₁ and R₂ are independently selected from the group consisting of hydrogen atom, C₁ to C₁₈ alkyl radical and benzyl radical;
x is the degree of polymerization
W is the same as Z or is a doubled N,N-disubstituted 3,4-dimethylenepyrrolidinium radical in which the positive charges of the nitrogen atoms of the quaternary pyrrolidinium cations are compensated by a chloride anion and a carboxylate anion radical, the bis-N,N-disubstituted 3,4-dimethylenepyrrolidinium salt radical having the general formula (Ia.2), 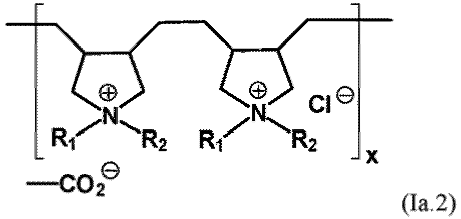 where R₁, R₂ and x are as defined above for general formula (Ia.1), or is a polyethylene glycol monomethyl ether-ester radical of the general formula (Ia.3), 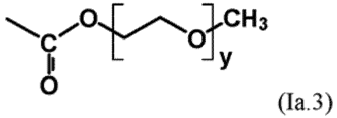 where
y is an integer from 1 to 100.

6. Hydrophobizing agent according to Claim 5, wherein the polyion complex (i) has the general formula (Ib), 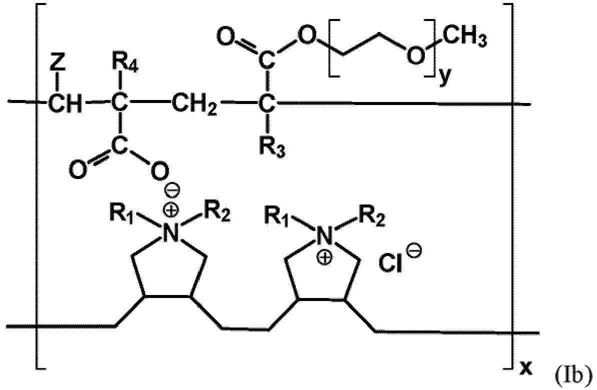 where R₁, R₂, R₃, R₄, Z, x and y are as defined above for general formulas (Ia), (Ia.1) and (Ia.3) .

7. Hydrophobizing agent according to any of Claims 1 to 4, wherein the polyion complex (i) has a molar ratio of polycations (i.1) to polyanions (i.2) of 1, the polyion complex (i) preferably comprising a copolymeric compound composed, preferably in an alternating arrangement, of molar amounts of polycations, preferably poly-N,N-disubstituted 3,4-dimethylenepyrrolidinium salts, and molar amounts of monocarboxylic esters, based on the monomeric repeat units, wherein the polyion complex (i) more preferably comprises a copolymeric compound composed, in an alternating arrangement, of molar amounts of poly-N,N-disubstituted 3,4-dimethylenepyrrolidinium salts and molar amounts of monocarboxylic esters of the general formula (II), 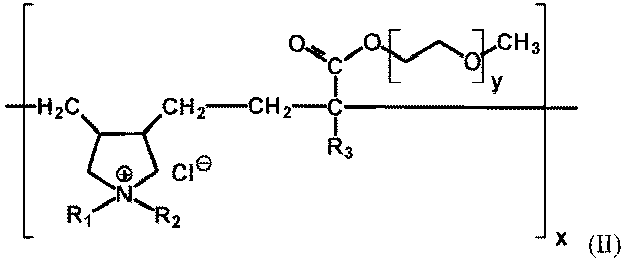 where
R₁, R₂ are independently selected from the group consisting of hydrogen atom, C₁ to C₁₈ alkyl radical and benzyl radical;
R₃ is a hydrogen atom or a C₁ to C₄ alkyl radical, preferably a methyl group;
y is an integer from 1 to 100;
x is the degree of polymerization.

8. Hydrophobizing agent according to any of Claims 1 to 7, wherein the silicone compound composition (ii) comprises at least one silicone compound (ii.1) selected from the group consisting of monoorgano-C₁-C₂₀-trialkoxysilane, diorgano-C₁-C₂₀-dialkoxysilane, poly(organo-C₁-C₂₀-alkoxysiloxane) and mixtures of two or more of these silicone compounds; wherein the monoorgano-C₁-C₂₀-trialkoxysilane is preferably selected from the group consisting of methyltrimethoxysilane, methyltriethoxysilane, ethyltrimethoxysilane, ethyltriethoxysilane, propyltrimethoxysilane, propyltriethoxysilane, butyltrimethoxysilane, butyltriethoxysilane, isobutyltrimethoxysilane, isobutyltriethoxysilane, pentyltriethoxysilane, cyclopentyltrimethoxysilane, octyltriethoxysilane, isooctyltriethoxysilane, n-decyltriethoxysilane, dodecyltriethoxysilane, hexadecyltriethoxysilane, octadecyltrimethoxysilane, octadecyltriethoxy-silane, phenyltriethoxysilane, and mixtures of two or more of these monoorgano-C₁-C₂₀-trialkoxysilanes; wherein the diorgano-C₁-C₂₀-dialkoxysilane is preferably selected from the group consisting of dimethyldiethoxysilane, diethyldiethoxysilane, diisopropyldimethoxysilane, diiso-butyldimethoxysilane, di-n-butyldimethoxysilane, dicyclopentyldimethoxysilane, di-n-octyl-diethoxysilane, dodecylmethyldiethoxysilane, n-octadecylmethyldiethoxysilane, phenylmethyl-diethoxysilane, diphenyldiethoxysilane, and mixtures of two or more of these diorgano-C₁-C₂₀-dialkoxysilanes; and wherein the poly(organo-C₁-C₂₀-alkoxysiloxane) is preferably an oligo-(organo-C₁-C₂₀-0.6-1.4-alkoxysiloxane), preferably obtained or obtainable from one or more of the recited monoorgano-C₁-C₂₀-trialkoxysilanes.

9. Hydrophobizing agent according to any of Claims 1 to 8, wherein the carrier composition (iii) comprises at least amorphous agglomerated silica.

10. Process for preparing a hydrophobizing agent, comprising
i) a polyion complex comprising at least one polycation (i.1) and at least one polyanion (i.2), wherein the molar ratio of polycation to polyanion in the polyion complex is ≥ 1;
ii) a silicone compound composition;
iii) a carrier composition;
wherein the process comprises the steps of:
a) providing a polyion complex (i) in aqueous solution;
b) providing a carrier composition (iii);
c) mixing the aqueous solution of the polyion complex (i) according to (a) with carrier composition (iii) according to (b), preferably with mechanical mixing, to obtain a first mixture;
d) adding a silicone compound composition (ii), which optionally comprises a surfactant composition and/or a UV dye composition, to the first mixture obtained according to (c), preferably with mechanical mixing, to obtain a coated pulverulent carrier composition of the hydrophobizing agent.

11. Use of a hydrophobizing agent according to any of Claims 1 to 9 or of a hydrophobizing agent obtained by the process according to Claim 10 for hydrophobizing of mineral binders and/or of compositions comprising mineral binders.

12. Binder composition comprising one or more mineral binders preferably selected from the group consisting of cement, slaked lime (Ca(OH)₂) and gypsum, and a hydrophobizing agent according to any of Claims 1 to 9.

13. Process for the hydrophobizing of materials that comprise mineral binders, comprising the steps of
A) providing a binder composition comprising one or more mineral binders preferably selected from the group consisting of cement, slaked lime and gypsum;
B) providing a hydrophobizing agent comprising a polyion complex (i) comprising at least one polycation (i.1) and at least one polyanion (i.2), wherein the molar ratio of polycation to polyanion in the polyion complex is ≥ 1; a silicone compound composition (ii); a carrier composition (iii);
C) mixing the binder composition according to (A) and the hydrophobizing agent according to (B) to obtain a mixture of binder composition and hydrophobizing agent;
D) adding water (w) to the mixture of binder composition (b) and hydrophobizing agent obtained according to (C), preferably in a w/b ratio within a range from 0.1 to 1.0, more preferably in a w/b ratio within a range from 0.2 to 0.6, more preferably in a w/b ratio within a range from 0.3 to 0.5; and mixing of the components;
to obtain a hydrophobized material comprising mineral binders.

## Revendications

1. Agent d'hydrophobisation pour matériaux minéraux, comprenant :
i) un complexe de polyions comprenant au moins un polycation (i.1) et au moins un polyanion (i.2), le rapport molaire de polycation : polyanion dans le complexe de polyions étant ≥ 1 ;
ii) une composition de composé de silicone ;
iii) une composition de moyen de support qui comprend au moins un moyen de support, qui est choisi dans le groupe constitué par le dioxyde de silicium amorphe, le dioxyde de silicium aggloméré amorphe, la farine de quartz, la farine de calcaire, l'oxyde d'aluminium, l'illite, l'oxyde de fer et des mélanges de deux ou plus de ces moyens de support.

2. Agent d'hydrophobisation selon la revendication 1, les polycations (i.1) du complexe de polyions (i) étant des polymères ou copolymères cationiques, préférablement des polymères ou copolymères cationiques qui présentent au moins un cation ammonium quaternaire et qui sont en outre préférablement choisis dans le groupe constitué par
a) un poly-N,N,N-tri-C₁-C₅-acrylate, le poly-N,N,N-tri-C₁-C₅-alkylammonioalkylacrylate étant préférablement choisi dans le groupe constitué par poly-N,N,N-[3-(triméthylammonio)èthyl]-acrylate, poly-N,N,N-[3-(triméthylammonio)-propyl]acrylate, poly-N,N,N-[3-(triméthyl-ammonio)butyl]acrylate, poly-N,N,N-[3-(méthyl-diéthylammonio)propyl]acrylate et des mélanges de deux ou plus de ces poly-N,N,N-tri-C₁-C₅-alkyl-ammonioalkylacrylates ;
b) un poly-N,N,N-tri-C₁-C₅-alkylammonio-alkylméthacrylate, le poly-N,N,N-tri-C₁-C₅-alkyl-ammonioalkylméthacrylate étant préférablement choisi dans le groupe constitué par poly-N,N,N-[3-(triméthylammonio)èthyl]méthacrylate, poly-N,N,N-[3-(triméthylammonio)propyl]-méthacrylate, poly-N,N,N-[3-(triméthylammonio)-butyl]méthacrylate, poly-N,N,N-[3-(méthyl-diéthylammonio)propyl]méthacrylate et des mélanges de deux ou plus de ces poly-N,N,N-triC₁-C₅-alkylammonioalkylméthacrylates ;
c) un poly-N,N,N-tri-C₁-C₅-alkylammonioalkylacryl-amide, le poly-N,N,N-tri-C₁-C₅-alkylammonio-alkylacrylamide étant préférablement choisi dans le groupe constitué par poly-N,N,N-[3-(triméthyl-ammonio)èthyl]acrylamide, poly-N,N,N-[3-(triméthylammonio)propyl]acrylamide, poly-N,N,N-[3-(triméthylammonio)-butyl]acrylamide, poly-N,N,N-[3-(méthyldiéthyl-ammonio)propyl]acrylamide et des mélanges de deux ou plus de ces poly-N,N,N-tri-C₁-C₅-alkylammonio-alkylacrylamides ;
d) un poly-N,N,N-tri-C₁-C₅-alkylammonio-alkylméthacrylamide, le poly-N,N,N-tri-C₁-C₅-alkylammonioalkylméthacrylamide étant préférablement choisi dans le groupe constitué par poly-N,N,N-[3-(triméthylammonio)èthyl]-méthacrylamide, poly-N,N,N-[3-(triméthyl-ammonio)propyl]méthacrylamide, poly-N,N,N-[3-(triméthylammonio)butyl]méthacrylamide, poly-N,N,N-[3-(méthyldiéthylammonio)propyl]-méthacrylamide et des mélanges de deux ou plus de ces poly-N,N,N-tri-C₁-C₅-alkylammonioalkyl-méthacrylamides ;
e) un poly-N-3-méthyl-1-vinylimidazolium ;
f) une poly-[bis(2-chloroéthyl)-éther-*alt-*1,3-bis(3-diméthylaminopropyl)urée] quaternisée ;
g) une poly(diméthylamine-co-épichlorhydrine-co-éthylènediamine) ;
h) un poly-diméthyldiallylammonium ;
i) un poly(diméthyldiallylammonium-co-chlorhydrate de méthyldiallylamine) ; et
j) un poly-3,4-diméthylène-pyrrolidinium-N,N-disubstitué par R₁,R₂, R₁ et R₂ étant choisis indépendamment l'un de l'autre dans le groupe constitué par un atome d'hydrogène, un radical alkyle en C₁ à C₁₈ et un radical benzyle ;
la charge positive de l'atome d'azote du cation ammonium quaternaire étant compensée par un anion chargé une fois, préférablement un anion choisi dans le groupe d'un anion halogénure, en particulier un anion chlorure, un anion méthosulfate, un anion éthosulfate et des mélanges de deux ou plus de ces anions.

3. Agent d'hydrophobisation selon la revendication 1 ou 2, les polycations (i.1) du complexe de polyions (i) étant des sels de poly-3,4-diméthylène-pyrrolidinium-N,N-disubstitué, de préférence des sels de chlorure, de formule générale (I) : 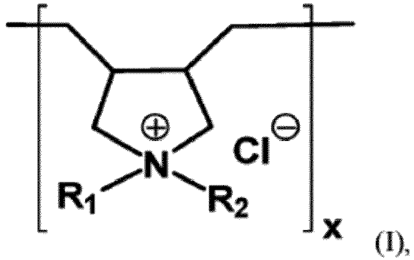
R₁ et R₂ étant choisis indépendamment l'un de l'autre dans le groupe constitué par un atome d'hydrogène, un radical alkyle en C₁ à C₁₈ et un radical benzyle ;
x représentant un nombre entier (degré de polymérisation).

4. Agent d'hydrophobisation selon l'une quelconque des revendications 1 à 3, les polyanions (i.2) du complexe de polyions (i) étant des esters de polyanions copolymériques monobasiques à polybasiques (éthers de polycarboxylate, PCE) à base d'acides monocarboxyliques, dicarboxyliques et tricarboxyliques, monoinsaturés, en C₃ à C₁₀, préférablement choisis dans le groupe constitué par l'acide méthacrylique, l'acide maléique, l'acide méthylènesuccinique, l'acide aconitique et des mélanges de deux ou plus de ces acides, qui sont présents sous forme de leurs sels de métal alcalin ou de sels d'ammonium, préférablement en tant que sels de lithium, sels de sodium, sels de potassium ou sels d'ammonium, plus préférablement en tant que sels de sodium.

5. Agent d'hydrophobisation selon l'une quelconque des revendications 1 à 4, le complexe de polyions (i) présentant un rapport molaire de polycations (i.1) : polyanions (i.2) de > 1, préférablement dans la plage de 2 : 1 à 4 : 1, le complexe de polyions (i) présentant préférablement un rapport molaire de polycations (i.1) : polyanions (i.2) dans la plage de 2 : 1 à 4 : 1 ; plus préférablement les polycations (i.1) étant des sels de poly-3,4-diméthylène-pyrrolidinium-N,N-disubstitué et les polyanions (i.2) étant des esters de polyanions à base d'acides monocarboxyliques, dicarboxyliques et tricarboxyliques, monoinsaturés, en C₃ à C₁₀, de formule générale (Ia), 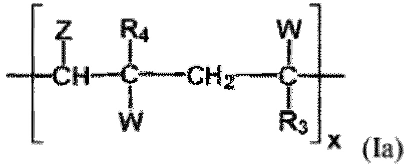
R₃ étant un atome d'hydrogène ou un radical alkyle en C₁ à C₄, préférablement un groupe méthyle,
R₄ étant choisi dans le groupe constitué par un atome d'hydrogène, un radical alkyle en C₁ à C₄, préférablement méthyle, et un groupe -CH₂-Z,
Z pouvant à chaque fois être un atome d'hydrogène ou un radical 3,4-diméthylène-pyrrolidinium-N,N-disubstitué, dans lequel la charge positive de l'atome d'azote du cation pyrrolidinium quaternaire est compensée par un radical d'anion carboxylate, le radical de sel de pyrrolidinium présentant la formule générale (Ia.1), 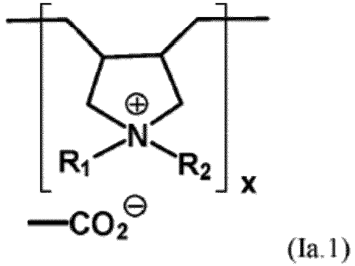 dans laquelle
R₁ et R₂ sont choisis indépendamment l'un de l'autre dans le groupe constitué par un atome d'hydrogène, un radical alkyle en C₁ à C₁₈ et un radical benzyle ;
x signifie le degré de polymérisation ;
W étant égal à Z ou étant un radical 3,4-diméthylène-pyrrolidinium-N,N-disubstitué dédoublé, dans lequel les charges positives des atomes d'azote des cations pyrrolidinium quaternaires sont compensées par un anion chlorure et un radical d'anion carboxylate, le radical de sel de bis-3,4-diméthylène-pyrrolidinium-N,N-disubstitué présentant la formule générale (Ia.2), 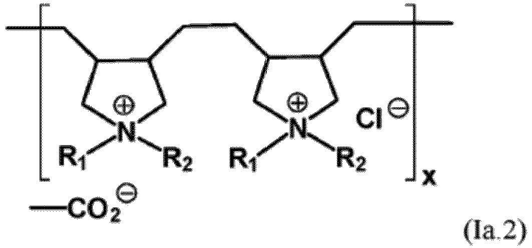 comportant, pour R₁, R₂ et x, les significations mentionnées ci-dessus pour la formule générale (Ia.1), ou étant un radical d'ester de monométhyléther de polyéthylèneglycol de formule générale (Ia.3), 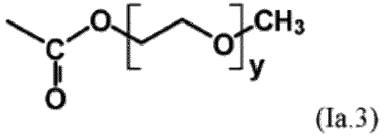 dans laquelle
y signifie des nombres entiers de 1 à 100.

6. Agent d'hydrophobisation selon la revendication 5, le complexe de polyions (i) présentant la formule générale (Ib), 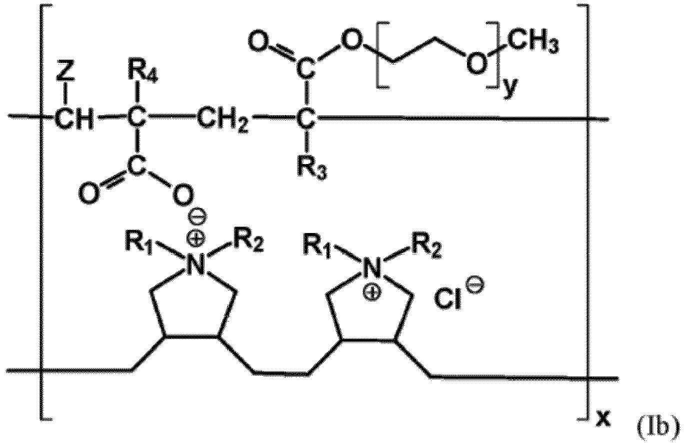 comportant, pour R₁, R₂, R₃, R₄, Z, x et y, les significations mentionnées ci-dessus pour les formules générales (Ia), (Ia.1) et (Ia.3).

7. Agent d'hydrophobisation selon l'une quelconque des revendications 1 à 4, le complexe de polyions (i) présentant un rapport molaire de polycations (i.1) : polyanions (i.2) de 1, le complexe de polyions (i) présentant préférablement un composé copolymérique composé de quantités molaires, préférablement disposées en alternance, de polycations, préférablement de sels de poly-3,4-diméthylènepyrrolidinium-N,N-disubstitué, et de quantités molaires d'esters d'acides monocarboxyliques par rapport aux motifs de répétition monomériques, le complexe de polyions (i) présentant plus préférablement un composé copolymérique composé de quantités molaires, disposées en alternance, de sels de poly-3,4-diméthylène-pyrrolidinium-N,N-disubstitué et de quantités molaires d'esters d'acides monocarboxyliques de formule générale (II), 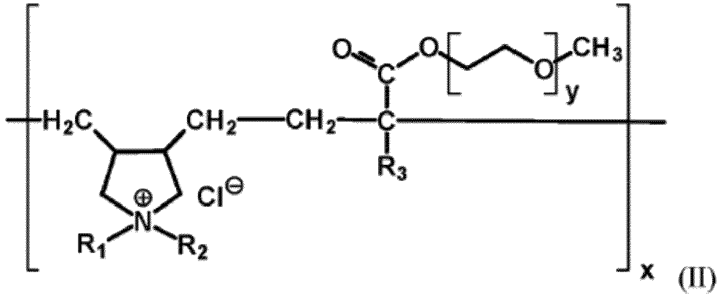
R₁, R₂ étant choisis indépendamment l'un de l'autre dans le groupe constitué par un atome d'hydrogène, un radical alkyle en C₁ à C₁₈ et un radical benzyle ;
R₃ étant un atome d'hydrogène ou un radical alkyle en C₁ à C₄, préférablement un groupe méthyle ;
y signifiant des nombres entiers de 1 à 100 ;
x signifiant le degré de polymérisation.

8. Agent d'hydrophobisation selon l'une quelconque des revendications 1 à 7, la composition de composé de silicone (ii) comprenant au moins un composé (ii.1) de silicone qui est choisi dans le groupe constitué par monoorgano-C₁-C₂₀-trialcoxysilane, diorgano-C₁-C₂₀-dialcoxysilane, poly(organo-C₁-C₂₀-alcoxysiloxane) et des mélanges de deux ou plus de ces composés de silicone ; le monoorgano-C₁-C₂₀-trialcoxysilane étant préférablement choisi dans le groupe constitué par méthyltriméthoxysilane, méthyltriéthoxysilane, éthyltriméthoxysilane, éthyltriéthoxysilane, propyltriméthoxysilane, propyltriéthoxysilane, butyltriméthoxysilane, butyltriéthoxysilane, isobutyltriméthoxysilane, iso-butyltriéthoxysilane, pentyltriéthoxysilane, cyclopentyltriméthoxysilane, octyltriéthoxysilane, iso-octyltriéthoxysilane, n-décyltriéthoxysilane, dodécyltriéthoxysilane, hexadécyltriéthoxysilane, octadécyltriméthoxysilane, octadécyltriéthoxysilane, phényltriéthoxysilane, et des mélanges de deux ou plus de ces monoorgano-C₁-C₂₀trialcoxysilanes ; le diorgano-C₁-C₂₀-dialcoxysilane étant préférablement choisi dans le groupe constitué par diméthyldiéthoxysilane, diéthyldiéthoxysilane, diisopropyldiméthoxysilane, diisobutyldiméthoxysilane, di-n-butyldiméthoxysilane, dicyclopentyldiméthoxysilane, di-n-octyldiéthoxysilane, dodécylméthyldiéthoxysilane, n-octadécylméthyldiéthoxysilane, phénylméthyldiéthoxysilane, diphényldiéthoxysilane, et des mélanges de deux ou plus de ces diorgano-C₁-C₂₀-dialcoxysilanes ; et le poly(organo-C₁-C₂₀-alcoxysiloxane) étant préférablement un oligo-(organo-C₁-C₂₀-0,6-1,4-alcoxysiloxane), préférablement obtenu ou pouvant être obtenu à partir d'un ou de plusieurs des monoorgano-C₁-C₂₀-trialcoxysilanes mentionnés.

9. Agent d'hydrophobisation selon l'une quelconque des revendications 1 à 8, la composition de moyen de support (iii) comprenant au moins du dioxyde de silicium aggloméré amorphe.

10. Procédé pour la préparation d'un agent d'hydrophobisation, comprenant
i) un complexe de polyions comprenant au moins un polycation (i.1) et au moins un polyanion (i.2), le rapport molaire de polycation : polyanion dans le complexe de polyions étant ≥ 1 ;
ii) une composition de composé de silicone ;
iii) une composition de moyen de support ;
le procédé comprenant les étapes de :
a) mise à disposition d'un complexe de polyions (i) en solution aqueuse ;
b) mise à disposition d'une composition de moyen de support (iii) ;
c) mélange de la solution aqueuse du complexe de polyions (i) selon (a) avec la composition de moyen de support (iii) selon (b), préférablement sous brassage mécanique, avec obtention d'un premier mélange ;
d) ajout d'une composition de composé de silicone (ii), qui contient éventuellement une composition de tensioactif et/ou une composition de colorant UV, au premier mélange obtenu selon (c), préférablement sous brassage mécanique, avec obtention d'une composition de moyen de support pulvérulente revêtue, de l'agent d'hydrophobisation.

11. Utilisation d'un agent d'hydrophobisation selon l'une quelconque des revendications 1 à 9 ou d'un agent d'hydrophobisation obtenu par le procédé selon la revendication 10 pour l'hydrophobisation de liants minéraux et/ou de compositions qui contiennent des liants minéraux.

12. Composition de liant, comprenant un ou plusieurs liants minéraux, préférablement choisis dans le groupe constitué par du ciment, de la chaux éteinte (Ca(OH)₂) et du gypse, et un agent d'hydrophobisation selon l'une quelconque des revendications 1 à 9.

13. Procédé pour l'hydrophobisation de matériaux qui comprennent des liants minéraux, comprenant les étapes de
A) mise à disposition d'une composition de liant, comprenant un ou plusieurs liants minéraux, préférablement choisis dans le groupe constitué par du ciment, de la chaux éteinte et du gypse ;
B) mise à disposition d'un agent d'hydrophobisation comprenant un complexe de polyions (i) comprenant au moins un polycation (i.1) et au moins un polyanion (i.2), le rapport molaire de polycation : polyanion dans le complexe de polyions étant ≥ 1 ; une composition de composé de silicone (ii) ; une composition de moyen de support (iii) ;
C) mélange de la composition de liant selon (A) et de l'agent d'hydrophobisation selon (B) ; avec obtention d'un mélange composé de la composition de liant et de l'agent d'hydrophobisation ;
D) ajout d'eau (w) au mélange obtenu selon (C) composé de la composition de liant (b) et de l'agent d'hydrophobisation, préférablement en un rapport w/b dans la plage de 0,1 à 1,0, plus préférablement en un rapport w/b dans la plage de 0,2 à 0,6, plus préférablement en un rapport w/b dans la plage de 0,3 à 0,5 ; et brassage des composants ;
avec obtention d'un matériau hydrophobisé, qui comprend des liants minéraux.
